# EUROPÄISCHE PATENTSCHRIFT

(11) **EP 3 692 342 B1**
(45) Veröffentlichungstag und Bekanntmachung des Hinweises auf die Patenterteilung: **09.02.2022**
(21) Anmeldenummer: 18778913.6
(22) Anmeldetag: 27.09.2018
(51) Int. Cl.: G01F 1/84, G01N 9/00, G01N 11/16

(54) **MESSWANDLER FÜR EIN VIBRONISCHES MESSSYSTEM SOWIE DAMIT GEBILDETES VIBRONISCHES MESSSYSTEM**
TRANSDUCER FOR A VIBRONIC MEASURING SYSTEM AND ACCORDING VIBRONIC MEASUREMENT SYSTEM
TRANSDUCTEUR POUR UN SYSTÈME DE MESURE VIBRONIQUE ET SON SYSTÈME DE MESURE VIBRONIQUE

(30) Priorität: 05.10.2017 DE 102017123130; 08.02.2018 DE 102018102831
(43) Veröffentlichungstag der Anmeldung: 12.08.2020
(73) Patentinhaber: Endress+Hauser Flowtec AG, 4153 Reinach (CH)
(72) Erfinder: BITTO, Ennio, 4147 Aesch (CH); RIEDER, Alfred, 84032 Landshut (DE); LIN, Yaoying, 85356 Freising (DE); ANKLIN, Martin Josef, 4143 Dornach (CH)
(74) Vertreter: Andres, Angelika Maria
(86) Internationale Anmeldenummer: PCT/EP2018/076280
(87) Internationale Veröffentlichungsnummer: WO 2019/068553

(56) Entgegenhaltungen:
- EP-A1- 1 698 880
- EP-A1- 1 804 048
- EP-B1- 1 698 880
- US-A1- 2009 120 168
- US-A1- 2016 334 316
- US-A1- 2017 205 373

## Beschreibung

Die Erfindung betrifft einen Meßwandler mit einem, insb. in den Verlauf einer Rohrleitung einsetzbaren, Rohr und einer innerhalb von dessen Lumen angeordneten fluidisch-mechanischen Wandlereinheit sowie ein mit einem solchen Meßwandler gebildetes vibronisches Meßsystem.

In der US 2009/120168 A1, der EP-B 564 682, der US-A 44 20 983, der US-A 2016/0187176, der US-A 2016/0334316 oder der WO-A 95/29386 sind jeweils dem Messen und/oder Überwachen wenigstens eines, insb. zeitlich veränderlichen, Strömungsparameters, beispielsweise einer Massendurchflußrate, einer Volumendurchflußrate und/oder einer Strömungsgeschwindigkeit, und/oder wenigstens eines, insb. zeitlich veränderlichen, Stoffparameters, beispielsweise einer Dichte und/oder einer Viskosität, von strömenden Fluiden dienliche vibronische Meßsysteme gezeigt. Jedes der Meßsysteme umfaßt jeweils eine Meß- und Betriebselektronik sowie einen damit gekoppelten Meßwandler.

Jeder der - hier jeweils auch als Meßwandler vom Vibrationstyp ausgebildeten - Meßwandler umfaßt jeweils ein ein von einer Wandung umhülltes Lumen aufweisendes, sich von einem einlaßseitigen ersten Ende bis zu einem auslaßseitigen zweiten Ende erstreckendes Rohr, das dafür eingerichtet ist, von einem fluiden Meßstoff, beispielsweise einem Gas oder einer Flüssigkeit, in einer Strömungsrichtung, nämlich ausgehend vom einlaßseitigen ersten Ende in Richtung des auslaßseitigen zweiten Ende, durchströmt zu werden. Nämliches Rohr ist im besonderen auch dafür vorgesehen, in den Verlauf einer das zu messende Fluid führenden Rohrleitung eingesetzt zu sein. Die Wandung des Rohrs ist typischerweise metallisch und zumindest im Bereich des Verdrängerelements hohlzylindrisch ausgebildet. Desweiteren kann jedes der beiden Enden des Rohrs jeweils auch von einem zu einem an der vorbezeichneten Rohrleitung ggf. vorgesehenen Anschlußflansch kompatiblen Anschlußflansch gefaßt sein. Der jeweilige Meßwandler umfaßt desweiteren jeweils eine fluidisch-mechanische Wandlereinheit, die wenigstens ein im wesentlichen zylindrisches Verdrängerelement sowie wenigstens ein damit mechanisch verbundenes Verbindungselement aufweist, eine elektro-mechanische Erregeranordnung zum Anregen und Aufrechterhalten von erzwungenen mechanischen Schwingungen, insb. nämlich Resonanzschwingungen, der Wandlereinheit sowie eine Sensoranordnung zum Erfassen von mechanischen Schwingungen der Wandlereinheit, nämlich von mechanischen Schwingungen des Verdrängerelements, und zum Generieren von mechanische Schwingungen des Verdrängerelements repräsentierenden Schwingungssignalen. Die Wandlereinheit ist in das jeweilige Rohr eingesetzt und damit mechanische verbunden, derart, daß deren jeweiliges Verdrängerelement innerhalb des Lumens nämlichen Rohrs plaziert und das jeweilige wenigstens eine Verbindungselement jeweils auch mit der Wandung nämlichen Rohrs mechanisch verbunden sind. Bei den in der der EP-B 564 682, US-A 44 20 983 und der WO-A 95/29386 gezeigten Meßwandlern bzw. den damit jeweils gebildeten Meßsystemen sind das jeweilige Verdrängerelement jeweils in Form eines ein - oder beidseitig verschlossenen, koaxial zum Rohr ausgerichteten Hohlzylinders und das jeweilige Verbindungselement in Form einer Hülse oder eines Stabes ausgebildet, während bei dem in der US-A 2016/0334316 gezeigten Meßwandler das Verdrängerelement mittels eines koaxial zum Rohr ausgerichteten vergleichsweise dünnwandigen Hohlzylinders und die Verbindungselementen jeweils mittels gleichermaßen dünnen, flexiblen Halteklammern gebildet sind.

Jede der vorbezeichneten Wandlereinheiten ist jeweils dafür eingerichtet, von sich im Lumen des Rohrs befindendem Fluid kontaktiert, insb. nämlich davon umströmt, und währenddessen vibrieren gelassen zu werden, derart, daß deren jeweiliges Verdrängerelement jeweils zumindest anteilig elastisch verformt wird. Die jeweilige Erregeranordnung wiederum ist eingerichtet, zugeführte elektrische Leistung in mechanische Leistung umzuwandeln und in Umwandlung von elektrischer in mechanische Leistung in Nutz-Schwingungen, nämlich erzwungene mechanische Schwingungen der Wandlereinheit bzw. des damit gebildeten Meßwandlers in einem Antriebs- oder Nutzmode mit einer Nutz-Schwingfrequenz, nämlich einer vorgebbaren - insb. einer momentanen Resonanzfrequenz der Wandlereinheit entsprechenden - Schwingfrequenz anzuregen bzw. aufrechtzuerhalten, wodurch in das kontaktierenden Fluid entsprechende Bewegungskräfte eingeprägt werden, die wiederum einer die Wandlereinheit elastisch verformenden Weise auf nämliche Wandlereinheit rückwirken. Als Nutzmode dient bei den vorbezeichneten Meßwandlern bzw. dem damit gebildeten Meßsystem jeweils ein dem Meßwandler innewohnender natürlicher Schwingungsmode, in dem das Verdrängerelement zumindest anteilig Radialschwingungen (auch Glocken- oder Hoope-Modeschwingungen) um eine jeweilige, jeweils in Strömungsrichtung verlaufende gedachte Radialschwingungsachse der jeweiligen Wandlereinheit ausführt. Die Nutz-Schwingungen wiederum, insb. nämlich die Radialschwingungen des jeweiligen Verdrängerelements im Nutzmode, sind im besonderen geeignet, im durch das Rohr strömendem Fluid von einer Massendurchflußrate nämlichen Fluids abhängige Corioliskräfte zu induzieren. Die Corioliskräfte wiederum bewirken Coriolis-Schwingungen, nämlich den Nutz-Schwingungen überlagerte bzw. damit gekoppelte mechanische Schwingungen des Meßwandlers in einem Coriolismode, in dem das Verdrängerelement zumindest anteilig von dessen Radialschwingungen im Nutzmode abweichende, gleichwohl mit nämlichen Radialschwingungen im Nutzmode gekoppelte bzw. Nutz-Schwingungsfrequenz aufweisende, zusätzliche Radialschwingungen um die in Strömungsrichtung verlaufende gedachte Radialschwingungsachse der Wandlereinheit ausführt, derart, daß im Ergebnis zwischen einlaßseitigen Schwingungen des Verdrängerelemente mit Nutz-Schwingungsfrequenz und auslaßseitigen Schwingungen des Verdrängerelemente mit Nutz-Schwingungsfrequenz eine Phasendifferenz existiert, die von der jeweiligen Massendurchflußrate des Fluids abhängig ist. Die Erregeranordnung kann, wie auch in der US-A 44 20 983, der EP-B 564 682, der US-A 2016/0187176 bzw. der WO-A 95/29386 gezeigt, mittels im Inneren des Verdrängerelements, mithin innerhalb des Rohrs, nämlich in dessen Lumen bzw. mittels außerhalb des Rohrs, gleichwohl in der Nähe des Verdrängerelements angeordneten, beispielsweise piezoelektrischen, elektromagnetischen oder elektrodynamischen, Schwingungserregern oder wie in der US-A 2016/0334316 vorgeschlagen mittels außen am Verdrängerelement, gleichwohl ebenfalls innerhalb des Rohrs plazierten elektromagnetische Schwingungserreger gebildet sein; dementsprechend kann die jeweilige Sensoranordnung jeweils mittels zweier voneinander beabstandet innerhalb des Verdrängerelements oder mittels zweier voneinander beabstandet außerhalb des Rohrs angeordneter - piezoelektrischen oder elektrodynamischen - Schwingungssensoren bzw. mittels außen am Verdrängerelement plazierten elektromagnetischen Schwingungssensoren gebildet sein.

Die Meß- und Betriebselektronik jedes der vorbezeichneten Meßsysteme ist sowohl mit der jeweiligen Erregeranordnung als auch mit der jeweiligen Sensoranordnung mittels elektrischer Zuleitungen elektrisch verbunden und zudem dafür eingerichtet, die mittels des jeweiligen Meßwandlers generierten Schwingungssignale zu empfangen und zu verarbeiten, nämlich basierend auf den Schwingungssignalen einen den wenigstens einen Strömungsparameter repräsentierenden Strömungsparameterwert, beispielsweise einen eine Massendurchflußrate des Fluids repräsentierenden Massendurchfluß-Meßwert, und/oder einen den wenigstens einen Stoffparameter repräsentierenden Stoffparameterwert, beispielsweise einen eine Dichte des Fluids repräsentierenden Dichte-Meßwert und/oder einen eine Viskosität des Fluids repräsentierenden Viskosität-Meßwert, zu ermitteln. Darüberhinaus ist die Meß- und Betriebselektronik jeweils auch eingerichtet, mittels wenigstens eines elektrischen Erregersignals zumindest die Nutz-Schwingungen erzwingende elektrische Leistung in die Erregeranordnung einzuspeisen.

Die in der US-A 2016/0334316 vorgeschlagene Positionierung des wenigstens einen Schwingungserregers bzw. der Schwingungssensoren innerhalb des Lumens des Rohrs hat u.a. den Nachteil, daß für die elektrischen Verbindungsleitungen hermetisch dichte, mithin technisch aufwendige bzw. teure Leitungsdurchführungen im jeweiligen Rohr - sei es in der Wandung oder im Bereich eines der vorbezeichneten Anschlußflansche - vorzusehen sind. Zudem müssen der Schwingungserreger und die Schwingungssensoren jeweils auch eingerichtet sein, im Betrieb selbst dauerhaft in das zu messende Fluid eingetaucht zu sein. Bei dem in der US-A 44 20 983 gezeigten Meßsystem wiederum hat die Positionierung von dessen Schwingungserregern und -sensoren außerhalb des Rohrs insbesondere den Nachteil, daß sowohl die für die Anregung der Nutz-Schwingungen als auch das für deren Detektion jeweils benötigen elektromagnetischen Felder jeweils die Wandung des Rohrs wie auch das zu messende Fluid durchdringen müssen, einhergehend mit einer entsprechenden, ggf. auch vom zu messenden Fluid und/oder von dessen Temperatur abhängigen Dämpfung. Zudem kommen für die Herstellung der Wandung des Rohrs lediglich ausreichend magnetisch leitfähige, gleichwohl nicht ferromagnetische, mithin nur eine limitierte Anzahl an Materialien in Frage. Wenngleich die in der EP-B 564 682 oder der WO-A 95/29386 gezeigten Meßsysteme die vorbezeichneten Nachteile nicht aufzeigen, so konnten derartige Meßsysteme in der industriellen Meßtechnik bislang dennoch nicht etabliert werden; dies nicht zuletzt auch aufgrund des vergleichsweise komplexen mechanischen Aufbaus einerseits und der vergleichsweise großen Querempfindlichkeit auf im vorbeiströmenden Fluid herrschende Drücke und Reynoldszahlen wie auch dessen Dichte und Viskosität anderseits, einhergehend mit einer entsprechend niedrigen Meßgenauigkeit.

Ausgehend vom vorbezeichneten Stand der Technik besteht eine Aufgabe der Erfindung darin, einen für ein vibronisches Meßsystem der vorgenannten Art geeigneten Meßwandler anzugeben, der zum einen eine Plazierung sowohl der wenigstens eine Schwingungserreger als auch der wenigstens eine Schwingungssensor außerhalb des Rohrs, mithin nicht in dessen Lumen ermöglichenden, gleichwohl vergleichsweise einfachen mechanischen Aufbaus aufweist und mit dem zum anderen trotz des einfachen mechanischen Aufbaus bei der Messung eines oder mehrerer Strömungs- und/oder Stoffparameter eines strömenden Fluids eine hohe Meßgenauigkeit, insb. mit einem entsprechend geringen, nämlich unter 0,5 % des jeweiligen Meßwerts liegenden Meßfehler, erzielt werden kann.

Zur Lösung der Aufgabe besteht die Erfindung in einem Meßwandler für ein vibronisches Meßsystem gemäß dem angefügten unabhängigen Patentanspruch 1.

Darüberhinaus besteht die Erfindung auch in einem mittels eines solchen Meßwandlers gebildeten vibronischen Meßsystem zum Messen und/oder Überwachen wenigstens eines, insb. zeitlich veränderlichen, Strömungsparameters gemäß dem angefügten Patentanspruch 18.

Zudem besteht die Erfindung gemäß dem angefügten unabhängigen Patentanspruch 20 auch darin, nämlichen Meßwandler bzw. ein damit gebildetes Meßsystems zum Messen und/oder Überwachen eines in einer, beispielsweise eine Nennweite von mehr als 100 mm aufweisenden, Rohrleitung strömenden, beispielsweise eine Temperatur von mehr als 100°C und/oder einen statischen Druck von mehr als 100 bar aufweisenden Fluids, wie z.B. eines mit einer Massendurchflußrate von mehr als 500 t/h strömenden Gases, zu verwenden.

Weitere Ausgestaltungen der Erfindung sind in den abhängigen Patentansprüchen spezifiziert.

Ein Grundgedanke der Erfindung besteht darin, bei einem Meßwandler der in Rede stehenden Art zum einen die für die Anregung von Nutzschwingungen der wenigstens einen Wandlereinheit bzw. für die Verformung von dessen wenigstens einen innerhalb des Rohrs plazierten Verdrängerelements benötigte mechanische Anregungskraft mittels wenigstens eines außerhalb des Rohrs plazierten Schwingungserregers zu erzeugen und von da weiter mittels wenigstens zweier als mechanischer Kraftwandler dienlichen Verbindungselementen durch die Wandung des Rohrs hindurch weiter zum Verdrängerelement zu leiten und zum anderen auch die durch das zu messende Fluid zusätzlich verursachten Verformungen des Verdrängerelements über ebensolche bzw. die vorbezeichneten Verbindungselemente zu einem ebenfalls des Rohrs plazierten Schwingungssensor zu leiten. Überraschenderweise hat sich zudem gezeigt, daß Torsionsschwingungen der vorbezeichneten Verbindungselemente um eine jeweilige gedachte, beispielsweise zu einer jeweils zugehörigen Hauptträgheitsachse parallele bzw. koinzidente, Torsionsschwingungsachse bzw. die damit einhergehenden Verdrehungen besonders vorteilhaft für die Übertragung der Anregungskraft bzw. der dadurch bewirkten Bewegung durch die Wandung des Rohrs hindurch genutzt werden können.

Ein Vorteil der Erfindung ist u.a. darin zu sehen, daß aufgrund der mechanischen Übertragung der zum Erfassen der Meßgröße notwendigen Verformungsbewegungen der Wandlereinheit durch die Wandung des Rohrs hindurch auf die Verwendung aufwendiger Leitungsdurchführungen innerhalb des Rohres bzw. dessen Wandung verzichtet, und somit ein sehr robuster und langzeitstabiler Meßwandler bereitgestellt werden kann; dies im besonderen auch für Messungen in Rohrleitungssystemen mit großen Nennweiten von mehr als 100 mm, insb. nämlich mehr als 200 mm, und/oder für Messungen mit Fluid- und/oder Betriebstemperaturen von mehr als 100°C, insb. auch mehr als 200 C, und/oder mit Fluid- bzw. Betriebsdrücken von mehr als 100 bar, insb. mehr auch als 200 bar. Die Verbindung zwischen Meßwandler und Rohrleitung kann ohne weiteres mittels am Rohr entsprechend vorgesehenen Standardflanschen realisiert werden. Ein weiterer Vorteil der Erfindung besteht auch darin, daß trotzt des neuartigen mechanischen Aufbaus des Meßwandlers die für konventionelle vibronische Meßsysteme, nicht zuletzt auch Coriolis-Massendurchfluß-Meßgeräte bzw. ebenfalls mittels wenigstens eines im Betrieb vibrierenden Meßrohrs gebildete vibronische Dichte- und/oder Viskositäts-Meßgeräte, etablierten, u.a. aus der US-B 63 11 136 bekannten und/oder von der Anmelderin selbst, nicht zuletzt für Coriolis-Massendurchfluß-Meßgeräte der vorgenannten Art (http://www.endress.com/de/messgeraete-fuer-die-prozesstechnik/produktfinder?filter.business-area=flow&filter.measuring-principle-parameter=coriolis&filter.text=) angebotenen, Meß- und Betriebselektroniken prinzipiell übernommen bzw. mit vergleichsweise geringen Modifikationen weiterverwendet werden können. Darüberhinaus kann aufgrund des einfachen mechanischen Aufbaus des Meßwandlers ein sehr preiswerter, gleichwohl sehr präziser Grenzwertschalter bereitgestellt werden, der beispielsweise für die Überwachung von Rohrleitungssystemen, etwa hinsichtlich der Massendurchdurchflußrate, der Dichte oder der Viskosität und/oder darauf basierend überwachter Betriebsparameter, und/oder für den Schutz von Pumpen und/oder Ventilen, eingesetzt werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:
- Fig. 1, 2: schematisch ein dem Messen und/oder Überwachen wenigstens einer Meßgröße eines strömenden Fluids dienliches vibronisches Meßsystem;
- Fig. 3, 4, 5, 6: schematisch in verschiedenen Ansichten ein Ausführungsbeispiel eines, beispielsweise für ein Meßsystem gemäß Fig. 1 bzw. 2 geeigneten, erfindungsgemäßen Meßwandlers vom Vibrationstyp;
- Fig. 7, 8: ein Ausführungsbeispiel für für einen erfindungsgemäßen Meßwandler geeignete Verbindungselemente;
- Fig. 9, 10, 11: schematisch in verschiedenen Ansichten ein weiteres Ausführungsbeispiel für einen für ein erfindungsgemäßes Meßsystem geeigneten Meßwandler vom Vibrationstyp
- Fig. 12: schematisch ein Ausführungsbeispiel für für einen erfindungsgemäßen Meßwandler geeignetes Verbindungselement mit einem damit verbundenen Temperatursensor;
- Fig. 13: schematisch ein in einem als Nutzmode geeigneten natürlichen Schwingungsmode eines erfindungsgemäßen Meßwandlers schwingende Wandlereinheit;
- Fig. 14: schematisch ein in einem als Coriolismode dienlichen natürlichen Schwingungsmode eines erfindungsgemäßen Meßwandlers schwingende Wandlereinheit;
- Fig. 15: schematisch einen der Wandlereinheit eines erfindungsgemäßen Meßwandlers innewohnenden zusätzlichen Suspensionsmode;
- Fig. 16a, 16b,: schematisch weitere Ausführungsbeispiele für
- 16c, 16d,: für einen erfindungsgemäßen Meßwandler geeignete
- 17, 18: Verbindungselemente;
- Fig. 19, 20,: schematisch in verschiedenen Ansichten ein weitere Ausführungsbeispiele für einen
- 21, 22, 23, 24: für ein erfindungsgemäßes Meßsystem geeigneten Meßwandler vom Vibrationstyp;
- Fig. 25, 26,: schematisch in verschiedenen Ansichten ein Ausführungsbeispiel für einen mittels
- 27, 28, 29: zweier Wandlereinheiten gebildeten erfindungsgemäßen Meßwandler;
- Fig. 30, 31: schematisch in verschiedenen Ansichten ein weiteres Ausführungsbeispiel für einen mittels zweier Wandlereinheiten gebildeten erfindungsgemäßen Meßwandler;
- Fig. 32: schematisch einen einem mittels zweier Wandlereinheiten gebildeten erfindungsgemäßen Meßwandlers innewohnenden Parallelschwingungsmode; und
- Fig. 33: schematisch einen einem mittels zweier Wandlereinheiten gebildeten erfindungsgemäßen Meßwandlers innewohnenden Anti-Parallelschwingungsmode.

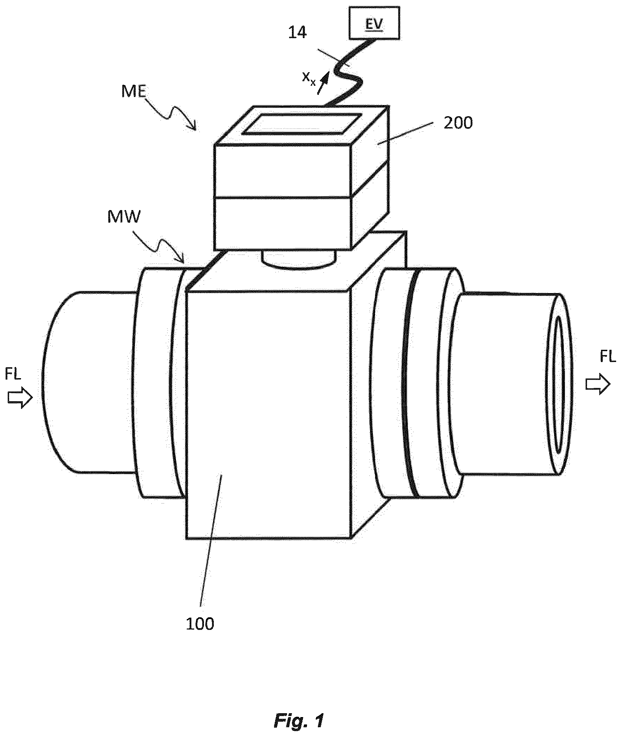

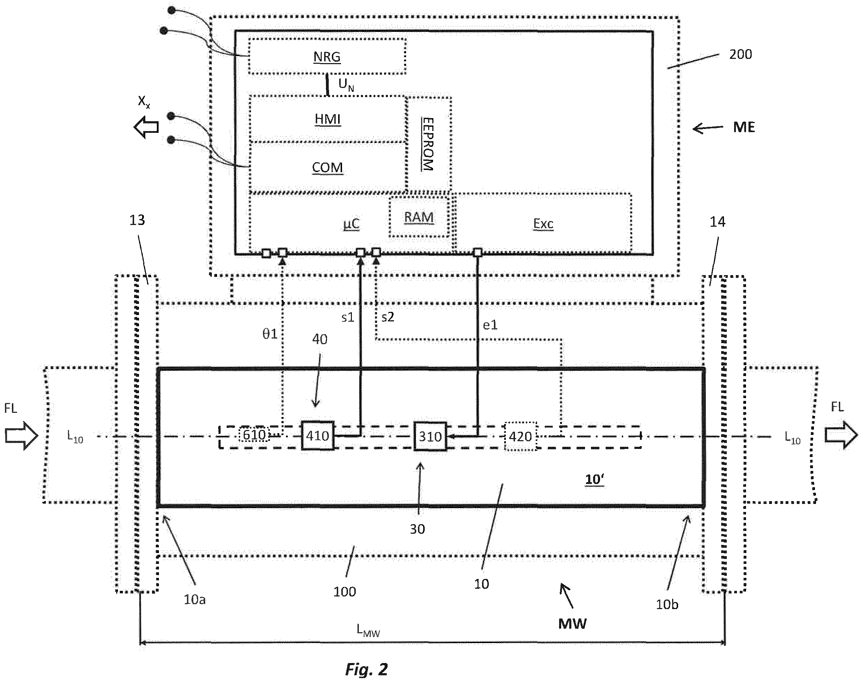

In Fig. 1 und 2 ist schematisch ein dem Messen und/oder Überwachen wenigstens einer, insb. zeitlich veränderlichen, Meßgröße x, insb. nämlich eines Strömungsparameters, wie z.B. einer Massendurchflußrate m, einer Volumendurchflußrate v und/oder einer Strömungsgeschwindigkeit vₘ, und/oder eines Stoffparameters, wie z.B. einer Dichte ρ und/oder einer Viskosität η, eines strömenden Fluids FL, insb. nämlich eines Gases, einer Flüssigkeit oder einer Dispersion, dienliches vibronisches Meßsystem dargestellt. Bei dem mittels des Meßsystems zu messenden bzw. zu überwachenden Fluid FL kann es sich beispielsweise um ein Prozeßgas, um überhitzten Dampf, um verdichtetes Erdgas (CNG) oder beispielsweise auch um ein mit mehr als 500 t/h strömendes Gas handeln; zu messendes und/oder zu überwachendes Fluid kann beispielsweise aber auch eine Temperatur von mehr als 100°C, insb. auch mehr als 200 C, und/oder einen statischen Druck von mehr als 100 bar, insb. mehr auch als 200 bar, aufweisendes und/oder in einer eine Nennweite von mehr als 100 mm, insb. auch 200 mm, aufweisenden Rohrleitung geführtes Fluid sein. Darüberhinaus kann das erfindungsgemäße Meßsystem aber beispielsweise auch in solchen Anwendungen zum Einsatz kommen, wie in den in den eingangs erwähnten US-A 44 20 983, US-A 2016/0187176, US-A 2016/0334316, EP-B 564 682 bzw. WO-A 95/29386 aufgeführt sind.

Das Meßsystem umfaßt einen Meßwandler MW vom Vibrationstyp zum Erzeugen von für die Messung des wenigstens einen Meßgröße dienlichen Meßsignalen sowie eine mit nämlichem Meßwandler MW elektrisch gekoppelte, beispielsweise im Betrieb von extern via Anschlußkabel und/oder mittels interner Energiespeicher mit elektrischer Energie versorgte, Meß- und Betriebs-Elektronik ME zum Erzeugen der die mittels des Meßwandlers erfaßte Meßgröße(n) repräsentierenden Meßwerte bzw. zum sequentiellen Ausgeben solcher Meßwerte xₓ als einen jeweils aktuell gültigen Meßwert xₓ (xₘ → xₓ, xₘₚ → xₓ, x_{η} → xₓ) des Meßsystems an einem entsprechenden Meßausgang, beispielsweise auch in Form digitaler Meßwerte und/oder in Echtzeit. Darüberhinaus ist die Meß- und Betriebs-Elektronik ME nach einer Ausgestaltung der Erfindung dafür eingerichtet, wenigstens eine der vorbezeichneten Meßwerte oder auch wenigstens einige der Meßwerte mit einem dafür vorgegebenen Referenz- bzw. Schwellenwert zu vergleichen. Ferner kann die Meß- und Betriebs-Elektronik ME vorteilhaft dafür eingerichtet sein, einen - beispielsweise visuell und/oder akustisch wahrnehmbaren - Alarm zu generieren, für den Fall, daß eine Abweichung des Meßwerts vom vorgegebenen Schwellenwert ermittelt wird, beispielsweise derart, daß der Meßwert größer als der jeweilige Schwellenwert ist oder derart, daß der Meßwert kleiner als der jeweilige Schwellenwert ist.

Zum Schutz des Meßwandlers bzw. einzelnen - beispielsweise nämlich mechanischen und/oder elektrischen bzw. elektromechanischen - Komponenten davon umfaßt der Meßwandler nach einer weiteren Ausgestaltung der Erfindung ein außen am Rohr angebrachtes, dieses zumindest teilweise umgebendes Wandler-Schutzgehäuse 100, wobei jeder der vorbezeichneten, jeweils ein Ende des Rohrs 10 fassenden Anschlußflansche, wie bei industriellen Meßsystemen durchaus üblich und wie auch in Fig. 1 und 2 jeweils angedeutet, beispielsweise jeweils auch als integraler Bestandteil nämlichen Schutzgehäuses 100 ausgebildet sein kann. Die, beispielsweise mittels wenigstens eines Mikroprozessors und/oder mittels eines digitalen Signalprozessors (DSP) gebildete, Meß- und Betriebselektronik wiederum kann innerhalb eines entsprechenden, beispielsweise direkt am vorbezeichneten Wandler-Schutzgehäuse 100 angebrachten und/oder gekammerten, Elektronik-Schutzgehäuses 200 des Meßsystems untergebracht sein. Nämliches Elektronik-Gehäuse 200 kann je nach Anforderung an das Meßsystem beispielsweise auch schlag- und/oder auch explosionsfest und/oder hermetisch dicht ausgebildet sein.

Die Meßgerät-Elektronik ME kann, wie auch in Fig. 2 schematisch nach Art eines Blockschaltbildes dargestellt, eine Meßsignale des Meßwandlers MW verarbeitende Meß- und Auswerteschaltung µC aufweisen, die im Betrieb die entsprechende Meßwerte xₓ für die mittels des Meßsystems zu erfassenden Meßgröße x generiert. Die Meß- und Auswerteschaltung µC der Meß- und Betriebs-Elektronik ME kann beispielsweise mittels eines wenigstens einen Mikroprozessor und/oder einen digitalen Signalprozessor (DSP) aufweisenden Mikrocomputers realisiert sein. Die davon auszuführenden Programm-Codes wie auch der Steuerung des jeweiligen Meßsystems dienliche Betriebsparameter, wie z.B. auch Sollwerte für mittels der Meß- und Betriebs-Elektronik realisierte Regler bzw. Regleralgorithmen, können - wie auch in der Fig. 2 schematisch dargestellt -, z.B. in einem nicht-flüchtigen Datenspeicher EEPROM der Meß- und Betriebs-Elektronik ME persistent gespeichert sein und beim Starten desselben in einen, z.B. im Mikrocomputer integrierten, flüchtigen Datenspeicher RAM geladen werden. Im übrigen kann die Meß- und Betriebs-Elektronik ME vorteilhaft auch so ausgebildet sein, daß sie hinsichtlich des Schaltungsaufbaus bzw. der Programmierung einer der aus dem Stand der Technik bekannten, für mittels vibrierender Meßrohre gebildete vibronische Meßsyteme geeigneten Meß- und Betriebs-Elektroniken entspricht, wie z.B. einer Meß- und Betriebs-Elektronik gemäß der US-B 63 11 136 oder einer Meß- und Betriebs-Elektronik eines seitens der Anmelderin, z.B. unter der Bezeichung "PROMASS 83F", angebotenen Coriolis-Massendurchfluß-/Dichte-Meßgeräts.

Die mittels der Meß- und Betriebs-Elektronik ME generierten Meßwerte xₓ (xₘ, x_{ρ}, x_{η}, x_{ϑ}...) können beim hier gezeigten Meßsystem beispielsweise vor Ort, nämlich unmittelbar an der mittels des Meßsystems gebildeten Meßstelle, angezeigt werden. Zum Visualisieren von mittels des Meßsystems erzeugten Meßwerten und/oder gegebenenfalls Meßsystem intern generierten Systemstatusmeldungen, wie etwa einer erhöhte Meßungenauigkeit bzw. -unsicherheit signalisierende Fehlermeldung oder einem eine Störung im Meßsystem selbst oder an der mittels des Meßsystems gebildeten Meßstelle signalisierenden Alarm, vor Ort kann das Meßsystem, wie auch Fig. 2 angedeutet, beispielsweise ein mit der Meß- und Betriebs-Elektronik kommunizierendes, ggf. auch portables, Anzeige- und Bedienelement HMI aufweisen, wie etwa ein im Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch (re-)programmier- bzw. fernparametrierbare, Meß- und Betriebs-Elektronik ME zudem so ausgelegt sein, daß sie im Betrieb des Meßsystems mit einem diesem übergeordneten elektronischen Datenverarbeitungssystem - beispielsweise einer speicherprogrammierbaren Steuerung (SPS), einem Personalcomputer (PC) und/oder einer Workstation - via Datenübertragungssystem, beispielsweise einem Feldbussystem, wie etwa FOUNDATION FIELDBUS, PROFIBUS, und/oder drahtlos per Funk, Meß- und/oder andere Betriebsdaten austauschen kann, wie etwa aktuelle Meßwerte, Systemdiagnosewerte, Systemstatusmeldungen oder aber auch der Steuerung des Meßsystems dienende Einstellwerte. Des weiteren kann die Meß- und Betriebs-Elektronik ME so ausgelegt sein, daß sie von einer externen Energieversorgung, beispielsweise auch über das vorgenannte Feldbussystem, gespeist werden kann. Dafür kann die Meß- und Betriebs-Elektronik ME beispielsweise eine solche interne Energieversorgungsschaltung NRG zum Bereitstellen interner Versorgungsspannungen U_{N} aufweisen, die im Betrieb von einer im vorgenannten Datenverarbeitungssystem vorgesehenen externen Energieversorgung über das vorgenannte Feldbussystem gespeist wird. Hierbei kann das Meßsystem beispielsweise als sogenanntes Vierleitergerät ausgebildet sein, bei dem die interne Energieversorgungsschaltung der Meßgerät-Elektronik ME mittels eines ersten Paars Leitungen mit einer externen Energieversorgung und die interne Kommunikationsschaltung der Meß- und Betriebs-Elektronik ME mittels eines zweiten Paars Leitungen mit einer externen Datenverarbeitungsschaltung oder einem externen Datenübertragungssystem verbunden werden kann. Die Meß- und Betriebs-Elektronik kann ferner aber auch so ausgebildet sein, daß sie, wie bei industriellen Meßsystemen durchaus üblich, mittels einer, beispielsweise als 4-20 mA-Stromschleife konfigurierten, Zweileiter-Verbindung mit dem externer elektronischen Datenverarbeitungssystem elektrisch verbindbar ist und darüber mit elektrischer Energie versorgt wird sowie Meßwerte zum Datenverarbeitungssystem übertragen kann, ggf. auch unter Verwendung von HART Multidrop. Für den typischen Fall, daß das Meßsystem für eine Ankopplung an ein Feldbus- oder ein anderes elektronisches Kommunikationssystem vorgesehen ist, kann die, beispielsweise auch vor Ort und/oder via Kommunikationssystem (re-)programmierbare, Meß- und Betriebs-Elektronik ME zu dem eine entsprechende - beispielsweise einem der einschlägigen Industriestandards, wie etwa der IEC 61158/IEC 61784, konforme - Kommunikations-Schnittstelle COM für eine Datenkommunikation aufweisen, z.B. zum Senden von Meß- und/oder Betriebsdaten, mithin den die jeweilige Meßgröße repräsentierenden Meßwerte an die bereits erwähnte speicherprogrammierbare Steuerung (SPS) oder ein übergeordnetes Prozeßleitsystem und/oder zum Empfangen von Einstelldaten für das Meßsystem. Das elektrische Anschließen des Meßwandlers an die Meß- und Betriebs-Elektronik kann mittels entsprechender Anschlußleitungen erfolgen, die aus dem vorbezeichneten Elektronik-Gehäuse 200, beispielsweise via Kabeldurchführung, in das vorbezeichnete Wandler-Gehäuse 100 geführt und zumindest abschnittsweise auch innerhalb des Wandler-Gehäuses 100 verlegt sind. Die Anschlußleitungen können dabei zumindest anteilig als zumindest abschnittsweise von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, beispielsweise flexiblen bzw. teilweise starren und teilweise flexiblen, gegebenenfalls auch lackierten Leiterplatte gebildet sein, vgl. hierzu auch die eingangs erwähnten WO-A 96/07081.

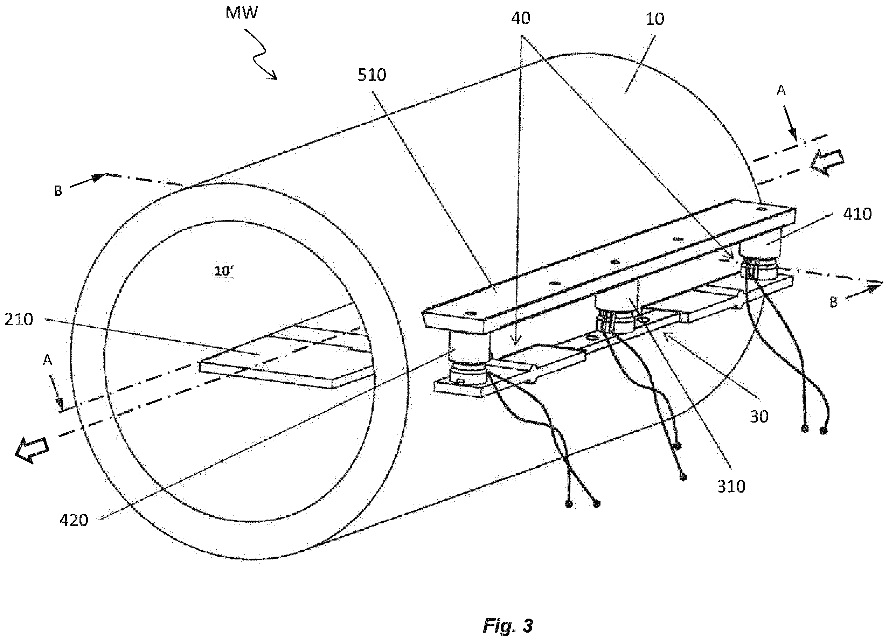

In den Fign. 3, 5, 4 und 6 ist in verschieden Ansichten ein Ausführungsbeispiel eines solchen, nämlich für das vorbezeichnete vibronische Meßsystem geeigneten Meßwandlers schematisch dargestellt. Der Meßwandler umfaßt ein, insb. zumindest abschnittsweise gerades, Rohr 10, das ein von einer - beispielsweise metallischen und/oder hohlzylindrischen - Wandung umhülltes Lumen 11' aufweist und das sich von einem einlaßseitigen ersten (Rohr-)Ende 11a bis zu einem auslaßseitigen zweiten (Rohr-)Ende 11b erstreckt. Das Rohr 10 ist dafür eingerichtet, von einem Fluid, beispielsweise einem Gas, einer Flüssigkeit oder einer Dispersion, in einer Strömungsrichtung, nämlich ausgehend vom einlaßseitigen ersten Ende in Richtung des auslaßseitigen zweiten Ende, durchströmt zu werden. Dementsprechend ist das Rohr 10 nach einer weiteren Ausgestaltung der Erfindung dafür eingerichtet, in den Verlauf einer das zu messende Fluid im Betrieb führenden, beispielsweise ein Kaliber von mehr als 50 mm aufweisende, Rohrleitung eingesetzt zu sein bzw. zu werden. Jedes der beiden Enden des Rohrs kann dafür, wie auch in Fig. 1 angedeutet, jeweils auch von einem zu einem an der vorbezeichneten Rohrleitung ggf. vorgesehenen Anschlußflansch kompatiblen Anschlußflansch 13 bzw. 14 gefaßt sein. Darüberhinaus kann das Rohr 10 selbst ein Kaliber D₁₀ aufweisen, das dem Kaliber DN der vorbezeichneten Rohrleitung entspricht und/oder das mehr als 10 mm, beispielsweise nämlich mehr als 500 mm, beträgt. Nicht zuletzt für den vorbezeichneten Fall, daß das Kaliber D₁₀ mehrals 100 mm beträgt, kann das Rohr 10 vorteilhaft zudem eine Länge L₁₀, gemessen als ein kürzester Abstand zwischen dessen ersten Ende und dessen zweiten Ende, aufweisen, die kleiner als nämliches Kaliber D₁₀ ist, mithin kann der Meßwandler bzw. das damit gebildete Meßsystem sehr kompakt ausgebildet sein. Nach einer weiteren Ausgestaltung der Erfindung weist die Wandung des Rohrs 10 eine kleinste Wandstärke auf, die größer als 2 mm, beispielsweise größer als 5 mm, ist und/oder besteht nämliche Wandung zumindest anteilig - beispielsweise nämlich überwiegend oder vollständig - aus einem Stahl, wie z.B. einem hochfesten Edelstahl und/oder einer Nickelbasislegierung, wodurch der Meßwandler bzw. das damit gebildete Meßsystem ohne weiteres auch für Anwendung mit vergleichsweise hohen Betriebsdrücken von über 100 bar verwendet werden kann.

Der erfindungsgemäße Meßwandler umfaßt des weiteren wenigstens eine erste Wandlereinheit 21, eine damit gekoppelte bzw. damit in Wirkverbindung stehende, beispielsweise mittels wenigstens eines elektrodynamischen oder piezoelektrischen Schwingungserregers 31 gebildete, elektro-mechanische Erregeranordnung 30 zum Anregen und Aufrechterhalten von erzwungenen mechanischen Schwingungen, beispielsweise nämlich Resonanzschwingungen, der Wandlereinheit 21. Im besonderen ist die Erregeranordnung 30 eingerichtet, elektrische (Erreger-)Leistung P_{exc} in mechanische Leistung umzuwandeln und in Umwandlung von elektrischer in mechanische Leistung Nutz-Schwingungen, nämlich erzwungene mechanische Schwingungen des Meßwandlers, insb. zumindest dessen Wandlereinheit 21, in einem - gelegentlich auch als Antriebsmode bezeichneten - Nutzmode, mit einer Nutz-Schwingfrequenz f_{exc}, nämlich einer vorgebbaren - beispielsweise auch von der Dichte ρ des zu messenden Fluids FL abhängigen und/oder im Betrieb veränderlichen und/oder einer momentanen Resonanzfrequenz f_{R1} der Wandlereinheit 21 entsprechenden - Schwingfrequenz anzuregen bzw. aufrechtzuerhalten bzw. wenigstens eine entsprechende, nämlich die Nutz-Schwingungen bewirkende Anregungskraft F_{exc} in die Wandlereinheit 21 einzuleiten. Als Nutzmode kann beispielsweise ein der Wandlereinheit 21 innewohnender natürlicher Schwingungsmode, insb. nämlich ein dem Induzieren von von einer Massendurchflußrate m des durch das Rohr strömenden Fluid abhängigen Corioliskräfte dienlicher und/oder eine Eigen- bzw. Resonanzfrequenz von mehr als 100 Hz und/oder weniger als 1000 Hz aufweisender Schwingungsmode, verwendet werden.

Zum Generieren einer mechanische Schwingungen, insb. Nutz-Schwingungen, der Wandlereinheit 21 bewirkenden, insb. zeitlich veränderlichen und/oder zumindest zeitweise periodischen, (ersten) Anregungskraft F_{exc} weist die Erregeranordnung 30 nach einer weiteren Ausgestaltung der Erfindung wenigstens einen, beispielsweise elektrodynamischen oder piezoelektrischen, ersten Schwingungserreger 310 auf. Zudem umfaßt der erfindungsgemäße Meßwandler MW - wie in u.a. Fig. 3 schematisch dargestellt und wie bei vibronischen Meßwandlern bzw. damit gebildeten Meßsystemen durchaus üblich - eine ebenfalls mit der Wandlereinheit 21 gekoppelte bzw. damit in Wirkverbindung stehende, beispielsweise mittels wenigstens einem elektrodynamischen Schwingungssensor 410 und/oder wenigstens zwei baugleichen Schwingungssensoren gebildete, Sensoranordnung 40 zum Erfassen von mechanischen Schwingungen nämlicher Wandlereinheit 21. Im besonderen ist die Sensoranordnung 40 dafür vorgesehen, wenigstens ein mechanische Schwingungen zumindest der Wandlereinheit 21 repräsentierendes - erstes - Schwingungssignal s1 zu generieren; dies im besonderen in der Weise, daß das, beispielsweise elektrische oder beispielsweise optische, Schwingungssignal s1 eine Meßkomponente, nämlich eine Signalkomponente mit einer der Nutz-Schwingungsfrequenz entsprechenden Signalfrequenz aufweist. Nach einer weiteren Ausgestaltung der Erfindung ist die Sensoranordnung 40 ferner dafür eingerichtet, zudem wenigstens ein ebenfalls mechanische Schwingungen zumindest der Wandlereinheit 21 repräsentierendes, beispielsweise elektrisches oder beispielsweise optisches, zweites Schwingungssignal s2 zu generieren, insb. derart, daß das Schwingungssignal s2 eine Meßkomponente, nämlich eine Signalkomponente mit einer der Nutz-Schwingungsfrequenz entsprechenden Signalfrequenz aufweist und/oder daß zwischen dem Schwingungssignal s1 und dem Schwingungssignal s2 - beispielsweise nämlich zwischen deren jeweiligen vorbezeichneten Meßkomponenten - eine von der Massendurchflußrate m des Fluids FL abhängige Phasendifferenz Δϕ existiert. Dementsprechend weist die Sensoranordnung 40 nach einer weiteren Ausgestaltung der Erfindung einen, beispielsweise elektrodynamischen oder piezoelektrischen oder kapazitiven, ersten Schwingungssensor 410 auf. Darüberhinaus ist nach einer weiteren Ausgestaltung der Erfindung die Sensoranordnung 40 ferner mittels eines, beispielsweise elektrodynamischen oder piezoelektrischen oder kapazitiven, zweiten Schwingungssensors 420 gebildet. Nämlicher Schwingungssensor 420 kann vorteilhaft zum Schwingungssensor 410 baugleich ausgebildet sein. Wie u.a. auch in Fig. 3 schematisch dargestellt umfaßt der Meßwandler nach einer weiteren Ausgestaltung der Erfindung wenigstens ein außen an der Wandung des Rohrs 10 fixiertes, beispielsweise plattenförmiges oder stabförmiges, erstes Trägergerüst 510 zum Haltern von Komponenten der Sensoranordnung und/oder von Komponenten der Erregeranordnung, mit welchem Trägergerüst 510 beispielsweise der Schwingungserreger 310 und/oder der Schwingungssensor 410 mechanisch verbunden sein können; der vorbezeichnete Schwingungssensor 420 kann ggf. ebenfalls mit nämlichen Trägergerüst 510 mechanisch verbunden sein.

Sowohl die Erregeranordnung 30 als auch die Sensoranordnung 40 des Meßwandlers ist ferner jeweils, insb. mittels elektrischer Verbindungsleitungen direkt, mit der Meß- und Betriebselektronik ME verbunden. Nach einer weiteren Ausgestaltung der Erfindung ist die Meß- und Betriebselektronik ferner eingerichtet, das Schwingungssignal s1 zu empfangen und/oder zu verarbeiten, insb. nämlich basierend auf dem Schwingungssignal s1 einen die wenigstens eine Meßgröße repräsentierenden Meßwert zu ermitteln, beispielsweise nämlich einen den wenigstens einen Stoffparameter repräsentierenden Strömungsparameterwert und/oder einen den wenigstens einen Stoffparameter repräsentierenden Strömungsparameterwert. Beispielsweise kann die Meß- und Betriebselektronik auch eingerichtet sein, basierend auf der vorbezeichneten der Nutz-Schwingungsfrequenz entsprechenden Signalfrequenz des Schwingungssignals s1 bzw. dessen vorbezeichneten Meßkomponente einen die Dichte ρ des Fluids repräsentierenden Dichte-Meßwert x_{ρ} zu ermitteln, ggf. auch nämlichen Dichte-Meßwert x_{ρ} mit wenigstens einem vorgegebenen Dichte-Schwellenwert zu vergleichen. Für den erwähnten Fall, daß die Sensoranordnung 30 wenigstens zwei Schwingungssignale s1, s2 liefert, ist die Meß- und Betriebselektronik ME nach einer weiteren Ausgestaltung der Erfindung zudem auch dafür eingerichtet, sowohl das Schwingungssignal s1 als auch das Schwingungssignal s2 zu empfangen bzw. zu verarbeiten, beispielsweise nämlich basierend auf dem Schwingungssignal s2 und/oder dem Schwingungssignal s1 den vorbezeichneten Strömungsparameterwert, insb. den die Massendurchflußrate m des Fluids FL repräsentierenden Massendurchfluß-Meßwert xₘ, und/oder den vorbezeichneten Stoffparameterwert, insb. vorbezeichneten Dichte-Meßwert x_{ρ} und/oder einen eine Viskosität η des Fluids repräsentierenden Viskosität-Meßwert x_{η}, zu ermitteln. Im besonderen kann die Meß- und Betriebselektronik hierbei eingerichtet sein, basierend auf einer zwischen dem Schwingungssignal s1 und dem Schwingungssignal s2 - beispielsweise nämlichen zwischen deren vorbezeichneter Meßkomponenten - etablierten Phasendifferenz Δϕ die die Massendurchflußrate m des Fluids FL repräsentierenden Massendurchfluß-Meßwert xₘ zu ermitteln und/oder kann die Meß- und Betriebselektronik eingerichtet sein, nämlichen Massendurchfluß-Meßwert mit wenigstens einem vorgegebenen Massendurchfluß-Schwellenwert zu vergleichen.

Zum Bewirken von mechanischen Schwingungen der wenigstens einen Wandlereinheit 21 ist die Meß- und Betriebselektronik nach einer weiteren Ausgestaltung der Erfindung ferner eingerichtet, mittels wenigstens eines, beispielsweise eine einer Resonanzfrequenz der Wandlereinheit 21 entsprechende Signalfrequenz aufweisenden, elektrischen Erregersignals e₁ zumindest die vorbezeichneten Nutz-Schwingungen der Wandlereinheit 21 erzwingende elektrische Leistung in die Erregeranordnung 30 einzuspeisen. Zudem kann die Meß- und Betriebselektronik ferner dafür eingerichtet sein, basierend auf nämlichem Erregersignal e₁, insb. nämlich basierend auf dem Erregersignal e₁ sowie dem wenigstens Schwingungssignal s1, den vorbezeichneten wenigsten einen Meßwert zu ermitteln bzw. mit einem entsprechend vorgegebenen vorbezeichneten Schwellen- bzw. Referenzwert zu vergleichen; beispielsweise nämlich den vorbezeichneten Massendurchfluß-Meßwert xₘ, den vorbezeichneten Dichte-Meßwert x_{ρ} und/oder den vorbezeichneten Viskosität-Meßwert x_{η} den vorbezeichneten Massendurchfluß-Meßwert xₘ mit einem zugehörigen Massendurchfluß-Schwellenwert und/oder den vorbezeichneten Dichte-Meßwert x_{ρ} mit einem zugehörigen Dichte-Schwellenwert und/oder den vorbezeichneten Viskosität-Meßwert x_{η} mit einem zugehörigen Viskosität-Schwellenwert zu vergleichen und ggf. entsprechend Alarm auszulösen. Nach einer weiteren Ausgestaltung der Erfindung ist Meß- und Betriebselektronik ferner eingerichtet, beispielsweise zwecks eines möglichst raschen Aufstartens des Meßsystems und/oder eines möglichst raschen Anpassen des Erregersignals an sich ändernde Meßbedingungen und/oder zwecks des Durchführens einer Selbstdiagnose des Meßsystems, wenigstens eine Signalfrequenz des Erregersignals e₁ zu variieren und/oder das Erregersignal e₁ mit einer Vielzahl verschiedener Signalfrequenz zu generieren. Zudem kann die Meß- und Betriebselektronik vorteilhaft dafür eingerichtet sein, basierend auf dem Erregersignal e1 und/oder dem wenigstens einen Schwingungssignal s1, beispielsweise auch anhand von zwei oder mehr verschiedenen Signalfrequenzen des Erregersignals e1 und/oder des wenigstens einen Schwingungssignals s1, einen Betriebszustand des Meßsystem zu überwachen, beispielsweise nämlich eine Funktionstüchtigkeit des Meßwandlers und/oder der Meß- und Betriebselektronik zu überprüfen bzw. zu verifizieren.

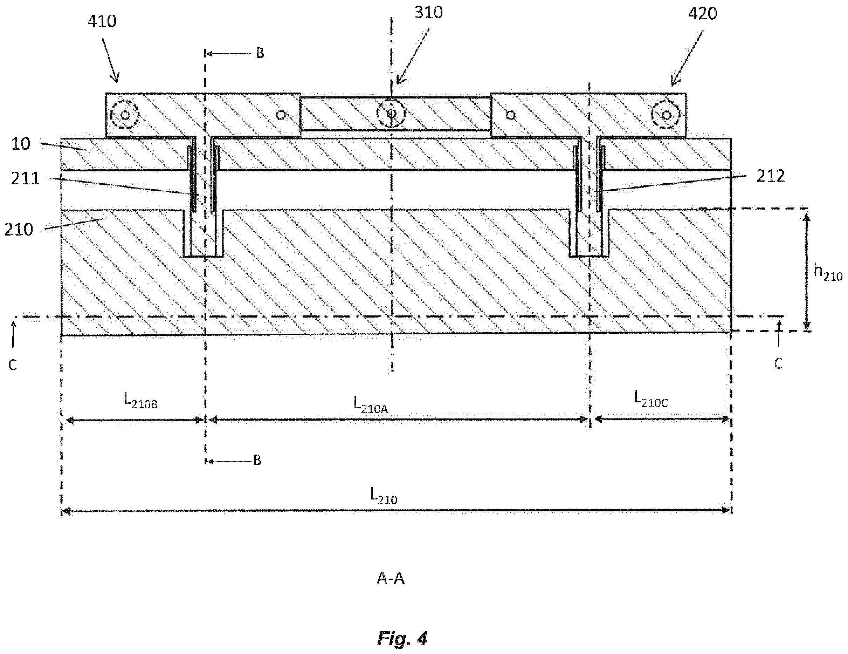

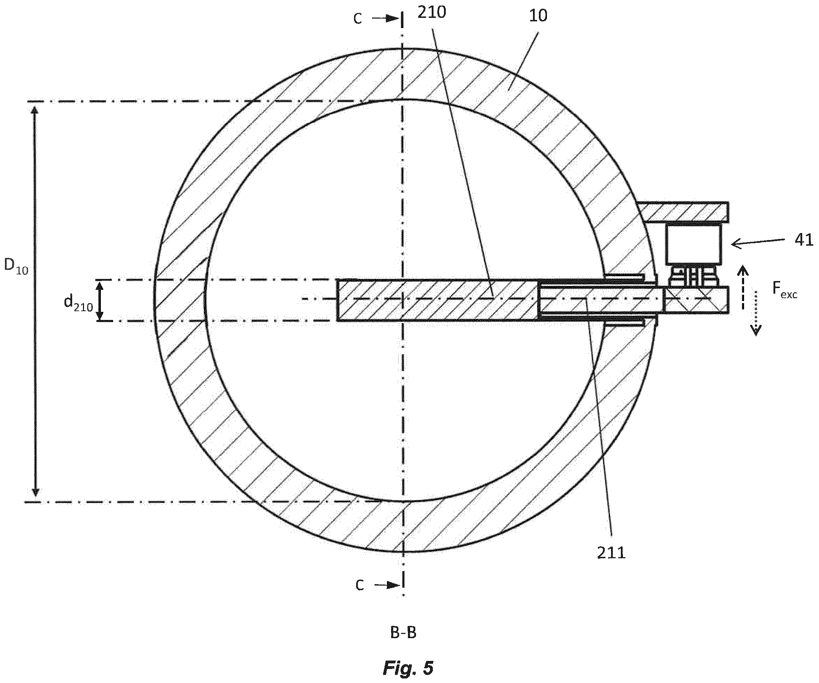

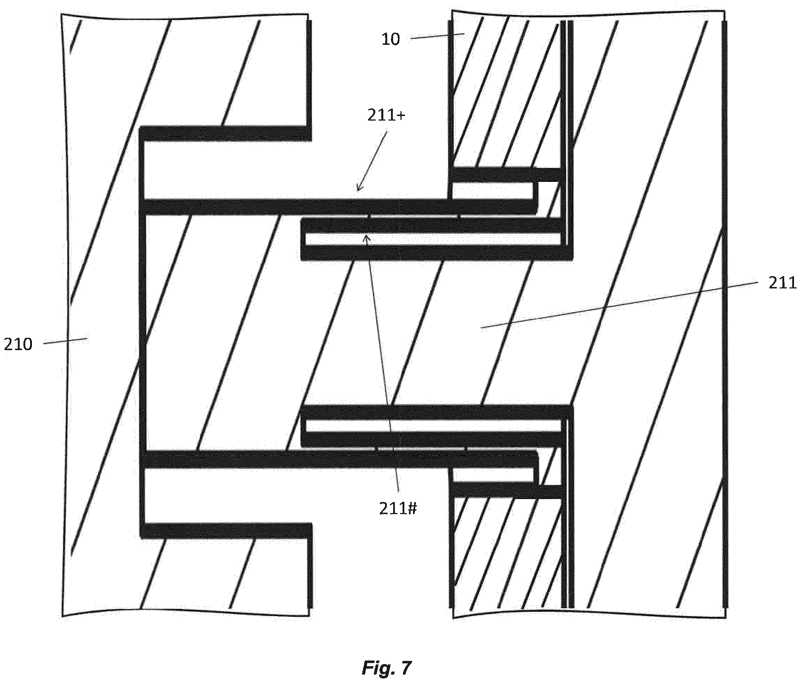

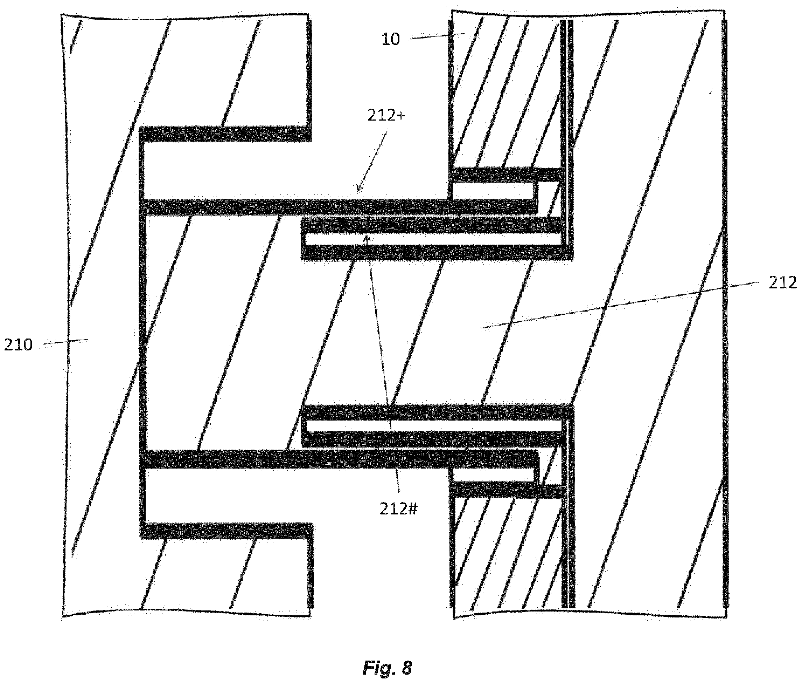

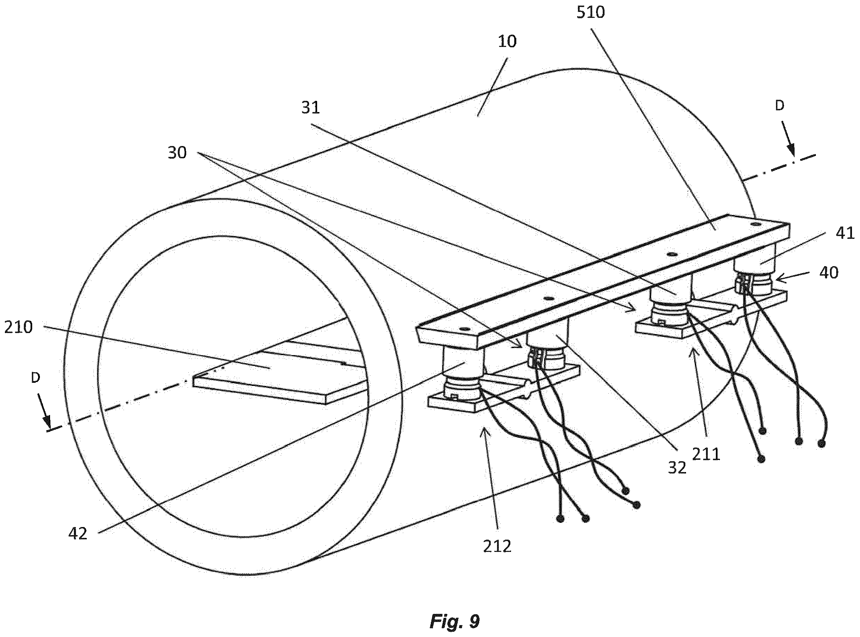

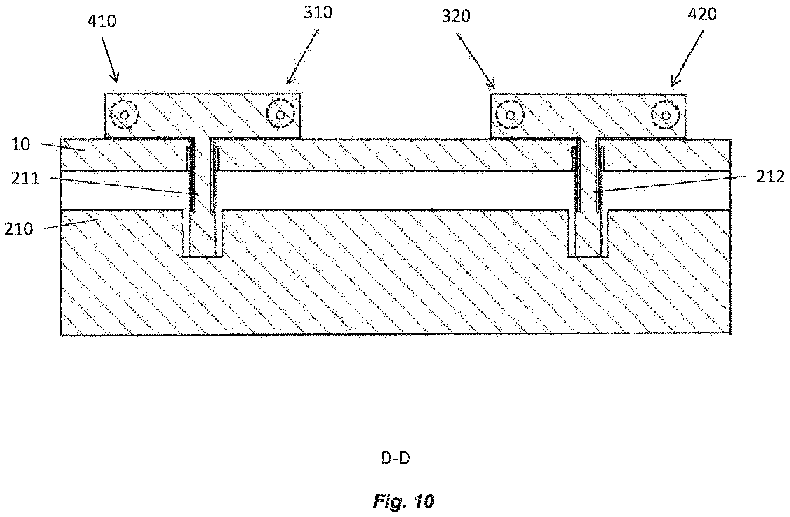

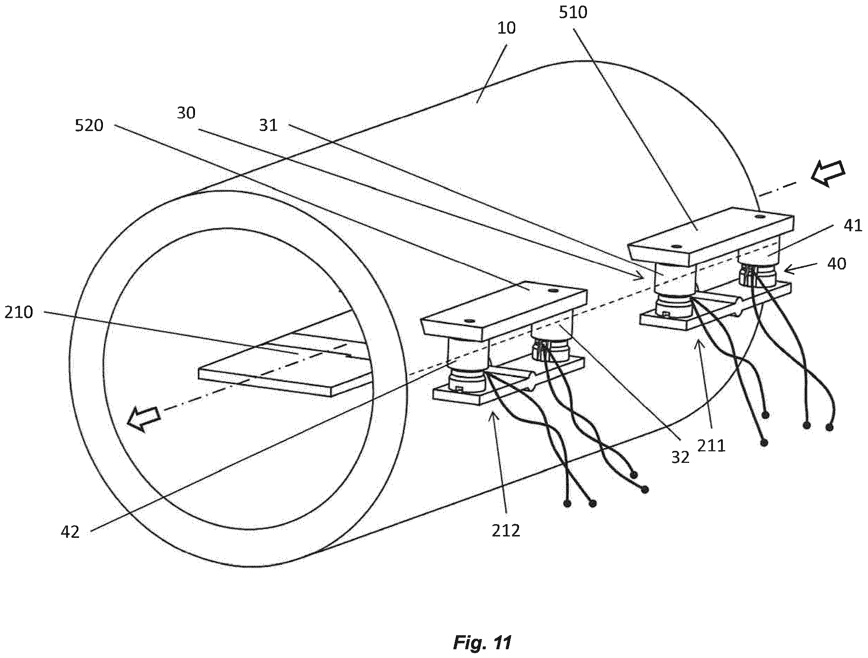

Die Wandlereinheit 21 des erfindungsgemäßen Meßwandlers bzw. des damit gebildeten Meßsystems ist, wie auch in den Fign. 3, 5, 4 oder 6 dargestellt bzw. aus deren Zusammenschau ohne weiteres ersichtlich, mittels wenigstens eines Verdrängerelements 210, eines ersten Verbindungselements 211 sowie wenigstens eines zweiten Verbindungselements 212 gebildet. Jedes der beiden - insb. funktionsgleichen, ggf. auch baugleichen - Verbindungselemente 211, 212 ist jeweils mit dem Verdrängerelement 210 mechanisch verbunden, und zwar in Richtung einer gedachten Längsachse nämlichen Verdrängerelements 210 mit vorgegeben gegenseitigen Abstand L_{210A}. Das Verbindungselement 211 weist, wie auch in Fig. 7 angedeutet, eine erste Oberfläche 211+ und einer dieser gegenüberliegenden, beispielsweise auch zur ersten Oberfläche 211+ zumindest teilweise parallele, zweite Oberfläche 211# auf; gleichermaßen weist, wie aus Fig. 8 ersichtlich, auch das Verbindungselement 212 eine entsprechende erste Oberfläche 212+ und einer dieser gegenüberliegende, beispielsweise auch zur Oberfläche 212+ zumindest teilweise parallelen, zweiten Oberfläche 212# auf. Wie aus einer Zusammenschau der Fign. 3, 5, 4 und 6 ohne weiteres ersichtlich, ist die Wandlereinheit 21 zudem in das Rohr 10 eingesetzt und damit mechanische verbunden, und zwar derart, daß deren Verdrängerelement 210 innerhalb des Lumens nämlichen Rohrs 10 plaziert ist und daß jedes der Verbindungselemente 211, 212 jeweils zumindest teilweise innerhalb der Wandung des Rohrs 10 plaziert und damit mechanisch verbunden ist; dies im besonderen in der Weise, daß das Verbindungselement 212 in Richtung einer gedachten Längsachse L₁₀ des Rohrs und/oder einer gedachten Mantellinie der Wandung des Rohrs vom anderen Verbindungselement 211 beabstandet mit der Wandung des Rohrs mechanisch verbunden bzw. in Strömungsrichtung stromabwärts des Verbindungselements 211 angeordnet ist und/oder daß, wie auch in Fig. 7 und 8 jeweils angedeutet bzw. aus einer Zusammenschau der Fig. 4, 5, 7 und 8 ersichtlich, eine jeweilige erste Oberfläche 211+ bzw. 212+ jedes der beiden Verbindungselemente 211 jeweils dem Lumen des Rohrs 10 zugewandt und eine jeweilige zweite Oberfläche 211# bzw. 212# jedes der beiden Verbindungselemente 211, 212 jeweils dem Lumen des Rohrs 10 abgewandt ist. Die Wandlereinheit 21 und das vorbezeichnete Trägergerüst 510 können vorteilhaft zudem so ausgebildet und angeordnet sein, daß sich nämliches Trägergerüst, wie auch in Fig. 3 angedeutet bzw. aus einer Zusammenschau der Fign. 3 und 5 ersichtlich, zumindest vom Verbindungselement 211 bis zum Verbindungselement 212 erstreckt und/oder parallel zur vorbezeichneten Längsachse L₁₀ bzw. zum Verdrängelement 210 verläuft. Nach einer weiteren Ausgestaltung der Erfindung ist der Schwingungserreger 310 und/oder der Schwingungssensor 410 zumindest mit dem Verbindungselement 211 mechanisch verbunden. Darüberhinaus kann der vorbezeichnete Schwingungssensor 420, wie auch in Fign. 3 und 5 jeweils angedeutet bzw. aus deren Zusammenschau ersichtlich, ggf. zumindest mit dem Verbindungselement 212 mechanisch verbunden sein. Zudem können auch der Schwingungserreger 310 und/oder der Schwingungssensor 410 sowie ggf. der vorbezeichnete Schwingungssensor 420 jeweils sowohl mit dem Verbindungselement 211 als auch mit dem Verbindungselement 212 mechanisch verbunden sein. Nach einer weiteren Ausgestaltung der Erfindung weist die Erregeranordnung 40 zum Generieren einer mechanische Schwingungen der Wandlereinheit 21, beispielsweise nämlich die vorbezeichneten Nutz-Schwingungen, bewirkenden, insb. zeitlich veränderlichen und/oder zumindest zeitweise periodischen, (zweiten) Anregungskraft wenigstens einen, beispielsweise elektrodynamischen oder piezoelektrischen und/oder zum Schwingungserreger 310 baugleichen, zweiten Schwingungserreger 320 auf. Nämlicher Schwingungserreger 320 kann, wie auch in Fig. 9 bzw. 10 schematisch dargestellt oder wie aus deren Zusammenschau ersichtlich, zumindest mit dem Verbindungselement 212 und/oder mit dem vorbezeichneten Trägergerüst 510 mechanisch verbunden sein. Nach einer weiteren Ausgestaltung umfaßt der Meßwandler, wie u.a. auch in Fig. 11 schematisch dargestellt, weiters wenigstens ein außen an der Wandung des Rohrs 10 fixiertes, beispielsweise mit dem vorbezeichneten Trägergerüst 510 fluchtendes, zweites Trägergerüst 520 zum Haltern von Komponenten der Sensoranordnung 40 und/oder von Komponenten der Erregeranordnung 30. Für den Fall, daß der Meßwandler sowohl das Trägergerüst 510 als auch das Trägergerüst 520 aufweist können, wie auch in Fig. 11 gezeigt, beispielsweise nämlich der vorbezeichnete Schwingungserreger 320 und/oder der vorbezeichnete Schwingungssensor 420 mit nämlichem Trägergerüst 520 mechanisch verbunden sein. Das Trägergerüst 520 kann, wie auch aus Fig. 11 ersichtlich, so angeordnet sein, daß nämliches Trägergerüst 520 und das vorbezeichnete Trägergerüst 510, insb. fluchtend und/oder beabstandet, entlang ein und derselben gedachten Mantellinie der Wandung des Rohrs positioniert sind.

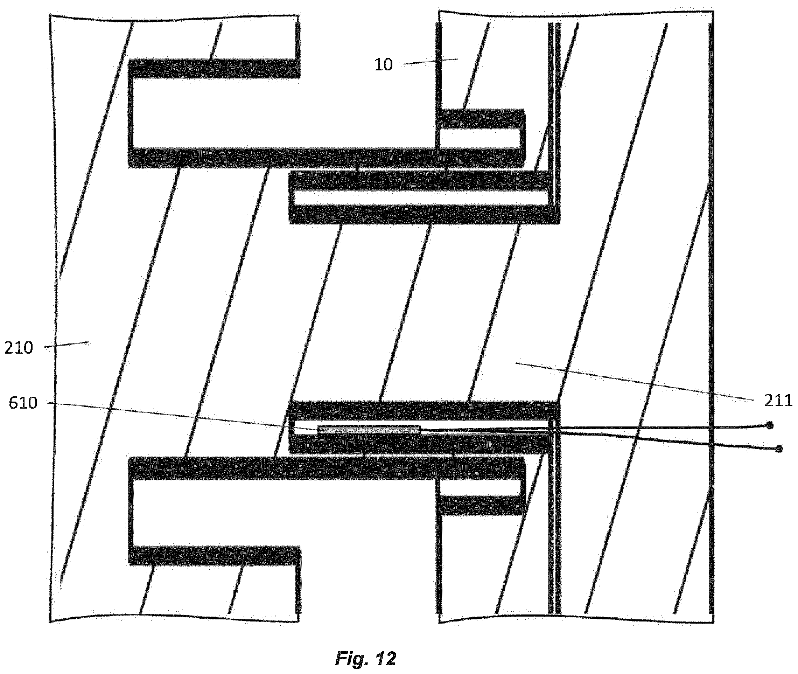

Zum Erfassen einer Temperatur der Wandlereinheit 21 und/oder des nämliche Wandlereinheit 21 kontaktierenden vorbezeichneten Fluids FL bzw. zum Generieren eines nämliche Temperatur repräsentierenden Temperatursignals θ1 umfaßt der Meßwandler nach einer weiteren Ausgestaltung ferner wenigstens einen thermisch leitend mit der Wandlereinheit 21 gekoppelten Temperatursensor, der - wie auch in Fig. 12 schematisch dargestellt - beispielsweise mit dem Verbindungselement 211 mechanisch verbunden, insb. nämlich an dessen vorbezeichneter Oberfläche 211# angebracht, sein kann.

Nach einer weiteren Ausgestaltung der Erfindung weist das Verdrängerelement 210 eine größte Höhe h₂₁₀, gemessen als eine größte Erstreckung des Verdrängerelements 210 in Richtung einer, insb. zur vorbezeichneten gedachten Hauptträgheitsachse des Verbindungselements 211 parallelen und/oder zur vorbezeichneten gedachten Hauptträgheitsachse des Verbindungselements 212 parallelen und/oder zu einem Durchmesser des Rohrs 10 parallelen, gedachten Hauptträgheitsachse des Verdrängerelements 210, auf, welche größte Höhe h₂₁₀ - wie u.a. auch in Fig. 4 angedeutet - weniger als 100%, insb. weniger als 95%, eines Kalibers D₁₀, nämlich eines Innendurchmessers des Rohrs 10 und/oder mehr als 10%, insb. mehr als 30%, nämlichen Kalibers D₁₀ entspricht. Nach einer anderen Ausgestaltung der Erfindung weist das Verdrängerelement 210 eine kleinste Dicke d₂₁₀, gemessen als eine kleinste Erstreckung nämlichen Verdrängerelements in Richtung einer, insb. zur vorbezeichneten gedachten Hauptträgheitsachse des Verbindungselements 211 senkrechten und/oder zur vorbezeichneten gedachten Hauptträgheitsachse des Verbindungselements 212 senkrechten und/oder zur vorbezeichneten gedachten Längsachse des Rohrs 10 senkrechten, gedachten Hauptträgheitsachse des Verdrängerelements, auf, welche kleinste Dicke d₂₁₀ - wie auch u.a. auch in Fig. 5 angedeutet - weniger als 10%, insb. weniger als 5%, eines Kalibers D₁₀, nämlich eines Innendurchmessers des Rohrs 10 und/oder mehr als 0,5 %, insb. nämlich mehr als 1 %, nämlichen Kalibers D₁₀ entspricht.

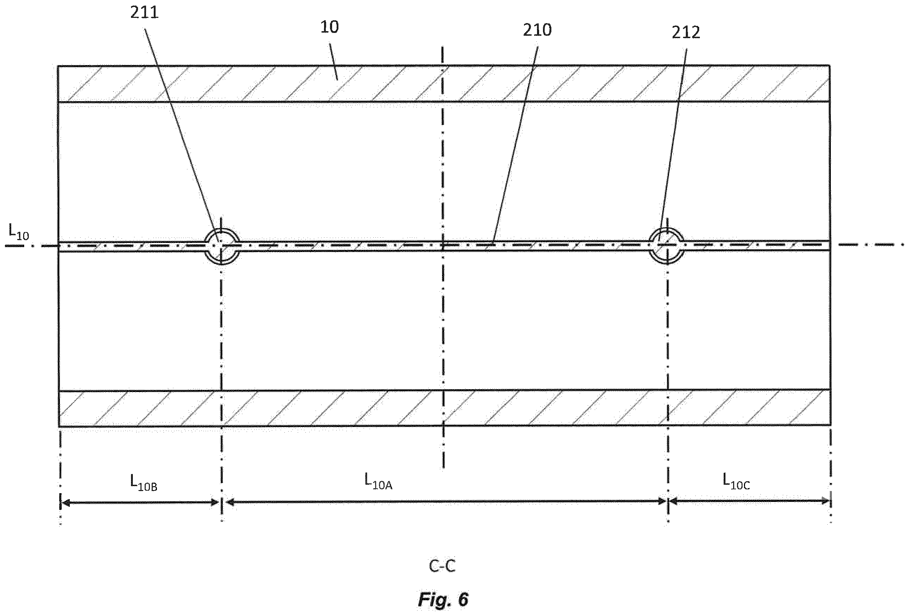

Nach einer weiteren Ausgestaltung der Erfindung weist das Verdrängerelement 210 eine größte Länge L₂₁₀, gemessen als eine größte Erstreckung des Verdrängerelements 210 in Richtung einer, insb. zur vorbezeichneten gedachten Hauptträgheitsachse des Verbindungselements 211 senkrechten und/oder zur vorbezeichneten gedachten Hauptträgheitsachse des Verbindungselements 212 senkrechten und/oder zur vorbezeichneten gedachten Längsachse des Rohrs 10 parallelen, gedachten Hauptträgheitsachse der Wandlereinheit 21, aufweist, welche größte Länge L₂₁₀ - wie auch in Fig. 4 bzw. 6 jeweils angedeutet - mehr als 100%, insb. mehr als 200%, des vorbezeichneten Kalibers D₁₀ des Rohrs 10 und/oder mehr als 100%, insb. mehr als 200%, der vorbezeichneten größten Höhe h₂₁₀ des Verdrängerelments 210 entspricht; dies im besonderen auch derart, daß nämliche größte Länge L₂₁₀ nicht mehr als einem 10-fachen des Kalibers D₁₀ entspricht, beispielsweise kleiner als ein 6-faches des Kalibers D₁₀ ist, und/oder daß das Verdrängerelement 210 ein Höhe-zu-Länge-Verhältnis, gemessen als ein Verhälnis von dessen größter Höhe h₂₁₀ zu dessen größter Länge L₂₁₀, aufweist, das kleiner als eins, beispielsweise nämlich kleiner als 0,5, und/oder größer als 0,1, beispielsweise nämlich größer als 0,3, ist. Nach einer weiteren Ausgestaltung der Erfindung sind das Verdrängerelement 210 und die Verbindungselemente 211, 212 so ausgebildet und angeordnet, daß ein kleinster Abstand L_{210A} zwischen dem Verbindungselement 211 und dem Verbindungselement 212 mehr als 40 % der vorbezeichneten größten Länge L₂₁₀ des Verdrängerelements 210 und/oder weniger als 80% nämlicher der größten Länge L₂₁₀, insb. nämlich 56% der größten Länge L₂₁₀, beträgt. Alternativ oder in Ergänzung können das Verdrängerelement 210 und die Verbindungselemente 211, 212 zudem auch so ausgebildet und angeordnet sein, daß ein kleinster Abstand L_{210B} zwischen dem Verbindungselement 211 und einem - hier stromaufwärts des Verbindungselement 211 verorteten - ersten Ende des Verdrängerelements 210 weniger als als 30 % der vorbezeichneten größten Länge L₂₁₀ des Verdrängerelements 210 mehr als 10% nämlicher der größten Länge L₂₁₀, insb. nämlich 22% der größten Länge L₂₁₀, beträgt und/oder daß ein kleinster Abstand L_{210C} zwischen dem Verbindungselement 212 und einem - hier stromabwärts des Verbindungselement 212 verorteten - zweiten Ende des Verdrängerelements 210 weniger als als 30 % der vorbezeichneten größten Länge L₂₁₀ des Verdrängerelements 210 mehr als 10% nämlicher der Länge L₂₁₀, insb. nämlich 22% der Länge L₂₁₀, beträgt; dies vorteilhaft in der Weise, daß - wie auch in Fig. 4 bzw. 6 jeweils angedeutet bzw. u.a. aus Fig. 10 - der vorbezeichnete Abstand L_{210B} und der vorbezeichnete Abstand L_{210C} gleich groß sind.

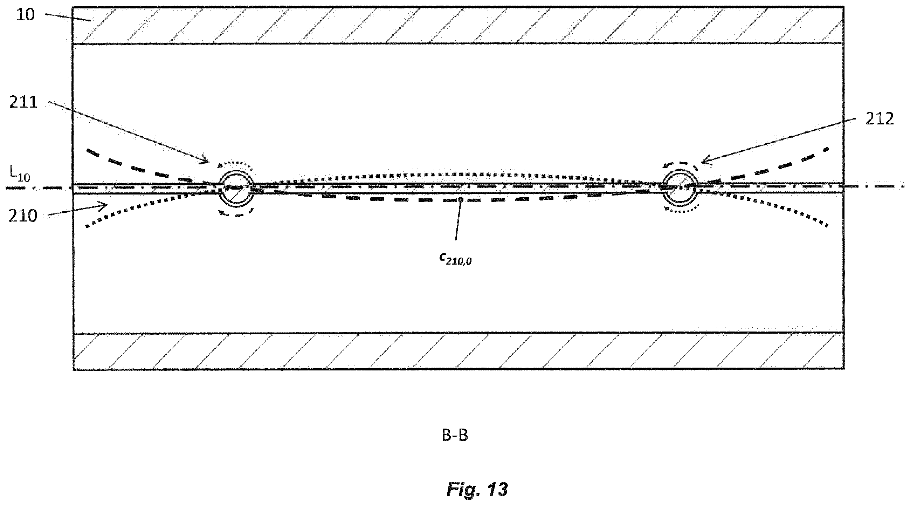

Die Wandlereinheit 21 des erfindungsgemäßen Meßwandlers dient im Prinzip als ein fluidisch-mechanischer, nämlich vom strömenden Fluid darauf ausgeübte Kräfte in entsprechende elastische Verformungen und/oder eigene elastische Verformungen in auf das daran vorbei strömende Fluid einwirkende Kräfte umsetzender Wandler. Im besonderen ist die Wandlereinheit 21 nämlich eingerichtet, von sich im Lumen des Rohrs befindendem Fluid kontaktiert und währenddessen vibrieren gelassen zu werden, derart, daß sowohl deren Verdrängerelement 210 als auch jedes von den vorbezeichneten - hier dem Verbinden des Verdrängerelements 210 bzw. der damit gebildeten Wandlereinheit 21 mit der Wandung des Rohrs 10 dienlichen - Verbindungselementen 211, 212 jeweils zumindest anteilig elastisch verformt werden; dies im besonderen in der Weise, daß, wie auch in Fig. 13 angedeutet bzw. aus einer Zusammenschau der Fig. 4 und 13 ersichtlich, jedes der beiden Verbindungselemente 211, 212 zumindest anteilig um jeweils eine jeweilige gedachte Hauptträgheitsachse verdreht wird und/oder daß das Verdrängerelement 210 zumindest anteilig in Richtung eines zu einer gedachten Hauptträgheitsachse des Verbindungselements 211 und/oder zu einer gedachten Hauptträgheitsachse des Verbindungselements 212 senkrechten Durchmessers D₁₀ des Rohrs 10 aus einer statischen Ruhelage ausgebogen wird. Das Verdrängerelement 210 kann dafür, wie auch in Fig. 3, 5, 4 oder 6, gezeigt, beispielsweise plattenförmig ausgebildet sein; es kann aber beispielsweise auch zylindrisch, insb. nämlich kreis- und/oder hohlzylindrisch, mithin auch hülsen- oder rohrförmig ausgebildet sein. Jedes der beiden, insb. baugleichen, Verbindungselemente 211, 212 wiederum dient jeweils als ein durch die Erregeranordnung 30 eingeprägte - hier jeweils im Abstand und jeweils im wesentlichen senkrecht zur vorbezeichneten Hauptträgheitsachse des Verbindungselements 211 und zur vorbezeichneten Hauptträgheitsachse des Verbindungselements 212 wirkenden - Anregungskräfte in entsprechende Drehmomente bzw. eingeprägte Momente in Lateralbewegungen konvertierender Kraftwandler und kann beispielsweise zumindest teilweise hülsenförmig und/oder zumindest teilweise schalenförmig und/oder zumindest teilweise kreiszylindrisch und/oder zumindest teilweise stabförmig ausgebildet sein. Das Verdrängerelement 210 wie auch die beiden Verbindungselemente 211, 212 können zudem beispielsweise aus dem gleichen Material und/oder jeweils aus einem Metall hergestellt sein.

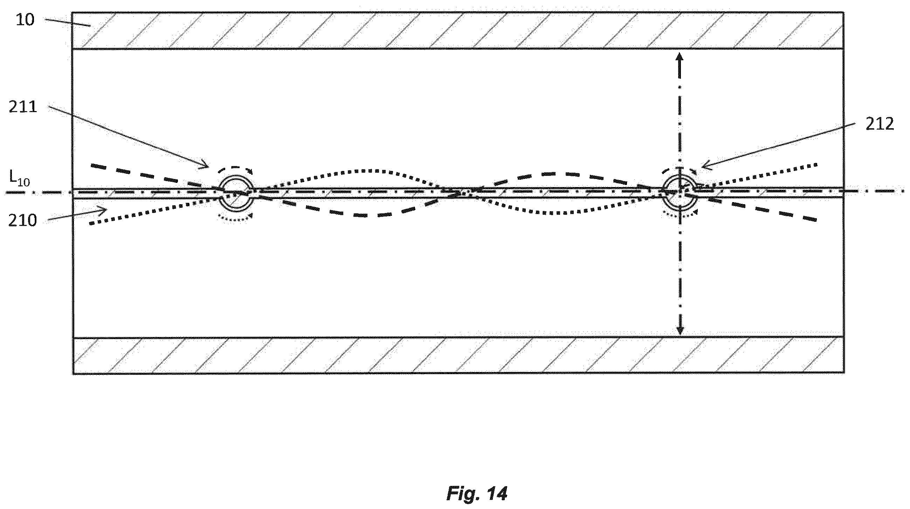

Nach einer weiteren Ausgestaltung der Erfindung ist der vorbezeichnete Nutzmode im besonderen so ausgebildet bzw. so ausgewählt, daß - wie auch in Fig. 13 schematisch dargestellt - das Verbindungselement 211 zumindest anteilig Torsionsschwingungen um eine, insb. zu einer zugehörigen gedachten Hauptträgheitsachse parallele bzw. damit koinzidierende, erste gedachte Torsionsschwingungsachse der Wandlereinheit 21 und das Verbindungselement 212 zumindest anteilig zu nämlichen Torsionsschwingungen des Verbindungselements 211 gegengleiche Torsionsschwingungen um eine, insb. zu einer zugehörigen gedachten Hauptträgheitsachse parallele bzw. damit koinzidierende und/oder zur ersten gedachten Torsionsschwingungsachse der Wandlereinheit 21 parallele, zweite gedachte Torsionsschwingungsachse der Wandlereinheit 21 ausführen. Desweiteren führt das Verdrängerelement 210 - wie auch in Fig. 13 schematisch dargestellt - im Nutzmode zumindest anteilig, insb. mit den Torsionsschwingungen des Verbindungselements 211 und/oder des Verbindungselements 212 gekoppelte und/oder dazu jeweils frequenzgleiche, Biegeschwingungen um eine, insb. zu einer zugehörigen gedachte Hauptträgheitsachse parallele und/oder in Strömungsrichtung verlaufende, gedachte Biegeschwingungsachse der Wandlereinheit 21 aus. Die vorbezeichneten Nutz-Schwingungen der Wandlereinheit 21, nicht zuletzt die Biegeschwingungen des Verdrängerelements 112 im Nutzmode, sind ferner geeignet bzw. dienen dazu, im durch das Rohr strömenden Fluid von dessen Massendurchflußrate m abhängige Corioliskräfte zu induzieren. Nämliche Corioliskräfte wiederum bewirken entsprechende Coriolis-Schwingungen, nämlich den Nutz-Schwingungen überlagerte und/oder damit gekoppelte mechanische Schwingungen des Meßwandlers in einem - in Fig. 14 schematisch dargestellten - Coriolismode. Im Coriolismode führt das Verdrängerelement 21, wie auch aus der Fig. 14 ersichtlich, zumindest anteilig von dessen Biegeschwingungen im Nutzmode abweichende, insb. mit nämlichen Biegeschwingungen im Nutzmode gekoppelte bzw. Nutz-Schwingungsfrequenz aufweisende, Biegeschwingungen um die vorbezeichnete, in Strömungsrichtung verlaufende gedachte Biegeschwingungsachse der Wandlereinheit 21 aus. Zudem führen, wie auch in Fig. 14 angedeutet, in nämlichem Coriolismode das Verbindungselement 211 - zumindest anteilig - dessen Torsionsschwingungen im Nutzmode überlagerte bzw. Nutz-Schwingungsfrequenz aufweisende, insb. mit den Biegeschwingungen des Verdrängerelements im Coriolismode gekoppelte, Torsionsschwingungen um die vorbezeichnete erste gedachte Torsionsschwingungsachse der Wandlereinheit 21 und das Verbindungselement 212 - zumindest anteilig - dessen Torsionsschwingungen im Nutzmode überlagerte, insb. mit den Biegeschwingungen des Verdrängerelements im Coriolismode gekoppelte bzw. Nutz-Schwingungsfrequenz aufweisende, Torsionsschwingungen um die vorbezeichnete zweite gedachte Torsionsschwingungsachse der Wandlereinheit 21 aus; dies im besonderen in der Weise, daß im Ergebnis zwischen den Torsionsschwingungen des Verbindungselements 211 mit Nutz-Schwingungsfrequenz und den Torsionsschwingungen des Verbindungselements 212 mit Nutz-Schwingungsfrequenz eine Phasendifferenz Δϕ existiert, die von der Massendurchflußrate m des Fluids abhängig ist.

Nach einer weiteren Ausgestaltung der Erfindung dient die Sensoranordnung 40 daher im besonderen dazu, wie aus einer Zusammenschau der Fign. 3, 4, 5, 6 und 13 ohne weiteres ersichtlich, mechanische Schwingungen zumindest eines der Verbindungselemente 211, 212, mithin mechanische Schwingungen des Verbindungselements 211 und/oder mechanische Schwingungen des Verbindungselements 212 zu erfassen bzw. das Schwingungssignal s1 zu generieren, daß nämliches Schwingungssignal s1 bzw. dessen Meßkomponente zumindest Torsionsschwingungen des Verbindungselement 211 bzw. zumindest Torsionsschwingungen des Verbindungselements 212 repräsentiert; dies im besonderen in der Weise, daß die Sensoranordnung 40 zumindest die die Nutz-Schwingungsfrequenz aufweisenden Torsionsschwingungen des Verbindungselements 211 zu erfaßt und das Schwingungssignal s1 mit der nämliche Torsionsschwingungen repräsentierenden Meßkomponente generiert und/oder die Sensoranordnung 40 zumindest die die Nutz-Schwingungsfrequenz aufweisenden Torsionsschwingungen des Verbindungselements 212 erfaßt und das Schwingungssignal s2 mit der nämliche Torsionsschwingungen repräsentierenden Meßkomponente generiert, insb. derart, daß zwischen der Meßkomponente des Schwingungssignals s1 und der Meßkomponente des Schwingungssignals s2 die vorbezeichnete, von der Massendurchflußrate m des Fluids FL abhängige Phasendifferenz Δϕ ausgebildet ist.

Bei der Wandlereinheit 21 handelt es sich um einen mechanischen Oszillator, der naturgemäß eine Vielzahl verschiedener, nämlich sowohl voneinander abweichende Eigenformen als auch voneinander abweichende Eigen- bzw. Resonanzfrequenzen aufweisender Schwingungsmoden aufweist. Im besonderen wohnen der Wandlereinheit 21 auch verschiedene, beispielsweise nämlich sowohl voneinander abweichende Eigenformen als auch voneinander abweichende Eigen- bzw. Resonanzfrequenzen aufweisende Biege-/Torsionsschwingungsmoden inne, in welchem jeweiligen Biege-/Torsionsschwingungsmode das Verbindungselement 211 jeweils Torsionsschwingungen um eine, insb. zur vorbezeichneten gedachten Hauptträgheitsachse des Verbindungselements 211 parallele bzw. damit koinzidierende, erste gedachte Torsionsschwingungsachse der Wandlereinheit 21 und das Verbindungselement 212 jeweils Torsionsschwingungen um eine, insb. zur vorbezeichneten gedachten Hauptträgheitsachse des Verbindungselements 212 parallele bzw. damit koinzidierende und/oder zur ersten gedachten Torsionsschwingungsachse der Wandlereinheit 21 parallele, zweite gedachte Torsionsschwingungsachse der Wandlereinheit 21 ausführen und in welchem jeweiligen Biege-/Torsionsschwingungsmoden das Verdrängerelement 210 jeweils sowohl mit den jeweiligen Torsionsschwingungen des Verbindungselements 211 als auch mit den jeweiligen Torsionsschwingungen des Verbindungselements 212 gekoppelte Biegeschwingungen um eine, insb. zur vorbezeichneten zugehörigen gedachten Hauptträgheitsachse parallele und/oder in Strömungsrichtung verlaufende, gedachte Biegeschwingungsachse der Wandlereinheit 21 ausführt. Ein eine niedrigste Eigenfrequenz bzw. eine niedrigste Resonanzfrequenz f₀ aller Biege-/Torsionsschwingungsmoden der Wandlereinheit 21 aufweisender Biege-/Torsionsschwingungsmode entspricht dabei einem Biege-/Torsionsschwingungsgrundmode nämlicher Wandlereinheit 21, wobei eine Eigenform nämlichen Biege-/Torsionsschwingungsgrundmodes bzw. maximale Auslenkungen davon der in Fig. 13 schematisch dargestellt Schwingungsform entsprechen können, mithin nämliche Schwingungen im Biege-/Torsionsschwingungsgrundmode als Nutzschwingungen dienen können. In nämlichen Biege-/Torsionsschwingungsgrundmode führt demnach das Verdrängerelement 210 lediglich einen einzigen Schwingungsbauch aufweisende symmetrische Biegeschwingungen um eine zugehörige statische Ruhelage aus und führen die Verbindungelemenete 211, 212 zueinander gegengleiche Torsionsschwingungen um die jeweils zugehörige der vorbezeichneten Torsionsschwingungsachsen der Wandlereinheit 21 aus.

Nach einer weiteren Ausgestaltung der Erfindung ist ferner vorgesehen, daß eine die Eigenfrequenz f_{21,0} des Biege-/Torsionsschwingungsgrundmode bestimmende Gesamt-Federkonstante c_{21,0} (→ 2π • f_{21,0} = √[c_{21,0} / m_{21,0}]) der Wandlerenheit 21 - die sich im wesentlichen aus einer Kombination der dazu beitragenden (Biege-)Federkonstante c_{210,0} des Verdrängerelements 210 und der dazu beitragenden (Torsions-)Federkonstanten der Verbindungselemente 211, 212 ergibt - mehr als 10% und/oder weniger als 50% der vorbezeichneten Federkonstante c_{210,0} des Verdrängerelements 210 beträgt (c_{21,0} > 0,1 • c_{210,0}, c_{21,0} < 0,5 • c_{210,0}). Bei dem bei dem in den Fign. 3, 5, 4, 6 oder 13 gezeigten Meßwandler kann die Gesamt-Federkonstante c_{21,0} vereinfacht als eine Reihenschaltung der vorbezeichneten (Einzel-)Federkonstante (c_{210,0}) des Verdrängerelements 210 mit einer Parallelschaltung der vorbezeichneten (Einzel-)Federkonstanten (c_{211,0}; c_{212,0}) der beiden Verbindungselemente 211, 212 aufgefaßt, mithin näherungsweise auch mit c_{21,0} = c_{210,0} • [c_{211,0} + c₂₁₂,₀] / [c_{210,0} + c_{211,0} + c_{212,0}] berechnet werden. Die vorbezeichneten (Einzel-)Federkonstanten (c_{210.0}; c_{211,0}; c_{212,0}) wiederum werden durch jeweiligen geometrischen Abmessungen des Verdrängerelements 210 bzw. der Verdrängerelemente 211, 211 und dem sich aus deren jeweiligen Material ergebenden Elastizitätsmodul E₂₁₀, E₂₁₁, E₂₁₂ und/oder Schubmodul G₂₁₀ , G₂₁₁, G₂₁₂ bestimmt. Darüberhinaus können die vorbezeichneten Federkonstanten bzw. die vorbezeichneten Eigen- und Resonanzfrequenzen ohne weiteres auch Computer basiert hochgenau numerisch berechnet werden, beispielsweise mittels etablierter Finite-Elemente-Berechnungsverfahren (FEM). Ebenso kann auch eine die vorbezeichnete Eigenfrequenz f_{21,0} des Biege-/Torsionsschwingungsgrundmode bestimmende Gesamt-Masse m_{21,0} der Wandlereinheit 21 entsprechend ermittelt, beispielsweise nämlich Computer basiert bestimmt bzw. entsprechend ausgemessen, werden.

Nach einer weiteren Ausgestaltung der Erfindung ist vorgesehen, daß der vorbezeichnete Biege-/Torsionsschwingungsgrundmode der Wandlereinheit 21 auch als Nutzmode dient bzw. daß der Nutzmode - gänzlich oder zumindest anteilig - nämlichem Biege-/Torsionsschwingungsgrundmode entspricht. Dementsprechend ist die Erregeranordnung 30 nach einer weiteren Ausgestaltung der Erfindung eingerichtet, die Nutz-Schwingungen mit einer mit einer momentanen Resonanzfrequenz des Biege-/Torsionsschwingungsgrundmode der Wandlereinheit 21 übereinstimmenden bzw. davon um weniger als 2 Hz abweichenden Schwingfrequenz anzuregen und/oder aufrechtzuerhalten, bzw. nämlichen Biege-/Torsionsschwingungsgrundmode, insb. mit dessen vorbezeichneten momentanen Resonanzfrequenz, anzuregen und/oder aufrechtzuerhalten. Nicht zuletzt für den vorbezeichneten Fall, daß der Biege-/Torsionsschwingungsgrundmode der Wandlereinheit 21 als Nutzmode dient, kann die Wandlereinheit 21 vorteilhaft ferner so ausgestaltet sein, daß die Eigenfrequenz f_{21,0} nämlichen Biege-/Torsionsschwingungsgrundmodes, mithin die Nutz-Schwingungsfrequenz f_{exc} nicht weniger als 100 Hz und/oder nicht mehr als 1000 Hz beträgt.

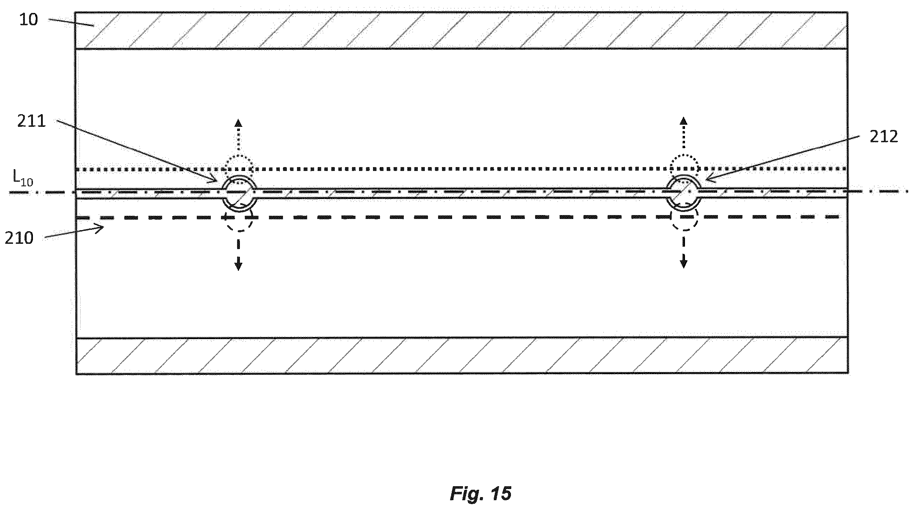

Neben den vorbezeichneten Biege-/Torsionsschwingungsmoden weist die Wandlereinheit 21 naturgemäß eine Vielzahl weiterer Schwingungsmoden auf, die jeweils eine von den Eigenformen der Biege-/Torsionsschwingungsmoden abweichende Eigenformen und von den Eigen- oder Resonanzfrequenzen der Biege-/Torsionsschwingungsmoden abweichende Eigen- bzw. Resonanzfrequenzen aufweisen. Im besonderen können der Wandlereinheit 21 auch verschiedene, beispielsweise nämlich sowohl voneinander abweichende Eigenformen als auch voneinander abweichende Eigen- bzw. Resonanzfrequenzen aufweisende, Suspensionsmoden innewohnen. Jeder der vorbezeichneten Suspensionsschwingungsmoden ist dadurch charakterisiert, daß das Verbindungselement 211 jeweils Biegeschwingungen um eine, insb. zur vorbezeichnten ersten gedachte Torsionsschwingungsachse der Wandlereinheit 21 senkrechte, erste gedachte Biegeschwingungsachse der Wandlereinheit 21 und das Verbindungselement 212 jeweils Biegeschwingungen um eine, insb. zur vorbezeichneten zweiten gedachte Torsionsschwingungsachse der Wandlereinheit 21 senkrechte, zweite gedachte Biegeschwingungsachse ausführen, und daß das Verdrängerelement 210 jeweils um eine statische Ruhelage oszilliert, insb. aus nämlicher Ruhelage verschoben und/oder um nämliche Ruhelage verdreht bzw. verschwenkt wird. Im besonderen wohnt der Wandlereinheit 21 auch ein Suspensionsschwingungsgrundmode, nämlich ein eine niedrigste Eigen- bzw. Resonanzfrequenz aller Suspensionsschwingungsmoden der Wandlereinheit 21 aufweisender Suspensionsschwingungsmoden inne, von dem in Fig. 15 eine Eigenform bzw. maximale Auslenkungen davon schematisch dargestellt sind. Nicht zuletzt für den vorbeschriebenen Fall, daß der vorbezeichneten Biege-/Torsionsschwingungsgrundmode der Wandlereinheit 21 als Nutzmode dient, ist nach einer weiteren Ausgestaltung der Erfindung zwecks Vermeidung unerwünschter Störungen der Nutzschwingungen die Eigenfrequenz nämlichen Suspensionsschwingungsgrundmodes der Wandlereinheit 21 größer eingestellt als die Eigenfrequenz nämlichen Biege-/Torsionsschwingungsgrundmodes der Wandlereinheit 21; dies im besonderen in der Weise, daß die Eigenfrequenz des Suspensionsschwingungsgrundmodes mehr als 110% der Eigenfrequenz des Biege-/Torsionsschwingungsgrundmode beträgt und/oder um mehr als 10 Hz größer als die Eigenfrequenz des Biege-/Torsionsschwingungsgrundmodes ist. Eine jeweilige, die Eigenfrequenz des Suspensionsschwingungsgrundmodes bestimmende (Biege-)Federkonstante jedes der Verbindungselemente 211, 212 wie auch eine entsprechende Gesamt-Masse der Wandlereinheit 21 können wiederum anhand geometrischer Abmessungen Wandlereinheit 21 vorab berechnet, beispielsweise nämlich Computer basiert bestimmt werden.

Das Verdrängerelement 210 selbst weist ebenfalls eine Vielzahl natürlicher Schwingungsmoden auf, nicht zuletzt auch solche Schwingungsmoden, die jeweils wenigstens zwei linienartige und/oder als Knotenlinie ausgebildete Knotenflächen aufweisen. Im besonderen kann dem Verdrängerelement 210 zumindest auch ein solcher natürlicher Schwingungsmode innewohnen, der eine- beispielsweise linienartige und/oder als Knotenlinie ausgebildete - erste Knotenfläche sowie wenigstens eine von nämlicher ersten Knotenfläche beabstandete - beispielsweise auch dazu parallel verlaufende und/oder linienartige und/oder als Knotenlinie ausgebildete - zweite Knotenfläche aufweist. Nach einer weiteren Ausgestaltung sind das Verbindungselement 211 und das Verdrängerelement 210 ferner so angeordnet und miteinander verbunden, daß eine gedachte Hauptträgheitsachse nämlichen Verbindungselements 211 und die vorbezeichnete erste Knotenfläche miteinander fluchten, beispielsweise nämlich in einer gedachten Verlängerung miteinander koinzidieren, und/oder sind das Verbindungselement 212 und das Verdrängerelement 210 so angeordnet und miteinander verbunden, daß eine gedachte Hauptträgheitsachse nämlichen Verbindungselements 212 und die zweite Knotenfläche miteinander fluchten, beispielsweise nämlich in einer gedachten Verlängerung miteinander koinzidieren. Vorteilhaft können die vorbezeichneten für die Positionierung der Verbindungselemente 211, 212 gewählten ersten und zweiten Knotenflächen beispielsweise Knotenflächen eines solchen natürlichen Schwingungsmode des Verdrängerelements 210, insb. nämlich eines Biegeschwingungsmode des Verdrängerelements 210 sein, bei dem das Verdrängerelement 210 solche Schwingungsbewegungen ausführt, die zwischen den beiden vorbezeichneten Knotenflächen lediglich einen einzigen Schwingungsbauch aufweisen. Besonders vorteilhaft kann es sich bei diesen ersten und zweiten Knotenflächen - wie auch in Fig. 13 schematisch dargestellt - auch um die Knotenflächen eines lediglich diese zwei Knotenflächen, mithin keine weiteren Knotenflächen aufweisenden bzw. symmetrischen Biegeschwingungsgrundmode des Verdrängerelements 210 handeln. Für den erwähnten Fall, daß das Verdrängerelement 210 im wesentlichen plattenförmig ausgebildet ist, liegt die erste Knotenfläche - wie aus Fig. 13 bzw. einer Zusammenschau der Fig. 6 und 13 ersichtlich - dann etwa im Bereich von 22% der vorbezeichneten größten Länge L₂₁₀ des Verdrängerelements 210 und liegt die zweite Knotenfläche - wie ebenfalls aus Fig. 13 bzw. einer Zusammenschau der Fig. 6 und 13 ersichtlich - dann etwa im Bereich von 78% nämlicher Länge L₂₁₀ bzw. beträgt ein Abstand zwischen den ersten und zweiten Knotenfläche dann etwa 56% nämlicher Länge L₂₁₀. Dementsprechend sind bei einem so geformten, gleichwohl eine größte Länge L₂₁₀ von 250 mm (Millimeter), eine größte Höhe h₂₁₀ von 80 mm sowie eine größte Dicke d₂₁₀ von 2,4 mm aufweisenden, mithin für ein Rohr 10 mit einem Kaliber von beispielsweise ca. 100 mm geeigneten Verdrängerelement 210 nämliche Knotenlinien etwa 140 mm voneinander beabstandet, wobei für den erwähnten Fall, daß das Verdrängerelement 210 zudem aus einem Stahl besteht, die Eigenfrequenz des Biegeschwingungsgrundmodes etwa 200 Hz beträgt.

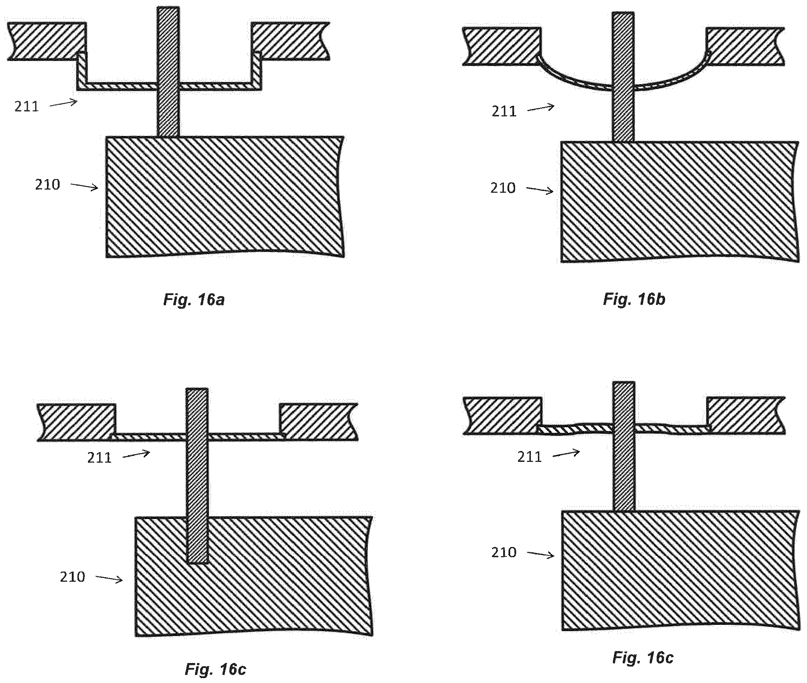

Um mittels der Verbindungselemente der Wandlereinheit 21 einerseits das Lumen bzw. die Wandung des Rohrs 10 fluiddicht und zudem auch ausreichend druckdicht nach außen abzudichten und anderseits mittels der Verbindungselemente eine möglichst (torsions-)weiche Ankopplung des Verdrängerelements 210 an die - vergleichsweise starre - Wandung des Rohrs zu ermöglichen sind das Verbindungselement 211 und/oder das Verbindungselement 212 nach einer weiteren Ausgestaltung der Erfindung zumindest teilweise zylindrisch, insb. nämlich - wie u.a. auch aus einer Zusammenschau der Fig. 4, 5, 6 und 7 ersichtlich - teilweise hohlzylindrisch, ausgebildet; die Verbindungselemente der Wandlereinheit können aber auch andere Formen aufweisen, beispielsweise nämlich - wie auch in Fig. 16a bzw. Fig. 16b schematisch dargestellt - jeweils teilweise schalenförmig bzw. kugelschalenförmig, und/oder - wie auch in Fig. 16c bzw. Fig. 16d schematisch dargestellt - jeweils teilweise scheibenförmig bzw. kreis- oder ringscheibenförmig ausgebildet sein. Desweiteren kann die Wandlereinheit 21 vorteilhaft so ausgebildet sein, daß die vorbezeichnete gedachte Hauptträgheitsachse des Verbindungselements 211 und die vorbezeichnete gedachte Hauptträgheitsachse des Verbindungselements 212 zueinander parallel sind. Alternativ oder in Ergänzung kann die Wandlereinheit, wie auch in Fig. 4, 5 und 6 jeweils dargestellt oder aus deren Zusammenschau ohne weiteres ersichtlich, zudem zumindest bezüglich einer zugehörigen, beispielsweise auch zur vorbezeichneten gedachten Hauptträgheitsachse des Verbindungselements 211 und/oder zur vorbezeichneten gedachten Hauptträgheitsachse des Verbindungselements 212 parallelen, gedachten Hauptträgheitsachse achsen- bzw. spiegelsymmetrisch ausgebildet sein. Nach einer weiteren Ausgestaltung der Erfindung ist ferner vorgesehen, daß das Verdrängerelement 210 und/oder Verbindungselement 211 und/oder das Verbindungselement 212 zumindest anteilig, insb. überwiegend oder vollständig, aus einem Metall, beispielsweise einem Edelstahl bzw. einer Nickelbasislegierung, besteht bzw. bestehen. Alternativ oder in Ergänzung können das Verbindungselement 211 und das Verdrängerelement 210 und/oder das Verbindungselement 211 und das Verdrängerelement 210 und/oder das Verbindungselement 211 und das Verbindungselement 212 aus dem gleichem Material, beispielsweise nämlich gleichem Metall, bestehen. Nicht zuletzt für den vorbezeichneten Fall, daß das Verdrängerelement 210 und die Verbindungselemente 211, 212 metallisch sind können diese beispielsweise mittels Schweiß- oder Lötverbindungen miteinander verbunden sein. Alternativ oder in Ergänzung ist ferner vorgesehen, die Wandlereinheit, insb. nämlich deren Verbindungselement 211 und/oder deren Verbindungselement 212, zumindest anteilig durch ein additives Fertigungsverfahren, beispielsweise nämlich ein Freiraumverfahren und/oder ein Pulverbettverfahren, herzustellen. ALs Fertigungsverfahren können hierfür beispielsweise selektives Laserschmelzen (SLM), selektives Lasersintern (SLS) und/oder Elektronenstrahlschmelzen (Electron Beam Melting = EBM) angewendet werden.

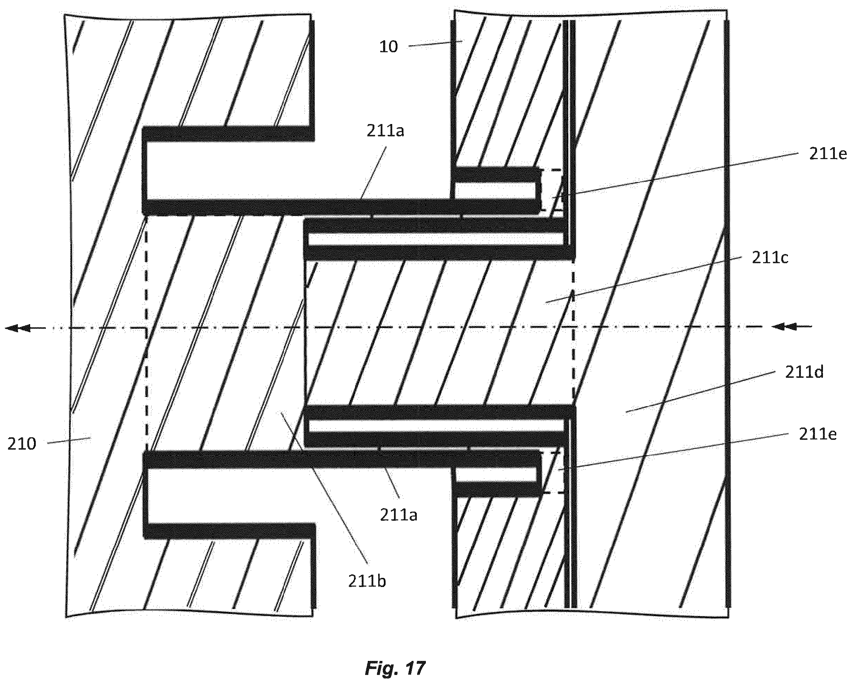

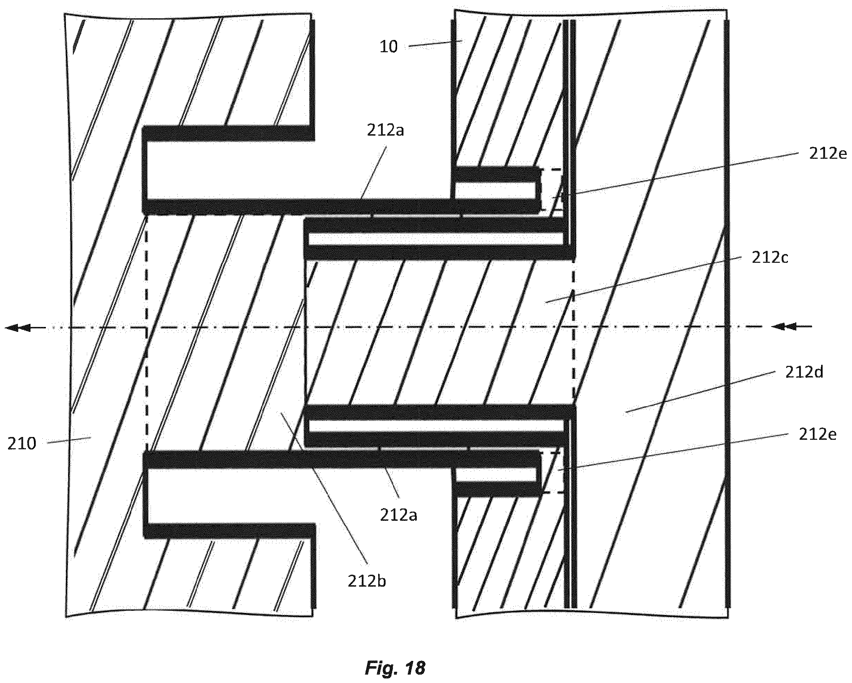

Nach einer weiteren Ausgestaltung der Erfindung weist das Verbindungselement 211, wie auch in Fig. 17 angedeutet, ein, insb. dessen vorbezeichnete erste Oberfläche 211+ sowie die dieser gegenüberliegende vorbezeichnete zweite Oberfläche 211# jeweils zumindest anteilig bildendes und/oder bezüglich einer zugehörigen Hauptträgheitsachse rotationssymmetrisches, erstes Teilsegment 210a auf. Nämliches Teilsegment 211a ist kann, wie u.a. aus einer Zusammenschau der Fig. 4, 5, 6 und 17 ersichtlich, vorteilhaft zumindest teilweise hohlzylindrisch bzw. zumindest teilweise röhren- bzw. hülsenförmig ausgebildet sein, beispielsweise derart, daß eine Wandstärke nämlichen Teilsegments 211a weniger als 2 mm beträgt und/oder kleiner als eine Wandstärke der Wandung des Rohrs 10 ist; alternativ oder in Ergänzung kann es auch zumindest teilweise schalenförmig und/oder zumindest teilweise scheibenförmig ausgebildet sein. Das Teilsegment 210a ist im besonderen dafür vorgesehen bzw. eingerichtet, zumindest anteilig elastisch verformt, insb. nämlich um eine zur vorbezeichneten ersten gedachten Torsionsschwingungsachse der Wandlereinheit 21 parallele bzw. koinzidente zugehörige gedachte Hauptträgheitsachse verdreht, zu werden; dies im besonderen in der Weise, daß nämliches - hier mithin als eine Drehmomente übertragende, gelegentlich auch als Drehstab bezeichnete, Torsionsfeder dienliches - Teilsegment 210a zumindest bei im Nutzmode schwingender Wandlereinheit 21 im Vergleich zu anderen Teilsegmenten des Verbindungselements 211 einen größten Beitrag zur Verdrehung des Verbindungselements 211 um die erste gedachte Torsionsschwingungsachse der Wandlereinheit 21 liefert bzw. bei im Nutzmode schwingender Wandlereinheit 21 von allen Teilsegmente des Verbindungselements 211 einen größten Verdrehwinkel aufweist. Das Verbindunsgelement 211 ist vorteilhaft zudem so angeordnet, daß die vorbezeichnete gedachte Hauptträgheitsachse des Teilsegments 211a zur vorbezeichneten ersten gedachten Torsionsschwingungsachse der Wandlereinheit 21 parallel verläuft bzw. damit koinzidiert. Das Teilsegment 211a kann zudem beispielsweise auch als eine Biegekräfte und/oder -momente aufnehmende bzw. lateralen Verschiebungen des Verdrängerelements 210 aus einer zugehörigen statischen Ruhelage ermöglichende, gleichwohl nämlichen lateralen Verschiebungen entgegenwirkende bzw. diese hinsichtlich einer Amplitude begrenzende Biegefeder dienen. Die mittels des Teilsegments 211a jeweils gebildete Torsions- bzw. die Biegefeder wirksamen Federkonstanten können anhand des Elastizitäts- bzw. Schubmoduls des für das Teilsegment 211a verwendeten Materials sowie der Geometrie des Teilsegments 211a, insb. nämlich einer Länge des Teilsegments 211a, einer Formung des die vorbezeichnete Hauptträgheitsachse definierenden Querschnitts des Teilsegments 211a bzw. der vorbezeichneten Wandstärke, genau ermittelt, beispielsweise mittels Finite Elemente Methode (FEM) Computer basiert berechnet, werden bzw. durch deren Auswahl an die durch die Wandlereinheit zu erfüllenden Anforderungen entsprechend angepaßt werden. Nicht zuletzt für den vorbeschriebenen Fall, daß das Verbindungselement 212 baugleich wie das Verbindungselement 211 ausgebildet ist, kann nämliches Verbindungselement 212, wie auch in Fig. 18 schematisch dargestellt, ferner ebenfalls ein, insb. dessen vorbezeichnete Oberflächen 212+, 212# jeweils zumindest anteilig bildendes und/oder als Torsionsfeder dienliches und/oder zumindest teilweise hülsenförmiges und/oder zumindest teilweise schalenförmiges und/oder zumindest teilweise scheibenförmiges und/oder zumindest teilweise hohlzylindrisches und/oder zum Teilsegment 211a baugleiches, erstes Teilsegment 212a aufweisen.

Das Verbindungselement 211 weist, wie auch in Fig. 17 gezeigt, ferner ein, insb. dessen vorbezeichnete erste Oberfläche 211+ zumindest anteilig bildendes, sich ausgehend von einem an das Teilsegment 211a grenzenden ersten Ende bis zu einem davon entfernten, an das Verdrängerelement 210 grenzenden zweiten Ende erstreckendes, beispielsweise bezüglich einer zugehörigen Hauptträgheitsachse rotationssymmetrisches und/oder zylindrisches, insb. nämlich zumindest teilweise kreiszylindrisches und/oder stab- bzw. stangenförmiges, zweites Teilsegment 211b auf. Nämliches Teilsegment 211b und das Verdrängerelement 210 können stoffschlüssig miteinander verbunden, beispielsweise nämlich miteinander verschweißt oder miteinander verlötet, sein. Wie u.a. aus einer Zusammenschau der Fig. 5, 4, 6 und 17 ersichtlich, ist das Teilsegment 211b zudem mit seinem zweiten Ende, insb. stoffschlüssig, mit einem ersten Ende des Teilsegments 211a verbunden; dies im besonderen in der Weise, daß nämliches - hier hohlzylindrisch bzw. hülsenförmig ausgebildete - Teilsegment 211a an dessen ersten Ende mittels des Teilsegments 211b zudem fluiddicht verschlossen ist. Das Teilsegment 211b ist u.a. dafür eingerichtet, eine Drehbewegung eines an das zweite Ende des Verbindungselements 211 - hier nämlich an das zweite Ende des Teilsegments 211b - grenzenden ersten Teilsegments des Verdrängerelements 210 um die vorbezeichnete erste gedachte Torsionsschwingungsachse der Wandlereinheit 21 zum Teilsegment 211a zu übertragen, insb. nämliche Drehbewegung des ersten Teilsegments des Verdrängerelements 210 in eine Verdrehung des Teilsegments 211a des ersten Verbindungselements um die vorbezeichnete erste gedachte Torsionsschwingungsachse zu wandeln. Dementsprechend kann - wie auch in Fig. 18 angedeutet - zudem auch das Verbindungselement 212 ein, insb. dessen vorbezeichnete Oberfläche 212+ zumindest anteilig bildendes, sich ausgehend von einem an das Teilsegment 212a grenzenden ersten Ende bis zu einem davon entfernten, an das Verdrängerelement 210 grenzenden zweiten Ende erstreckendes zylindrisches, beispielsweise auch zumindest teilweise kreiszylindrisches und/oder stabförmiges und/oder zum Teilsegment 211b baugleiches, zweites Teilsegment 212b aufweisen.

Desweiteren weist das Verbindungselement 211 ein, insb. dessen vorbezeichnete zweite Oberfläche 211# zumindest anteilig bildendes, sich ausgehend von einem an das Teilsegment 211b, insb. nämlich dessen erstes Ende, grenzenden ersten Ende - hier durch das zumindest teilweise hohlzylindrische Teilsegment 211a und weiter durch die Wandung des Rohres hindurch - bis zu einem von nämlichen ersten Ende entfernten - hier außerhalb des Rohres verorteten - zweiten Ende erstreckendes drittes Teilsegment 211c auf. Nämliches Teilsegment 211c ist im besonderen dafür vorgesehen bzw. eingerichtet, eine Drehbewegung des Teilsegments 211b um eine, insb. zur vorbezeichneten ersten gedachte Torsionsschwingungsachse parallele bzw. koinzidente, zugehörige gedachte Hauptträgheitsachse nach außerhalb des Rohrs zu führen, insb. nämlich zur Sensoranordnung weiterzuleiten, und/oder ein von außerhalb des Rohres eingeleitetes Drehmoment in eine Drehbewegung des Teilsegments 211b zu wandeln bzw. eine durch die Erregeranordnung 40 bewirkte Drehbewegung nämlichen Teilsegments 211c um die vorbezeichnete zugehörige gedachte Hauptträgheitsachse zum Teilsegment 211b zu übertragen. Das Teilsegment 211c kann beispielsweise bezüglich einer zugehörigen Hauptträgheitsachse rotationssymmetrisch und/oder zylindrisch, insb. zumindest teilweise kreiszylindrisch und/oder stabförmig, ausgebildet sein. Wie aus einer Zusammenschau der Fig. 5, 4, 6 und 17 ohne weiteres ersichtlich, können zumindest das Teilsegment 211a und das Teilsegment 211c vorteilhaft zudem koaxial angeordnet sein. Die Teilsegmente 211b und 211c können beispielsweise durch Löten oder Schweißen stoffschlüssig miteinander verbunden sein; nämliche beiden Teilsegmente 211b, 211c können aber beispielsweise auch Bestandteile ein und desselben, insb. durch ein additives Fertigungsverfahren hergestellten und/oder zumindest auch das Teilsegment 211a involvierenden, monolithischen Formteils sein. Analog dazu kann auch das Verbindungselement 212 - wie auch in Fig. 18 angedeutet - ein, insb. dessen vorbezeichnete Oberfläche 212# zumindest anteilig bildendes, sich ausgehend von einem an das vorbezeichnete Teilsegment 212b, insb. nämlich dessen erstes Ende, grenzenden ersten Ende bis zu einem davon entfernten zweiten Ende erstreckendes zylindrisches, insb. zumindest teilweise kreiszylindrisches und/oder stabförmiges und/oder dem Teilsegment 211c baugleiches, drittes Teilsegment 212c aufweisen.

Nach einer weiteren Ausgestaltung der Erfindung weist das Verbindungselement 211 ferner ein, insb. einen Hebelarm bildendes bzw. als Kraftwandler dienliches, viertes Teilsegment 211d auf, das an das Teilsegment 211c des Verbindungselements 211, insb. nämlich dessen zweites Ende, grenzt bzw. das damit, insb. stoffschlüssig, verbunden ist. Zudem ist das, insb. zumindest teilweise stabförmig und/oder zumindest teilweise plattenförmig ausgebildete, Teilsegment 211d, wie in Fig. 17 dargestellt bzw. u.a. auch aus einer Zusammenschau der Fig. 5 und 17 ersichtlich, außerhalb des Rohres 10 positioniert, insb. zumindest abschnittsweise parallel zur Wandung des Rohrs 10 verlaufend. Nämliches Teilsegment 211d kann mit dem Teilsegment 211c beispielsweise durch Löten oder Schweißen stoffschlüssig verbunden sein; die beiden Teilsegmente 211c und 211d können aber beispielsweise auch Bestandteile ein und desselben, insb. durch ein additives Fertigungsverfahren hergestellten und/oder das vorbezeichnete Teilsegmente 211b und ggf. auch das vorbezeichnete Teilsegment 211a involvierenden, monolithischen Formteils sein. Nach einer weiteren Ausgestaltung der Erfindung weist auch das Verbindungselement 212 ein an das vorbezeichnete Teilsegment 212c, insb. nämlich dessen zweites Ende, grenzendes, außerhalb des Rohres 10 positioniertes, insb. zumindest abschnittsweise parallel zur Wandung des Rohrs verlaufendes, viertes Teilsegment 212d auf. Nämliches Teilsegment 212d kann ebenfalls dafür vorgesehen sein, einen Hebelarm zu bilden bzw. kann ebenfalls zumindest teilweise stabförmig und/oder plattenförmig bzw. zum Teilsegment 211e baugleich ausgebildet sein. Ferner können zumindest nämliches Teilsegment 212d und das vorbezeichnete Teilsegment 211d, wie auch in Fig. 3 und 5 angedeutet bzw. auch aus einer Zusammenschau der Fig. 3, 5, 8, 17 und 18 ersichtlich, Bestandteile ein und desselben monolithischen Formteils sein.

Nach einer weiteren Ausgestaltung ist ferner vorgesehen, daß das Verbindungselement 211 zudem ein sich ausgehend von einem an das Teilsegment 211a, insb. nämlich dessen vom Teilsegment 211b entferntes zweites Ende, grenzenden ersten Rand bis zu einem davon entfernten, an die Wandung des Rohrs 10 grenzenden zweiten Rand erstreckendes - insb. sowohl die vorbezeichnete erste Oberfläche 211+ als auch die vorbezeichnete zweite Oberfläche 211# jeweils zumindest anteilig bildendes - ringscheibenförmige fünftes Teilsegment 211e aufweist. Nämliches Teilsegment 211e kann mit dem Teilsegment 210a beispielsweise durch Löten oder Schweißen stoffschlüssig verbunden sein; die beiden Teilsegmente 211a und 211e können aber beispielsweise auch Bestandteile ein und desselben, insb. durch ein additives Fertigungsverfahren hergestellten und/oder das vorbezeichnete Teilsegment 211b und ggf. auch die vorbezeichneten Teilsegment 211c und 211d involvierenden, monolithischen Formteils sein. Analog dazu kann auch das Verbindungselement 212 ein, insb. sowohl dessen vorbezeichnete Oberfläche 212+ als auch dessen vorbezeichnete Oberfläche 212# jeweils zumindest anteilig bildendes, sich ausgehend von einem an das erste Teilsegment 212a, insb. nämlich dessen erstes Ende, grenzenden ersten Rand bis zu einem davon entfernten, an die Wandung des Rohrs grenzenden zweiten Rand erstreckendes ringscheibenförmige fünftes Teilsegment 212e aufweisen.

Das vorbezeichnete Teilsegment 211b des ersten Verbindungselements 211 ist ferner im besonderen dafür vorgesehen bzw. eingerichtet, eine - beispielsweis durch die Erregeranordnung 40 zwecks Generierung der Nutzschwingungen initiierte - Drehbewegung des Teilsegments 211c um dessen vorbezeichnete gedachte Hauptträgheitsachse zum Verdrängerelement 210 zu übertragen, insb. nämliche Drehbewegung des Teilsegments 211c in eine eine Verbiegung des Verdrängerelements bewirkende Verdrehung eines an das zweite Ende des ersten Verbindungselements grenzenden Teilsegments des Verdrängerelements zu wandeln, und/oder nämliche Drehbewegung des Teilsegments 211c zum Teilsegment 211a zu übertragen, insb. nämliche Drehbewegung des Teilsegments 211c in eine Verdrehung des Teilsegments 211a um die vorbezeichnete erste gedachte Torsionsschwingungsachse zu wandeln. Zudem ist das Teilsegment 211b weiters dafür ausgestaltet, eine Drehbewegung des an das zweite Ende des Verbindungselements 211b grenzenden ersten Teilsegments des Verdrängerelements 210 um die erste gedachte Torsionsschwingungsachse zum Teilsegment 211a und/oder zum Teilsegment 211c zu übertragen, insb. nämliche Drehbewegung des ersten Teilsegments des Verdrängerelements 210 in eine Verdrehung des Teilsegments 211a um die vorbezeichnete erste gedachte Torsionsschwingungsachse und/oder eine - von außerhalb des Rohrs 10 detektierbare - Drehbewegung des Teilsegments 211c um nämliche Torsionsschwingungsachse zu wandeln. Die vorbezeichneten Drehbewegungen der Teilsegmente 211a, 211b, 211c bzw. 211d um deren jeweilige vorbezeichnete gedachte Hauptträgheitsachsen bzw. die erste gedachte Torsionsschwingungsachse können beispielsweise zumindest anteilig den vorbezeichneten Nutzschwingungen der Wandlereinheit 21 entsprechen bzw. daraus resultieren. Dementsprechend ist das vorbezeichnete Teilsegment 211a des Verbindungselements 211 gemäß einer weiteren Ausgestaltung der Erfindung ferner dafür ausgestaltet, eine zumindest für die Anregung der Nutzschwingungen bzw. deren Detektion ausreichend große Verdrehung sowohl des Teilsegments 211b als auch des Teilsegments 211c um deren jeweilige vorbezeichnete gedachte Hauptträgheitsachsen zu ermöglichen, beispielsweise also nämlicher Verdrehung der Teilsegmente 211b, 211c eine möglichst geringe (Torsions-)Federkraft entgegen wirken zu lassen bzw. eine ausreichend niedrige (Torsions-)Federkonstante entgegenzusetzen. Gleichermaßen kann auch das vorbezeichnete Teilsegment 212a des zweiten Verbindungselements 212 dafür vorgesehen und entsprechend ausgebildet sein, eine für die Anregung der Nutzschwingungen bzw. deren Detektion ausreichend große Verdrehung sowohl des Teilsegments 212b als auch des Teilsegments 212c um deren jeweilige vorbezeichnete gedachte Hauptträgheitsachsen zu ermöglichen, beispielsweise also nämlicher Verdrehung der Teilsegmente 212b, 212c ebenfalls eine möglichst geringe (Torsions-)Federkraft entgegen wirken zu lassen bzw. eine ausreichend niedrige (Torsions-)Federkonstante entgegenzusetzen. Des weiteren kann das Teilsegment 211a auch dafür vorgesehen und eingerichtet sein, den vorbezeichneten Temperatursensor 610 aufzunehmen bzw. damit mechanisch verbunden zu sein, beispielsweise derart, daß nämlicher Temperatursensor, wie aus einer Zusammenschau der Fign. 12 und 17 ersichtlich, innerhalb des Teilsegments 211a bzw. in einem zwischen dem Teilsegment 211a und dem Teilsegment 211c gebildeten Zwischenraum angeordnet ist.

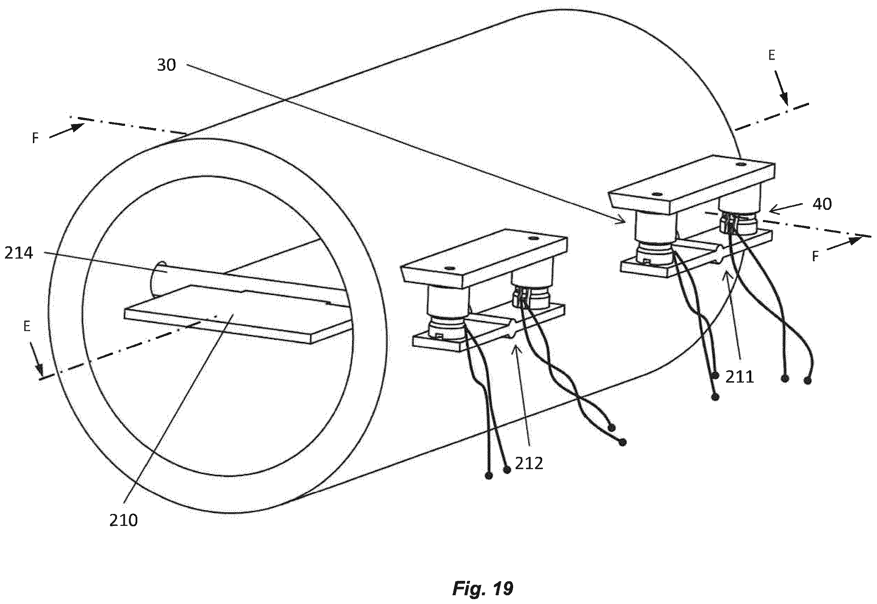

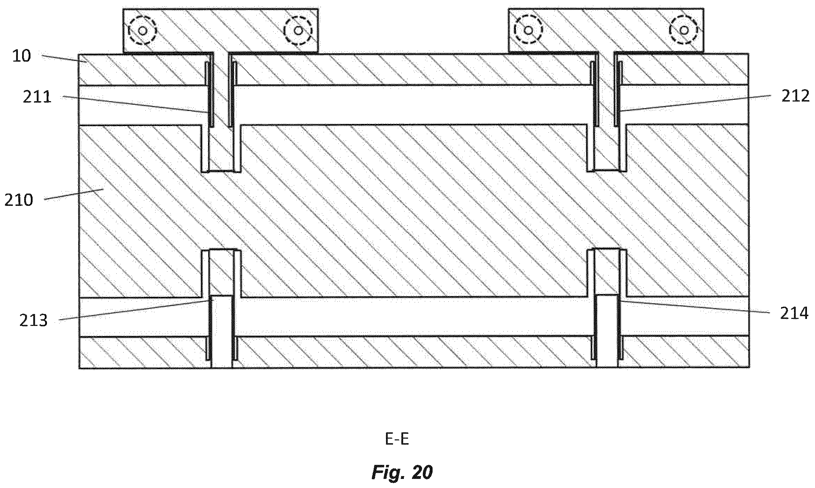

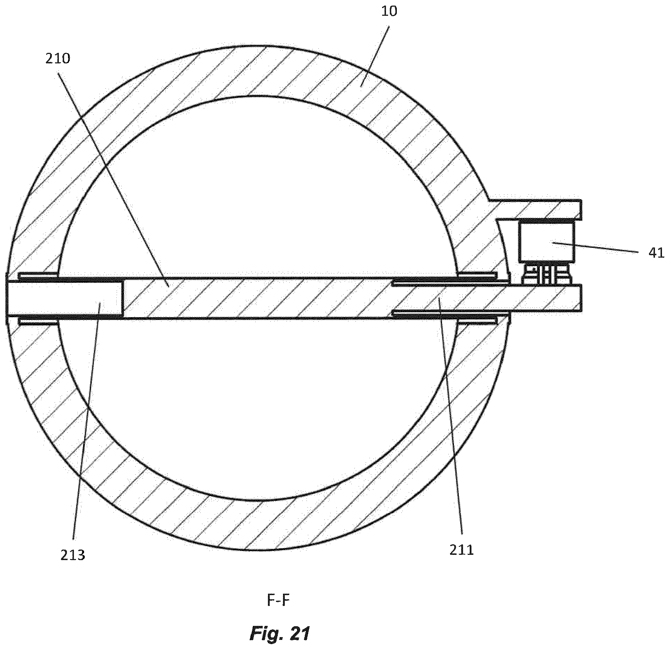

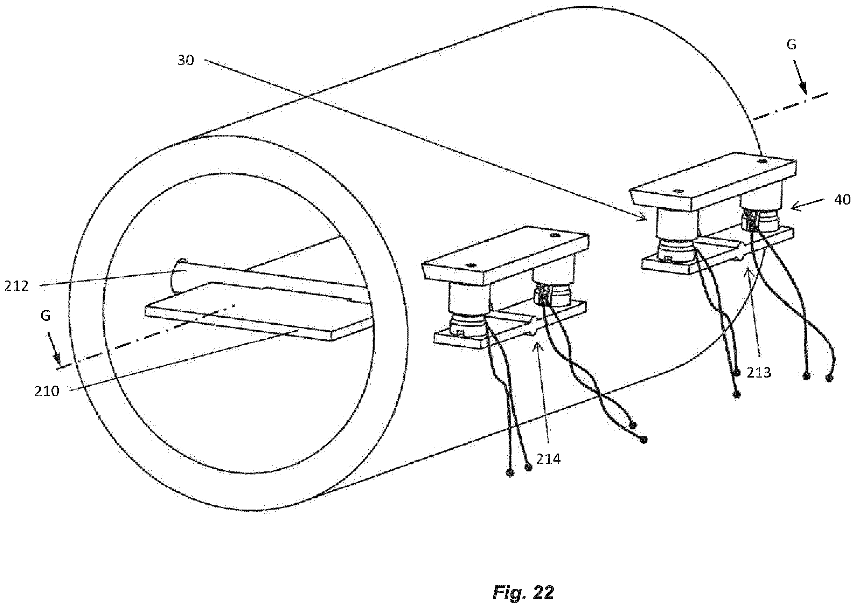

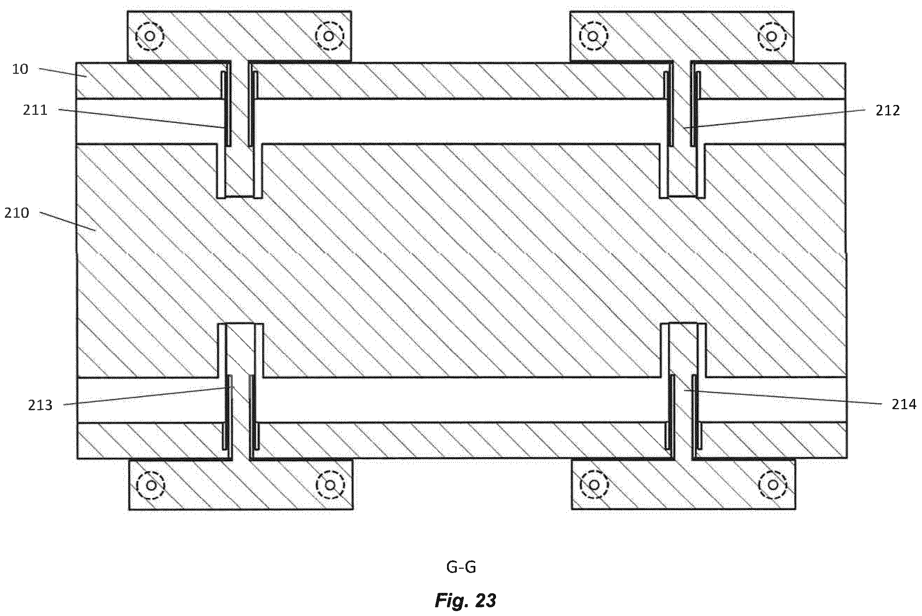

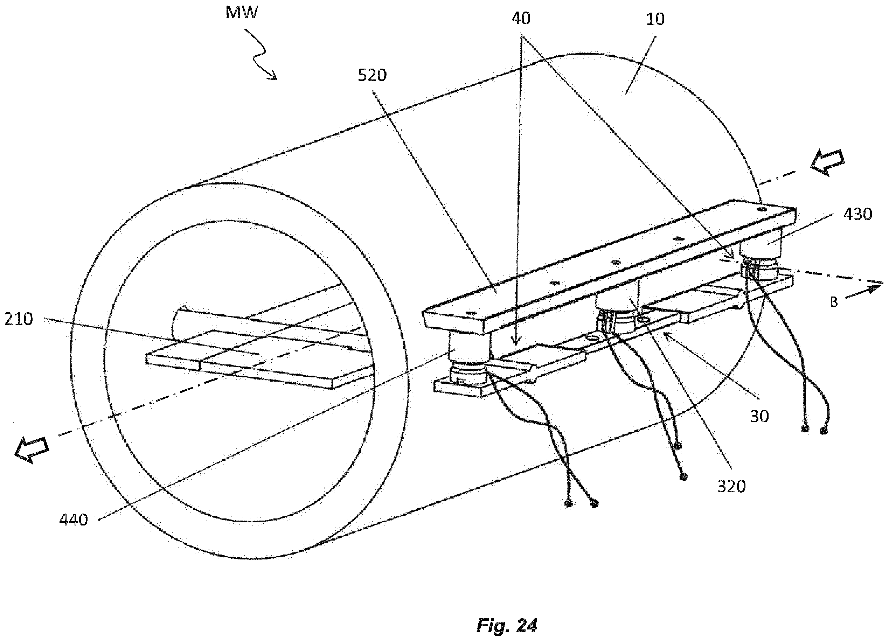

Nach einer weiteren Ausgestaltung der Erfindung ist ferner vorgesehen, daß die Wandlereinheit 21 - wie in Fig. 19, 20, 21, 22, 23 und 24 jeweils dargestellt bzw. wie aus deren Zusammenschau ersichtlich - zusätzlich zu den vorbezeichneten Verbindungselementen 211, 212 weiters ein, beispielsweise zum Verbindungselement 211 baugleiches, drittes Verbindungselement 213 sowie wenigstens ein, beispielsweise zum Verbindungselement 213 baugleiches, viertes Verbindungselement 214 aufweist. Jedes der beiden Verbindungselemente 213, 214 kann z.B. metallisch und/oder zumindest teilweise hülsenförmig und/oder zumindest teilweise stabförmig und/oder zumindest teilweise schalenförmig und/oder zumindest teilweise scheibenförmig ausgebildet sein. Das Verbindungselement 213 ist mit dem Verdrängerelement 210 mechanisch verbunden. Zudem ist auch das Verbindungselement 214 mit dem Verdrängerelement 210 mechanisch verbunden, und zwar vom Verbindungselement 213 in Richtung der erwähnten gedachten Längsachse L₂₁₀ nämlichen Verdrängerelements 210 und/oder entlang einer gedachten Mantellinie der Wandung des Rohrs 10 beabstandet. Nach einer weiteren Ausgestaltung der Erfindung sind die Verbindungselemente 211, 213 bzw. 212, 214 ferner so angeordnet und jeweils mit dem Verdrängerelement 210 mechanisch verbunden, daß die erwähnte gedachte Hauptträgheitsachse des Verbindungselements 211 und eine gedachte Hauptträgheitsachse des Verbindungselements 213 zueinander fluchtend ausgerichtet sind und/oder daß die erwähnte gedachte Hauptträgheitsachse des Verbindungselements 212 und eine gedachte Hauptträgheitsachse des Verbindungselements 214 zueinander fluchtend ausgerichtet sind. Nach einer weiteren Ausgestaltung der Erfindung ist die Wandlereinheit 21 in das Rohr 10 derart eingesetzt und damit mechanische verbunden, daß - wie auch in Fig. 21 bzw. 23 angedeutet - jedes von deren Verbindungselementen 211, 212, 213, 214 jeweils zumindest teilweise innerhalb der Wandung nämlichen Rohrs plaziert und damit mechanisch verbunden ist; dies im besonderen auch in der Weise, daß das Verbindungselement 214 in Richtung der gedachten Längsachse des Rohrs vom Verbindungselement 213 beabstandet mit der Wandung des Rohrs mechanisch verbunden und/oder in Strömungsrichtung stromabwärts nämlichen Verbindungselements 213 angeordnet ist bzw. daß das Verbindungselement 213 vom Verbindungselement 211 entlang einer ersten Umfangslinie der Wandung beabstandet und das Verbindungselement 214 vom Verbindungselement 212 entlang einer zweiten Umfangslinie der Wandung beabstandet mit der Wandung des Rohrs mechanisch verbunden sind. Die Wandlereinheit 21 kann beispielsweise so ausgebildet und im Rohr angeordnet sein, daß die Verbindungselemente 211, 213 bzw. die Verbindungselemente 212, 214 jeweils einander bezüglich eines mit deren vorbezeichneten jeweiligen Hauptträgheitsachsen koinzidierenden Durchmessers des Rohrs 10 diametral gegenüberliegend positioniert sind. Für den Fall, daß die Erregeranordnung 30 mittels zweier Schwingungserreger 310, 320 gebildet ist, kann zudem der Schwingungserreger 320 beispielsweise auch mit einem der Verbindungselemente 213, 214 bzw. - wie auch in Fig. 24 dargestellt - sowohl mit dem Verbindungselement 213 als auch mit dem Verbindungselement 214 mechanisch verbunden sein.

Nach einer weiteren Ausgestaltung der Erfindung ist ferner vorgesehen, daß die Sensoranordnung 40 mittels vier, beispielsweise baugleichen, Schwingungssensoren gebildete ist, derart, daß nämliche Sensoranordnung 40 zusätzlich zu den vorbezeichneten Schwingungssensoren 410, 420 einen, beispielsweise elektrodynamischen oder piezoelektrischen und/oder zum Schwingungssensor 410 baugleichen, dritten Schwingungssensor 430 sowie einen, beispielsweise elektrodynamischen oder piezoelektrischen und/oder zum Schwingungssensor 410 baugleichen, vierten Schwingungssensor 440 aufweist. Für den vorbeschriebenen Fall, daß die Wandlereinheit 21 zusätzlich zu den Verbindungselementen 211, 212 auch die Verbindungselemente 213, 214 aufweist, kann der Schwingungssensor 430 beispielsweise zumindest mit dem vorbezeichneten Verbindungselement 213 verbunden sein und kann der Schwingungssensor 440 beispielsweise zumindest mit dem vorbezeichneten Verbindungselement 214 mechanisch verbunden sein. Zudem kann für den vorbezeichneten Fall, daß der Meßwandler zudem sowohl das Trägergerüst 510 als auch das Trägergerüst 520 aufweist, können, wie in Fig. 24 gezeigt, die Schwingungssensoren 430, 440 zudem mit nämlichem Trägergerüst 520 mechanisch verbunden sein. Dementsprechend kann das Trägergerüst 520 auch so ausgebildet und so am Rohr 10 positioniert sein, daß es, wie aus einer Zusammenschau der Fig. 3 und 24 ersichtlich, dem Trägergerüst 510 in Richtung zumindest einer der vorbezeichneten Hauptträgheitsachsen der Verbindungselemente 211, 212 und/oder der vorbezeichneten ersten und zweiten Torsionsschwingungsachsen der Wandlereinheit 21 diametral gegenüberliegt, sich nämlich beispielsweise -wie u.a. auch aus der Fig. 24 ersichtlich - zumindest vom vorbezeichneten Verbindungselement 213 bis zum vorbezeichneten Verbindungselement 214 erstreckt, insb. nämlich parallel zum Trägergerüst 510 und/oder zum Verdrängerlement 210 verlaufend angeordnet ist.

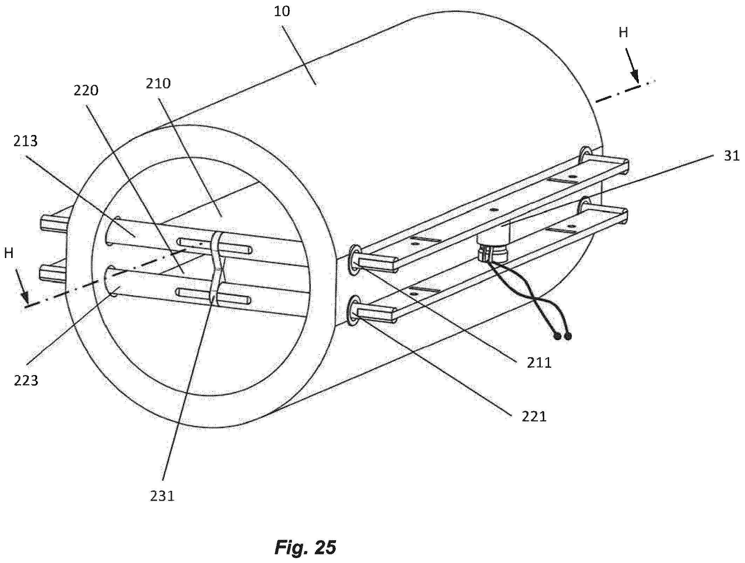

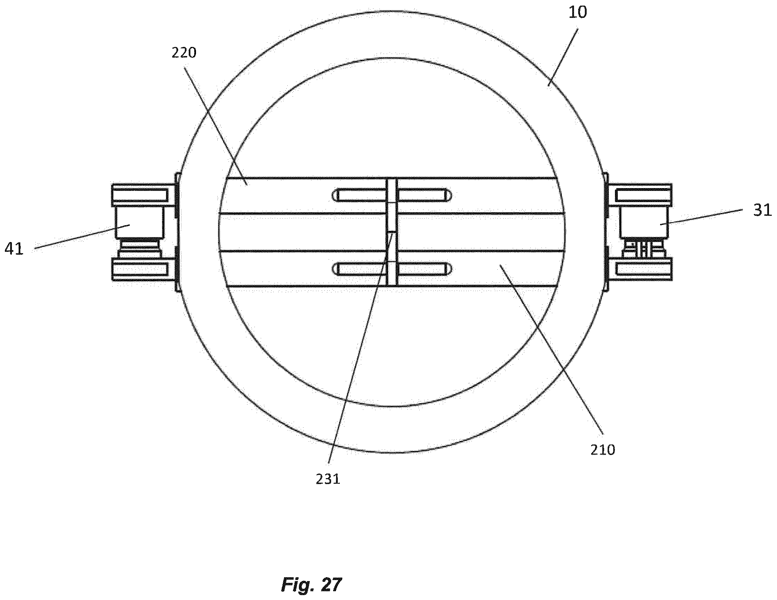

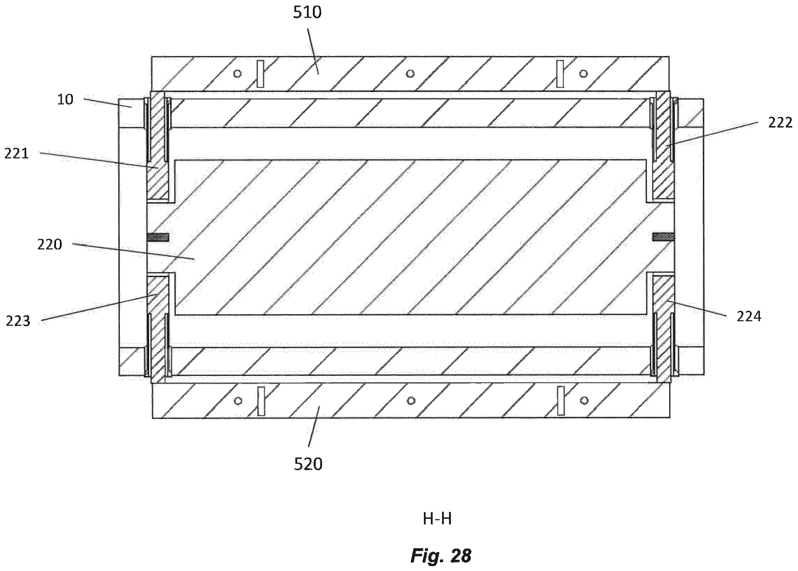

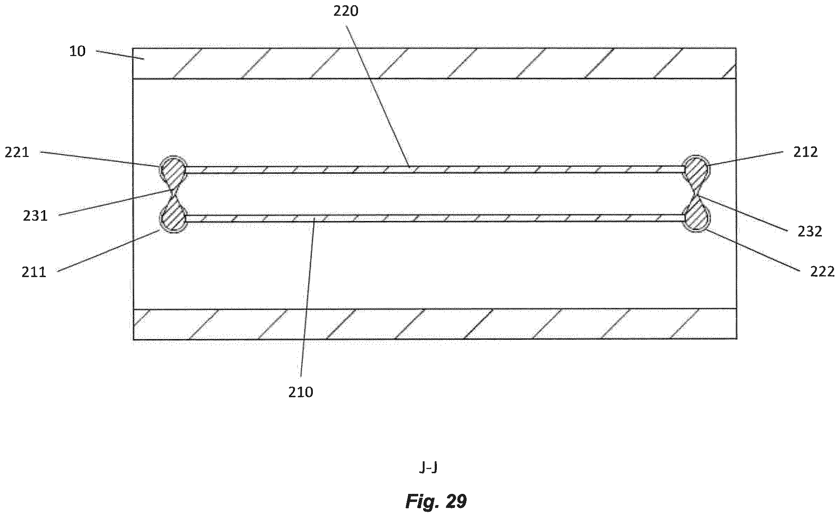

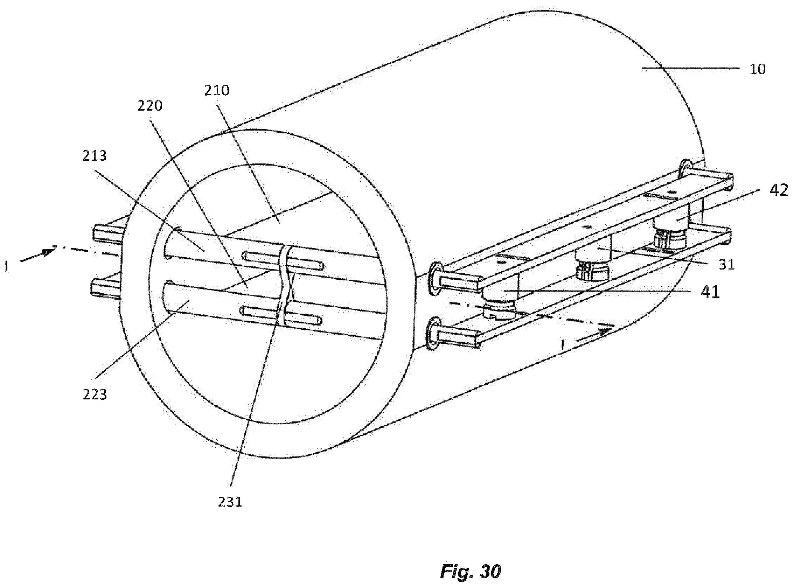

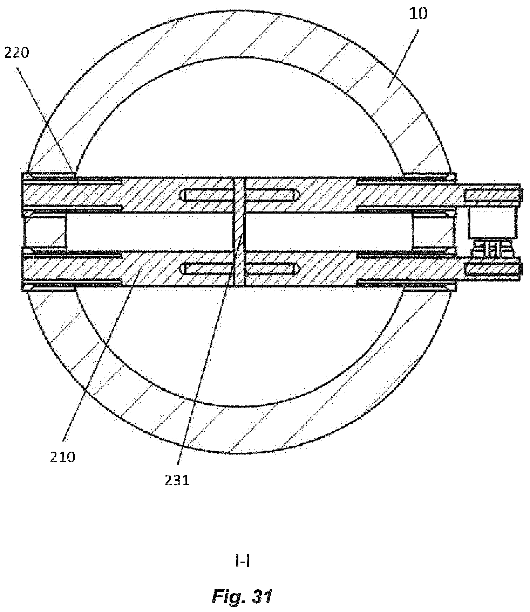

Wenngleich der vorausgehend exemplarisch lediglich mit einer einzigen Wandlereiheit gezeigte erfindungsgemäße Meßwandler bereits sehr gute Meßergebnisse liefert, so hat sich dennoch gezeigt, daß durch Verwendung einer weiteren, beispielsweise zur vorbezeichneten ersten Wandlereiheit baugleichen, Wandlereinheit die Meßganauigkeit mit einem vergleichsweise geringen Mehraufwand noch weiter verbessert werden kann. Dementsprechend umfaßt der Meßwandler nach einer weiteren Ausgestaltung der Erfindung weiters eine, insb. gemeinsam mit der Wandlereinheit 21 innerhalb des Rohrs 10 angeordnete bzw. zur Wandlereinheit 21 baugleiche, zweite Wandlereinheit 22. Nämliche Wandlereinheit 22 ist, wie auch in den Fig. 25, 26, 27, 28, 29, 30 oder 31 dargestellt bzw. aus deren Zusammenschau ohne weiteres ersichtlich, mittels wenigstens eines Verdrängerelements 220, eines - beispielsweise zum Verbindungselement 211 baugleichen - ersten Verbindungselements 221 sowie wenigstens eines - , beispielsweise zum Verbindungselement 212 baugleichen - zweiten Verbindungselements 222 gebildet. Jedes der - insb. funktionsgleichen, hier nämlich jeweils als Kraftübertrager dienlichen, ggf. auch baugleichen - Verbindungselemente 221, 222 der Wandlereinheit 22 ist jeweils mit dem Verdrängerelement 220 mechanisch verbunden, und zwar in Richtung einer gedachten Längsachse nämlichen Verdrängerelements 220 mit vorgegeben gegenseitigen Abstand, beispielsweise nämlich auch im gleichen relativen Abstand wie die Verbindungselemente 211, 212 der Wandlereinheit 21 . Das Verdrängerelement 220 kann beispielsweise zumindest teilweise plattenförmig und/oder zumindest teilweise stabförmig und/oder zum Verdrängerelement 210 baugleich ausgebildet und/oder metallisch sein. Desweiteren kann das Verbindungselement 221 und/oder das Verbindungselement 222 jeweils zumindest teilweise hülsenförmig und/oder zumindest teilweise stabförmig und/oder zumindest teilweise schalenförmig und/oder zumindest teilweise scheibenförmig und/oder zumindest teilweise kreiszylindrisch und/oder metallisch sein.

Wie aus einer Zusammenschau der Fign. 25, 26, 27, 28, 29, 30, 31 ohne weiteres ersichtlich, ist die Wandlereinheit 22 zudem derart in das Rohr 10 eingesetzt und damit mechanisch verbunden, daß deren Verdrängerelement 220 im seitlichen Abstand zum Verdrängerelement 210 der Wandlereinheit 21 innerhalb des Lumens nämlichen Rohrs 10 plaziert ist und daß jedes der Verbindungselemente der Wandlereinheit 22 jeweils im Abstand zu jedem der Verbindungselemente der Wandlereinheit 21 zumindest teilweise innerhalb der Wandung des Rohrs 10 plaziert und damit mechanisch verbunden ist; dies im besonderen in der Weise, daß das Verbindungselement 222 in Richtung der gedachten Längsachse des Rohrs 10 vom Verbindungselement 221 beabstandet mit der Wandung des Rohrs mechanisch verbunden und/oder in Strömungsrichtung stromabwärts nämlichen Verbindungselements 221 angeordnet ist bzw. daß das Verbindungselement 221 vom Verbindungselement 211 entlang der erwähnten ersten Umfangslinie der Wandung beabstandet und das Verbindungselement 222 vom Verbindungselement 212 entlang der erwähnten zweiten Umfangslinie der Wandung beabstandet mit der Wandung des Rohrs mechanisch verbunden sind. Gleichermaßen wie Verbindungselemente 211 bzw. 212 der Wandlereinheit 21 können zudem auch die Verbindungselemente 221, 222 der Wandlereinheit 22, wie auch in Fig. 25 angedeutet, Bestandteile ein und desselben Formteils bzw. ein und derselben Baugruppe sein, derart, daß ein außerhalb des Rohrs verortetes Teilsegment des Verbindungselements 221 in ein gleichermaßen außerhalb des Rohrs verortetes Teilsegment des Verbindungselements 222 übergeht bzw. damit mechanisch, beispielsweise nämlich stoffschlüssig, verbunden ist.

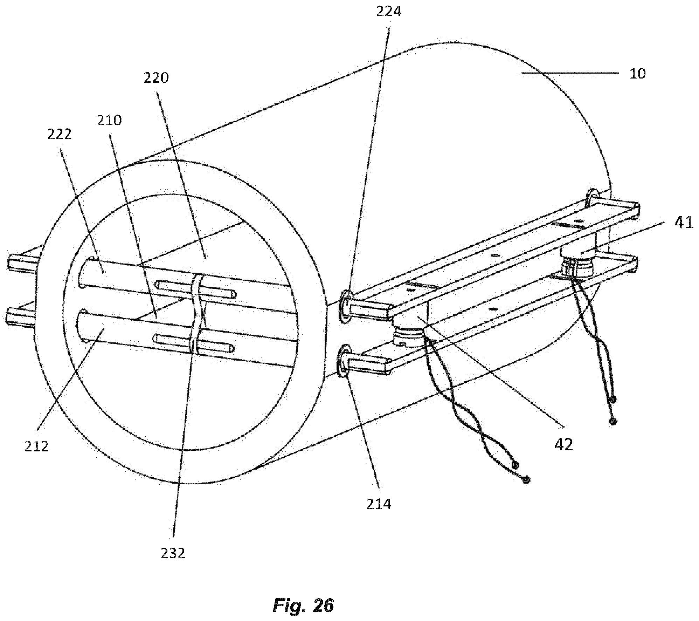

Nicht zuletzt für den erwähnten Fall, daß die Wandlereinheit 21 mittels vier Verbindungselementen, nämlich den Verbindungselementen 211, 212, 213 und 214 gebildet ist, kann auch die Wandlereinheit 22 zudem ein drittes Verbindungselement 223 und ein viertes Verbindungselement 224 aufweisen. Jedes der beiden Verbindungselemente 223, 224 kann demnach z.B. auch metallisch und/oder zumindest teilweise hülsenförmig und/oder zumindest teilweise stabförmig und/oder zumindest teilweise schalenförmig und/oder zumindest teilweise scheibenförmig ausgebildet sein. Das Verbindungselement 223 ist mit dem Verdrängerelement 220 mechanisch verbunden. Zudem ist auch das Verbindungselement 224 mit dem Verdrängerelement 220 mechanisch verbunden, und zwar vom Verbindungselement 223 in Richtung der erwähnten gedachten Längsachse nämlichen Verdrängerelements 220 und/oder entlang einer gedachten Mantellinie der Wandung des Rohrs 10 beabstandet. Nach einer weiteren Ausgestaltung der Erfindung sind die Verbindungselemente 221, 223 bzw. 222, 224 der Wandlereinheit 22 ferner so angeordnet und jeweils mit dem Verdrängerelement 220 mechanisch verbunden, daß eine gedachte Hauptträgheitsachse des Verbindungselements 221 und eine gedachte Hauptträgheitsachse des Verbindungselements 223 zueinander fluchtend ausgerichtet sind und/oder daß eine gedachte Hauptträgheitsachse des Verbindungselements 222 und eine gedachte Hauptträgheitsachse des Verbindungselements 224 zueinander fluchtend ausgerichtet sind. Nach einer weiteren Ausgestaltung der Erfindung ist die Wandlereinheit 22 in das Rohr 10 eingesetzt und damit mechanisch verbunden, derart, daß - wie auch in Fig. 25, 26, 28 bzw. 29 jeweils angedeutet bzw. aus einer Zusammenschau der Fign. 25, 26, 27, 28 oder 29 ohne weiteres ersichtlich - jedes von deren Verbindungselementen 221, 222, 223, 224 jeweils im Abstand zu jedem der Verbindungselemente der Wandlereinheit 21 zumindest teilweise innerhalb der Wandung des Rohrs 10 plaziert und damit mechanisch verbunden ist; dies im besonderen in der Weise, daß das Verbindungselement 224 in Richtung der gedachten Längsachse des Rohrs 10 vom Verbindungselement 223 beabstandet mit der Wandung des Rohrs mechanisch verbunden und/oder in Strömungsrichtung stromabwärts nämlichen Verbindungselements 223 angeordnet ist bzw. in der Weise, daß das Verbindungselement 223 sowohl vom Verbindungselement 221 als auch vom Verbindungselement 213 entlang der erwähnten ersten Umfangslinie der Wandung beabstandet und das Verbindungselement 224 vom Verbindungselement 222 entlang der erwähnten zweiten Umfangslinie der Wandung beabstandet mit der Wandung des Rohrs mechanisch verbunden sind. Auch die Verbindungselemente 223, 224 der Wandlereinheit 22 können, wie auch in Fig. 26 angedeutet, Bestandteile ein und desselben Formteils bzw. ein und derselben Baugruppe sein, derart, daß ein außerhalb des Rohrs verortetes Teilsegment des Verbindungselements 223 in ein gleichermaßen außerhalb des Rohrs verortetes Teilsegment des Verbindungselements 224 übergeht bzw. damit mechanisch, beispielsweise nämlich stoffschlüssig, verbunden ist.

Nach einer weiteren Ausgestaltung der Erfindung ist die Sensoranordnung 40 ferner dafür eingerichtet, das Schwingungssignal s1 so zu generieren, daß es mechanische Schwingungen der beiden Wandlereinheiten 21, 22, beispielsweise nämlich Torsionsschwingungen des zumindest Verbindungselements 211 der Wandlereinheit 21 sowie Torsionsschwingungen zumindest des vorbezeichneten Verbindungselements 221 der Wandlereinheit 22, repräsentiert. Im besonderen kann die Sensoranordnung 40 nämlich dafür eingerichtet sein, sowohl die - ggf. Nutz-Schwingungsfrequenz aufweisenden - Torsionsschwingungen des Verbindungselements 211 als auch die - ggf. ebenfalls Nutz-Schwingungsfrequenz aufweisenden - Torsionsschwingungen des Verbindungselements 221 zu erfassen und das Schwingungssignal s1 beispielsweise so zu generieren, daß dessen erwähnte Meßkomponente zumindest nämliche Torsionsschwingungen der Verbindungselemente 211, 221 repräsentiert. Ferner ist die Sensoranordnung 40 nach einer weiteren Ausgestaltung der Erfindung dafür eingerichtet, das erwähnte Schwingungssignal s2 so zu generieren, daß es mechanische Schwingungen der beiden Wandlereinheiten 21, 22, beispielsweise nämlich Torsionsschwingungen zumindest des Verbindungselements 212 der Wandlereinheit 21 sowie Torsionsschwingungen zumindest des vorbezeichneten Verbindungselements 222 der Wandlereinheit 22, repräsentiert. Beispielsweise kann die Sensoranordnung 40 auch dafür eingerichtet sein, sowohl die - ggf. Nutz-Schwingungsfrequenz aufweisenden - Torsionsschwingungen des Verbindungselements 212 als auch die - ggf. ebenfalls Nutz-Schwingungsfrequenz aufweisenden - Torsionsschwingungen des Verbindungselements 222 zu erfassen und das Schwingungssignal s2 beispielsweise so zu generieren, daß dessen erwähnte Meßkomponente zumindest nämliche Torsionsschwingungen der Verbindungselemente 212, 222 repräsentiert. Im besondern ist die Sensoranordnung ferner dafür vorgesehen und eingerichtet, die vorbezeichneten Schwingungssignale s1, s2 in der Weise zu generieren, daß zwischen der Meßkomponente des Schwingungssignals s1 und der Meßkomponente des Schwingungssignals s2 eine Phasendifferenz Δϕ existiert, die von der Massendurchflußrate, m, des zu messenden bzw. durch das Rohr 10 strömenden Fluids abhängig ist.

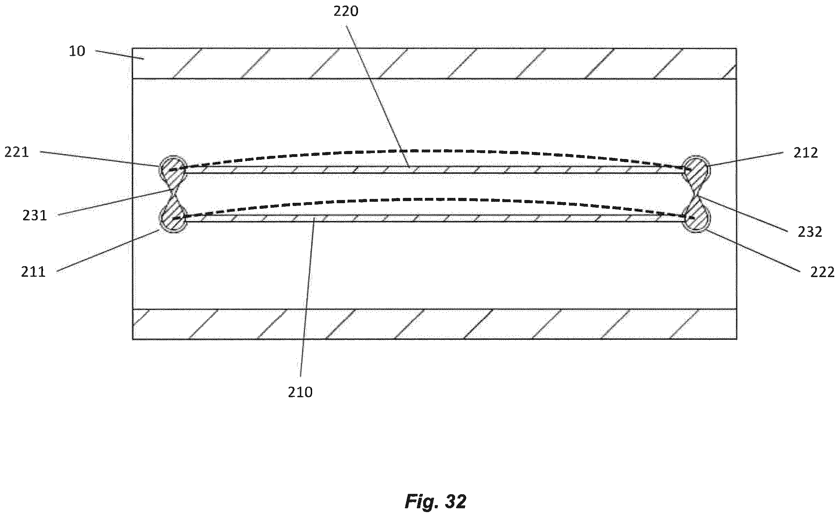

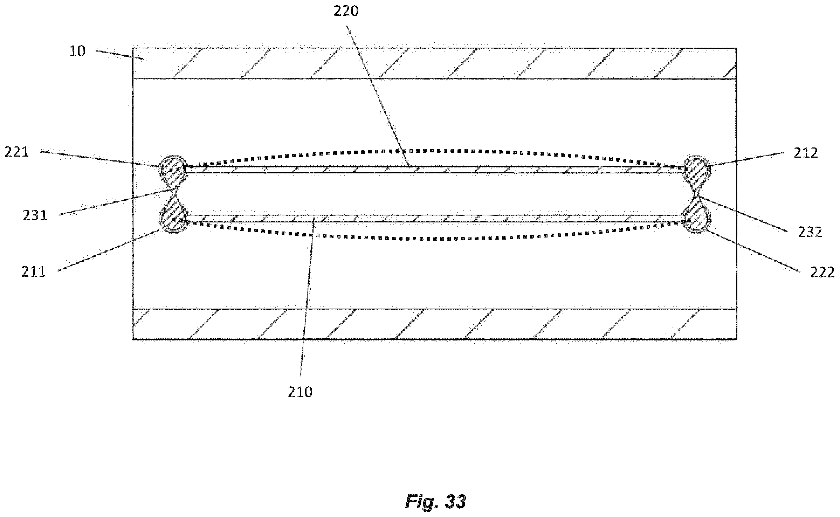

Wie in Fig. 32 schematisch dargestellt, können für den vorbezeichneten Fall, daß der Meßwandler mittels der zwei Wandlereinheiten 21, 22 gebildet ist, nämlichem Meßwandler verschiedene, insb. nämlich sowohl voneinander abweichende Eigenformen als auch voneinander abweichende Eigenfrequenzen aufweisende, Parallelschwingungsmoden innewohnen, nämlich solche natürlichen Schwingungsmoden, in denen jede der beiden Wandlereinheiten 21, 22 jeweils synchron zur anderen Wandlereinheit Schwingungen mit einander gleichen Schwingungsformen ausführen, beispielsweise nämlich - wie auch in Fig. 32 gezeigt - jeweils Schwingungen in einem jeweiligen Biege-/Torsionsschwingungsgrundmode oder einem anderen jeweiligen Biege-/Torsionsschwingungsmode. Darüberhinaus kann dem Meßwandler, wie auch in Fig. 33 gezeigt, zudem zumindest ein Anti-Parallelschwingungsmode innewohnem, in dem die Wandlereinheit 21 und die Wandlereinheit 22 synchron Schwingungen, beispielsweise in einem jeweiligen Biege-/ Torsionsschwingungsmode, mit zueinander gegengleichen Schwingungsformen ausführen. Nach einer weiteren Ausgestaltung der Erfindung ist vorgesehen, nämlichen Anti-Parallelschwingungsmode als Nutzmode zu verwenden bzw. ist die Erregeranordnung 30 dementsprechend eingerichtet, die vorbezeichneten Nutz-Schwingungen mit einer von einer momentanen Resonanzfrequenz des Anti-Parallelschwingungsmodes um nicht mehr als 2 Hz abweichenden, beispielsweise nämlich einer damit übereinstimmenden, Schwingfrequenz anzuregen bzw. aufrechtzuerhalten. Zwecks Vermeidung eines unerwünschten Anregens eines der vorbezeichneten Parallelschwingungsmoden durch die Erregeranordnung ist nach einer weiteren Ausgestaltung der Erfindung der Meßwandler so ausgbildet, daß eine Eigenfrequenz des Anti-Parallelschwingungsmodes von der jeweiligen Eigenfrequenz jedes der vorbezeichneten Parallelschwingungsmoden abweicht, beispielsweise nämlich kleiner als die jeweilige Eigenfrequenz jedes der Parallelschwingungsmoden ist. Dafür umfaßt der Meßwandler - wie u.a. auch in Fig. 25 gezeigt bzw. aus einer Zusammenschau der Fig. 25, 27, 29, 30, 31, 32 und 33 ohne weiteres ersichtlich - nach einer weiteren Ausgestaltung der Erfindung desweiteren wenigstens ein die Wandlereinheit 21 und die Wandlereinheit 22 miteinander mechanisch verbindendes, gleichwohl von der Wandung des Rohrs 10 beabstandetes, beispielsweise stabförmiges oder plattenförmiges, erstes Koppelelement 231. Nämliches Koppelelement 231 kann vorteilhaft so ausgebildet sein, daß eine zur Eigenfrequenz des Anti-Parallelschwingungsmodes des Meßwandlers insgesamt beitragenden Federkonstante des Koppelelements 231 kleiner ist als eine jeweils zur jeweiligen Eigenfrequenz jedes der Parallelschwingungsmoden des Meßwandlers jeweils insgesamt beitragenden Federkonstante nämlichen Koppelelements 231. Alternativ oder in Ergänzung kann das Koppelelement 231 sowohl im Bereich einer Knotenfläche eines dem Verdrängerelement 210 innewohnenden natürlichen Schwingungsmodes an nämlichem Verdrängerelement 210 als auch im Bereich einer Knotenfläche eines dem Verdrängerelement 220 innewohnenden natürlichen Schwingungsmodes an nämlichem Verdrängerelement 220 fixiert sein. Zur weiteren Verbesserung der vorbezeichneten Frequenztrennung zwischen dem Anti-Parallelschwingungsmode und den Parallelschwingungsmoden können im Meßwandler ferner weitere solcher Koppelelemente vorgesehen sein. Dementsprechend weist der Meßwandler nach einer weiteren Ausgestaltung der Erfindung wenigstens ein die Wandlereinheit 21 und die Wandlereinheit 22 ebenfalls miteinander mechanisch verbindendes zweites Koppelelement 232 auf, das, wie auch in Fig. 26 dargestellt bzw. aus einer Zusammenschau der Fig. 26, 29, 32 und 33 ohne weiteres ersichtlich, sowohl von der Wandung des Rohrs 10 - insb. gleichweit wie das Koppelelement 231 - als auch vom Koppelelement 231 beabstandet ist. Nämliches Koppelelement 232 kann beispielsweise stabförmig oder plattenförmig und/oder zum vorbezeichneten Koppelelement 231 baugleich ausgebildet sein. Zudem kann das Koppelelement 232 vorteilhaft sowohl im Bereich einer Knotenfläche des vorbezeichneten natürlichen Schwingungsmodes des Verdrängerelements 210 an nämlichem Verdrängerelement 210 als auch im Bereich einer Knotenfläche des vorbezeichneten natürlichen Schwingungsmodes des Verdrängerelements 220 an nämlichem Verdrängerelement 220 fixiert sein.

## Patentansprüche

1. Meßwandler für ein vibronisches Meßsystem, welcher Meßwandler umfaßt:
- ein ein von einer, insb. metallischen und/oder hohlzylindrischen, Wandung umhülltes Lumen (10') aufweisendes, sich von einem, insb. von einem Anschlußflansch gefassten, einlaßseitigen ersten Ende (10a) bis zu einem, insb. von einem Anschlußflansch gefassten, auslaßseitigen zweiten Ende (10b) erstreckendes, insb. zumindest abschnittsweise gerades und/oder in den Verlauf einer Rohrleitung einsetzbares und/oder ein Kaliber von mehr als 50 mm aufweisendes, Rohr (10), das dafür eingerichtet ist, von einem Fluid, insb. einem Gas, einer Flüssigkeit oder einer Dispersion, in einer Strömungsrichtung, nämlich ausgehend vom einlaßseitigen ersten Ende in Richtung des auslaßseitigen zweiten Ende, durchströmt zu werden;
- eine erste Wandlereinheit (21), die
-- wenigstens ein, insb. zumindest teilweise plattenförmiges und/oder metallisches, Verdrängerelement (210),
-- ein, insb. zumindest teilweise hülsenförmiges und/oder zumindest teilweise stabförmiges und/oder zumindest teilweise schalenförmiges und/oder zumindest teilweise scheibenförmige und/oder zumindest teilweise kreiszylindrisches und/oder metallisches und/oder als Torsionsfeder dienliches, erstes Verbindungselement (211),
-- sowie wenigstens ein, insb. zumindest teilweise hülsenförmiges und/oder zumindest teilweise stabförmiges und/oder zumindest teilweise schalenförmiges und/oder zumindest teilweise scheibenförmige und/oder zumindest teilweise kreiszylindrisches und/oder metallisches und/oder als Torsionsfeder dienliches und/oder zum ersten Verbindungselement (211) baugleiches, zweites Verbindungselement (212) aufweist,
--- wobei das erste Verbindungselement der ersten Wandlereinheit (21) mit dem Verdrängerelement der ersten Wandlereinheit (21) mechanisch verbunden ist
--- und wobei das zweite Verbindungselement der ersten Wandlereinheit (21) in Richtung einer gedachten Längsachse nämlichen Verdrängerelements vom ersten Verbindungselement der ersten Wandlereinheit (21) beabstandet mit dem Verdrängerelement der ersten Wandlereinheit (21) mechanisch verbunden ist;
- eine, insb. wenigstens einen elektrodynamischen oder piezoelektrischen Schwingungserreger (310) aufweisende, elektro-mechanische Erregeranordnung (30) zum Anregen und Aufrechterhalten von erzwungenen mechanischen Schwingungen, insb. Resonanzschwingungen, der ersten Wandlereinheit;
- sowie eine, insb. wenigstens einen elektrodynamischen Schwingungssensor (410) und/oder wenigstens zwei baugleiche Schwingungssensoren (410, 420) aufweisende, Sensoranordnung (40) zum Erfassen von mechanischen Schwingungen der ersten Wandlereinheit, insb. von mechanischen Schwingungen des ersten Verbindungselements und/oder von mechanischen Schwingungen des zweiten Verbindungselements, und zum Generieren wenigstens eines mechanische Schwingungen zumindest der ersten Wandlereinheit, insb. nämlich zumindest Torsionsschwingungen des ersten Verbindungselement der ersten Wandlereinheit bzw. zumindest Torsionsschwingungen des zweiten Verbindungselements der ersten Wandlereinheit, repräsentierenden (ersten) Schwingungssignals (s1);
- wobei die erste Wandlereinheit (21) in das Rohr eingesetzt und damit mechanische verbunden ist, derart,
-- daß deren Verdrängerelement innerhalb des Lumens nämlichen Rohrs plaziert ist
-- und daß jedes von deren ersten und zweiten Verbindungselementen (211, 212) jeweils zumindest teilweise innerhalb der Wandung nämlichen Rohrs plaziert und damit mechanisch verbunden ist, derart, daß das zweite Verbindungselement der ersten Wandlereinheit (21) in Richtung einer gedachten Längsachse des Rohrs und/oder einer gedachten Mantellinie der Wandung des Rohrs vom ersten Verbindungselement der ersten Wandlereinheit (21) beabstandet mit der Wandung des Rohrs mechanisch verbunden und/oder in Strömungsrichtung stromabwärts des ersten Verbindungselements angeordnet ist;
- wobei die erste Wandlereinheit (21) eingerichtet ist, von sich im Lumen des Rohrs befindendem Fluid kontaktiert und währenddessen vibrieren gelassen zu werden, derart, daß sowohl jedes von deren ersten und zweiten Verbindungselementen als auch deren Verdrängerelement jeweils zumindest anteilig elastisch verformt werden, nämlich derart,
-- daß jedes der ersten und zweiten Verbindungselemente zumindest anteilig um jeweils eine jeweilige gedachte Hauptträgheitsachse verdreht wird
-- und daß das Verdrängerelement der ersten Wandlereinheit (21) zumindest anteilig in Richtung eines zu einer gedachten Hauptträgheitsachse des ersten Verbindungselements der ersten Wandlereinheit (21) und/oder zu einer gedachten Hauptträgheitsachse des zweiten Verbindungselements der ersten Wandlereinheit (21) senkrechten Durchmessers des Rohrs aus einer statischen Ruhelage ausgebogen wird;
- und wobei die Sensoranordnung (40) eingerichtet ist,
-- sowohl ein mechanische Schwingungen zumindest der ersten Wandlereinheit, nämlich zumindest Torsionsschwingungen des ersten Verbindungselements der ersten Wandlereinheit repräsentierendes, insb. elektrisches, erstes Schwingungssignal (s1) zu generieren, insb. derart, daß das erste Schwingungssignal eine Meßkomponente, nämlich eine Signalkomponente mit einer der Nutz-Schwingungsfrequenz entsprechenden Signalfrequenz aufweist,
-- als auch ein mechanische Schwingungen zumindest der ersten Wandlereinheit, nämlich zumindest Torsionsschwingungen des zweiten Verbindungselements der ersten Wandlereinheit, repräsentierendes, insb. elektrisches, zweites Schwingungssignal (s2) zu generieren, insb. derart, daß das zweite Schwingungssignal eine Meßkomponente, nämlich eine Signalkomponente mit einer der Nutz-Schwingungsfrequenz entsprechenden Signalfrequenz aufweist und/oder daß zwischen dem ersten Schwingungssignal (s1) und dem zweiten Schwingungssignal (s2) eine von der Massendurchflußrate, m, des Fluids abhängige Phasendifferenz (Δϕ) existiert.

2. Meßwandler nach dem vorherigen Anspruch,
- wobei das erste Verbindungselement (211) der ersten Wandlereinheit zumindest anteilig, insb. überwiegend oder vollständig, aus einem Metall, insb. einem Edelstahl bzw. einer Nickelbasislegierung, besteht; und/oder
- wobei das zweite Verbindungselement (211) der ersten Wandlereinheit zumindest anteilig, insb. überwiegend oder vollständig, aus einem Metall, insb. einem Edelstahl bzw. einer Nickelbasislegierung, besteht; und/oder
- wobei das Verdrängerelement der ersten Wandlereinheit zumindest anteilig, insb. überwiegend oder vollständig, aus einem Metall, insb. einem Edelstahl bzw. einer Nickelbasislegierung, besteht; und/oder
- wobei das erste Verbindungselement (211) der ersten Wandlereinheit und das Verdrängerelement der ersten Wandlereinheit aus gleichem Material bestehen; und/oder
- wobei das zweite Verbindungselement (211) der ersten Wandlereinheit und das Verdrängerelement der ersten Wandlereinheit aus gleichem Material bestehen; und/oder
- wobei das erste Verbindungselement (211) der ersten Wandlereinheit und das zweite Verbindungselement (211) der ersten Wandlereinheit aus gleichem Material bestehen; und/oder
- wobei die Wandung des Rohrs eine kleinste Wandstärke aufweist die größer als 2 mm, insb. größer als 5 mm, ist; und/oder
- wobei die Wandung des Rohrs zumindest anteilig, insb. überwiegend oder vollständig, aus einem Stahl, insb. einem hochfesten Edelstahl und/oder einer Nickelbasislegierung, besteht; und/oder
- wobei das Rohr eine Länge, gemessen als ein kürzester Abstand zwischen dessen ersten Ende und dessen zweiten Ende, aufweist, die kleiner als ein Kaliber (DN) nämlichen Rohrs ist; und/oder
- wobei das Rohr ein Kaliber aufweist, das mehr als 10 mm, insb. mehr als 500 mm, beträgt.

3. Meßwandler nach einem der vorherigen Ansprüche,
- weiters umfassend: wenigstens ein außen an der Wandung des Rohrs fixiertes, insb. sich zumindest vom ersten bis zum zweiten Verbindungselement der ersten Wandlereinheit erstreckendes und/oder parallel zum Verdrängelement der ersten Wandlereinheit verlaufendes, (erstes) Trägergerüst (510) zum Haltern von Komponenten der Sensoranordnung (40) und/oder von Komponenten der Erregeranordnung (30); und/oder
- weiters umfassend: ein außen am Rohr angebrachtes, dieses zumindest teilweise umgebendes Schutzgehäuse, wobei die Sensoranordnung und/oder die Erregeranordnung innerhalb des Schutzgehäuses angeordnet sind.

4. Meßwandler nach einem der vorherigen Ansprüche,
- wobei die Sensoranordnung (40) einen, insb. elektrodynamischen oder piezoelektrischen oder kapazitiven, ersten Schwingungssensor (410) aufweist; und
- wobei die Sensoranordnung (40) einen, insb. elektrodynamischen oder piezoelektrischen oder kapazitiven, zweiten Schwingungssensor (420) aufweist;
- wobei der erste Schwingungssensor zumindest mit dem ersten Verbindungselement der ersten Wandlereinheit mechanisch verbunden ist; und
- wobei der zweite Schwingungssensor zumindest mit dem zweiten Verbindungselement (212) der ersten Wandlereinheit (21) mechanisch verbunden ist.

5. Meßwandler nach einem der vorherigen Ansprüche, wobei die Erregeranordnung (30) zum Generieren einer mechanische Schwingungen, insb. Nutz-Schwingungen, der ersten Wandlereinheit bewirkenden, insb. zeitlich veränderlichen und/oder zumindest zeitweise periodischen, (ersten) Anregungskraft wenigstens einen, insb. elektrodynamischen oder piezoelektrischen, ersten Schwingungserreger (310) aufweist, welcher erster Schwingungserreger (310) zumindest mit dem ersten Verbindungselement der ersten Wandlereinheit mechanisch verbunden ist, insb. nämlich sowohl mit dem ersten Verbindungselement der ersten Wandlereinheit als auch mit dem zweiten Verbindungselement der ersten Wandlereinheit mechanisch verbunden ist.

6. Meßwandler nach dem vorherigen Anspruch,
- wobei die Erregeranordnung (40) zum Generieren einer mechanische Schwingungen, insb. Nutz-Schwingungen, der ersten Wandlereinheit bewirkenden, insb. zeitlich veränderlichen und/oder zumindest zeitweise periodischen, zweiten Anregungskraft wenigstens einen, insb. elektrodynamischen oder piezoelektrischen und/oder zum ersten Schwingungserreger baugleichen und/oder zumindest mit dem zweiten Verbindungselement der ersten Wandlereinheit mechanisch verbundenen, zweiten Schwingungserreger aufweist; und/oder
- wobei die gedachte Hauptträgheitsachse des ersten Verbindungselements der ersten Wandlereinheit (21) und die gedachten Hauptträgheitsachse des zweiten Verbindungselements der ersten Wandlereinheit (21) zueinander parallel sind; und/oder
- wobei die erste Wandlereinheit zumindest bezüglich einer zugehörigen, insb. zur gedachten Hauptträgheitsachse des ersten Verbindungselements der ersten Wandlereinheit (21) und/oder zur gedachten Hauptträgheitsachse des zweiten Verbindungselements der ersten Wandlereinheit (21) parallelen, gedachten Hauptträgheitsachse achsen- bzw. spiegelsymmetrisch ist; und/oder
- wobei die Sensoranordnung (40) eingerichtet ist, ein mechanische Schwingungen zumindest der ersten Wandlereinheit, insb. nämlich zumindest Torsionsschwingungen des ersten Verbindungselements der ersten Wandlereinheit, repräsentierendes, insb. elektrisches, erstes Schwingungssignal (s1) zu generieren, insb. derart, daß das erste Schwingungssignal eine Meßkomponente, nämlich eine Signalkomponente mit einer der Nutz-Schwingungsfrequenz entsprechenden Signalfrequenz aufweist, insb. nämlich zumindest die die Nutz-Schwingungsfrequenz aufweisenden Torsionsschwingungen des ersten Verbindungselements der ersten Wandlereinheit zu erfassen und das erste Schwingungssignal (s1) mit einer, insb. zumindest nämliche Torsionsschwingungen des ersten Verbindungselements repräsentierenden, Meßkomponente, nämlich einer eine der Nutz-Schwingungsfrequenz entsprechenden Signalfrequenz aufweisenden Signalkomponente zu generieren und/oder ein mechanische Schwingungen zumindest der ersten Wandlereinheit, insb. nämlich zumindest Torsionsschwingungen des zweiten Verbindungselements der ersten Wandlereinheit, repräsentierendes, insb. elektrisches, zweites Schwingungssignal (s2) zu generieren, insb. derart, daß das zweite Schwingungssignal eine Meßkomponente, nämlich eine Signalkomponente mit einer der Nutz-Schwingungsfrequenz entsprechenden Signalfrequenz aufweist und/oder daß zwischen dem ersten Schwingungssignal (s1) und dem zweiten Schwingungssignal (s2) eine von der Massendurchflußrate, m, des Fluids abhängige Phasendifferenz (Δϕ) existiert.

7. Meßwandler nach einem der vorherigen Ansprüche, wobei die erste Wandlereinheit (20), weiters aufweist:
- ein, insb. zumindest teilweise hülsenförmiges und/oder zumindest teilweise stabförmiges und/oder zumindest teilweise schalenförmiges und/oder zumindest teilweise scheibenförmige und/oder metallisches und/oder zum ersten Verbindungselement (211) baugleiches, drittes Verbindungselement (213),
- sowie wenigstens ein, insb. zumindest teilweise hülsenförmiges und/oder zumindest teilweise stabförmiges und/oder zumindest teilweise schalenförmiges und/oder zumindest teilweise scheibenförmige und/oder metallisches und/oder zum dritten Verbindungselement (213) baugleiches, viertes Verbindungselement (214);
- wobei das dritte Verbindungselement der ersten Wandlereinheit mit dem Verdrängerelement der erste Wandlereinheit mechanisch verbunden ist,
- und wobei das vierte Verbindungselement der ersten Wandlereinheit in Richtung der gedachten Längsachse nämlichen Verdrängerelements und/oder entlang einer gedachten Mantellinie der Wandung des Rohrs vom dritten Verbindungselement beabstandet mit dem Verdrängerelement der ersten Wandlereinheit mechanisch verbunden ist.

8. Meßwandler nach dem vorherigen Anspruch,
- wobei die ersten und dritten Verbindungselemente (211, 213) so angeordnet und mit dem Verdrängerelement mechanisch verbunden sind, daß eine gedachte Hauptträgheitsachse des ersten Verbindungselements und eine gedachte Hauptträgheitsachse des dritten Verbindungselements zueinander fluchtend ausgerichtet sind; und/oder
- wobei die zweiten und vierten Verbindungselemente (212, 214) so angeordnet und mit dem Verdrängerelement mechanisch verbunden sind, daß eine gedachte Hauptträgheitsachse des zweiten Verbindungselements und eine gedachte Hauptträgheitsachse des vierten Verbindungselements zueinander fluchtend ausgerichtet sind; und/oder
- wobei das dritte Verbindungselement (213) vom ersten Verbindungselement (211) entlang einer Umfangslinie der Wandung beabstandet, insb. nämlich dem ersten Verbindungselement (211) diametral gegenüberliegend, am Rohr positioniert ist; und/oder
- wobei das vierte Verbindungselement (214) vom zweiten Verbindungselement (212) entlang einer Umfangslinie der Wandung beabstandet, insb. nämlich dem zweiten Verbindungselement (212) diametral gegenüberliegend, am Rohr positioniert ist; und/oder
- wobei das vierte Verbindungselement (214) vom dritten Verbindungselement (213) entlang einer gedachten Mantellinie der Wandung beabstandet am Rohr positioniert ist; und/oder
- wobei die erste Wandlereinheit (21) in das Rohr (10) eingesetzt und damit mechanische verbunden ist, derart, daß jedes von deren dritten und vierten Verbindungselementen (213, 214) jeweils zumindest teilweise innerhalb der Wandung nämlichen Rohrs plaziert und damit mechanisch verbunden ist, derart, daß das vierte Verbindungselement in Richtung der gedachten Längsachse des Rohrs vom dritten Verbindungselement beabstandet mit der Wandung des Rohrs mechanisch verbunden und/oder in Strömungsrichtung stromabwärts des dritten Verbindungselements angeordnet ist.

9. Meßwandler nach einem der vorherigen Ansprüche, wobei der ersten Wandlereinheit (21) verschiedene, insb. nämlich sowohl voneinander abweichende Eigenformen als auch voneinander abweichende Eigen- bzw. Resonanzfrequenzen aufweisende, Biege-/Torsionsschwingungsmoden innewohnen.

10. Meßwandler nach dem vorherigen Anspruch,
- wobei in jedem der Biege-/Torsionsschwingungsmoden das erste Verbindungselement der ersten Wandlereinheit jeweils Torsionsschwingungen um eine, insb. zu einer gedachten Hauptträgheitsachse des ersten Verbindungselements (211) parallele bzw. damit koinzidierende, erste gedachte Torsionsschwingungsachse der ersten Wandlereinheit und das zweite Verbindungselement der ersten Wandlereinheit jeweils Torsionsschwingungen um eine, insb. zu einer gedachten Hauptträgheitsachse des zweiten Verbindungselements (212) parallele bzw. damit koinzidierende und/oder zur ersten gedachten Torsionsschwingungsachse der ersten Wandlereinheit parallele, zweite gedachte Torsionsschwingungsachse der ersten Wandlereinheit ausführen, und wobei in jedem der Biege-/Torsionsschwingungsmoden das Verdrängerelement der ersten Wandlereinheit jeweils sowohl mit den jeweiligen Torsionsschwingungen des ersten Verbindungselements als auch mit den jeweiligen Torsionsschwingungen des zweiten Verbindungselements gekoppelte Biegeschwingungen um eine, insb. zu einer zugehörigen gedachte Hauptträgheitsachse parallele und/oder in Strömungsrichtung verlaufende, gedachte Biegeschwingungsachse der ersten Wandlereinheit ausführt; und/oder
- wobei der ersten Wandlereinheit (21) ein Biege-/Torsionsschwingungsgrundmode, nämlich ein eine niedrigste Eigenfrequenz bzw. eine niedrigste Resonanzfrequenz aller Biege-/Torsionsschwingungsmoden der ersten Wandlereinheit aufweisender Biege-/Torsionsschwingungsmode innewohnt und wobei eine die Eigenfrequenz des Biege-/Torsionsschwingungsgrundmode bestimmende Gesamt-Federkonstante der ersten Wandlerenheit mehr als 10% und/oder weniger als 50% einer zu nämlicher Federkonstante insgesamt beitragenden Federkonstante des Verdrängerelements (210) der ersten Wandlereinheit beträgt.

11. Meßwandler nach einem der vorherigen Ansprüche, wobei die Erregeranordnung (30) eingerichtet ist, elektrische Leistung in mechanische Leistung umzuwandeln und in Umwandlung von elektrischer in mechanische Leistung Nutz-Schwingungen, nämlich erzwungene mechanische Schwingungen des Meßwandlers in einem Nutzmode, mit einer Nutz-Schwingfrequenz, nämlich einer vorgebbaren - insb. von einer Dichte des Fluids abhängigen und/oder im Betrieb veränderlichen und/oder einer momentanen Resonanzfrequenz der ersten Wandlereinheit (21) entsprechenden - Schwingfrequenz anzuregen bzw. aufrechtzuerhalten.

12. Meßwandler nach Anspruch 10 und 11,
- wobei die Erregeranordnung (30) eingerichtet ist, die Nutz-Schwingungen mit einer mit einer momentanen Resonanzfrequenz des Biege-/Torsionsschwingungsgrundmode der ersten Wandlereinheit (21) übereinstimmenden und/oder davon um weniger als 2 Hz abweichenden Schwingfrequenz anzuregen bzw. aufrechtzuerhalten; und/oder
- wobei die Erregeranordnung (30) eingerichtet ist, den Biege-/Torsionsschwingungsgrundmode der ersten Wandlereinheit (21), insb. mit dessen momentanen Resonanzfrequenz, anzuregen bzw. aufrechtzuerhalten; und/oder
- wobei der Biege-/Torsionsschwingungsgrundmode der ersten Wandlereinheit (21) als Nutzmode dient; und/oder
- wobei die Nutz-Schwingungen der ersten Wandlereinheit, insb. nämlich die Biegeschwingungen des Verdrängerelements (112) der ersten Wandlereinheit im Nutzmode, geeignet sind, im durch das Rohr strömendem Fluid von einer Massendurchflußrate, m, nämlichen Fluids abhängige Corioliskräfte zu induzieren, die Coriolis-Schwingungen, nämlich den Nutz-Schwingungen überlagerte und/oder damit gekoppelte mechanische Schwingungen des Meßwandlers in einem Coriolismode, bewirken,
-- in welchem Coriolismode das Verdrängerelement der ersten Wandlereinheit zumindest anteilig von dessen Biegeschwingungen im Nutzmode abweichende, insb. mit nämlichen Biegeschwingungen im Nutzmode gekoppelte bzw. Nutz-Schwingungsfrequenz aufweisende, Biegeschwingungen um die in Strömungsrichtung verlaufende gedachte Biegeschwingungsachse der ersten Wandlereinheit ausführt
-- und in welchem Coriolismode das erste Verbindungselement (112) der ersten Wandlereinheit zumindest anteilig dessen Torsionsschwingungen im Nutzmode überlagerte bzw. Nutz-Schwingungsfrequenz aufweisende, insb. mit den Biegeschwingungen des Verdrängerelements im Coriolismode gekoppelte, Torsionsschwingungen um die erste gedachte Torsionsschwingungsachse der ersten Wandlereinheit und das zweite Verbindungselement (112) der ersten Wandlereinheit zumindest anteilig dessen Torsionsschwingungen im Nutzmode überlagerte, insb. mit den Biegeschwingungen des Verdrängerelements im Coriolismode gekoppelte bzw. Nutz-Schwingungsfrequenz aufweisende, Torsionsschwingungen um die zweite gedachte Torsionsschwingungsachse der ersten Wandlereinheit ausführen, insb. derart, daß zwischen den Torsionsschwingungen des ersten Verbindungselements mit Nutz-Schwingungsfrequenz und den Torsionsschwingungen des zweiten Verbindungselements mit Nutz-Schwingungsfrequenz eine Phasendifferenz existiert, die von der Massendurchflußrate, m, des Fluids abhängig ist.

13. Meßwandler nach Anspruch 11 oder 12,
- wobei im Nutzmode das erste Verbindungselement (112) der ersten Wandlereinheit zumindest anteilig Torsionsschwingungen um eine, insb. zu einer gedachten Hauptträgheitsachse des ersten Verbindungselements (211) parallele bzw. damit koinzidierende, erste gedachte Torsionsschwingungsachse der ersten Wandlereinheit und das zweite Verbindungselement (212) der ersten Wandlereinheit zumindest anteilig zu nämlichen Torsionsschwingungen des ersten Verbindungselements gegengleiche Torsionsschwingungen um eine, insb. zu einer gedachten Hauptträgheitsachse des zweiten Verbindungselements (212) parallele bzw. damit koinzidierende und/oder zur ersten gedachten Torsionsschwingungsachse der ersten Wandlereinheit parallele, zweite gedachte Torsionsschwingungsachse der ersten Wandlereinheit ausführen
- und wobei im Nutzmode das Verdrängerelement der ersten Wandlereinheit zumindest anteilig, insb. mit den Torsionsschwingungen des ersten Verbindungselements und/oder des zweiten Verbindungselements gekoppelte und/oder dazu jeweils frequenzgleiche, Biegeschwingungen um eine, insb. zu einer zugehörigen gedachte Hauptträgheitsachse parallele und/oder in Strömungsrichtung verlaufende, gedachte Biegeschwingungsachse der ersten Wandlereinheit ausführt.

14. Meßwandler nach einem der vorherigen Ansprüche, weiters umfassend: eine, insb. zur ersten Wandlereinheit (21) baugleiche, zweite Wandlereinheit (22), die
- wenigstens ein, insb. zumindest teilweise plattenförmiges und/oder zumindest teilweise stabförmiges und/oder metallisches und/oder zum Verdrängerelement (210) der ersten Wandlereinheit baugleiches, Verdrängerelement (220),
- ein, insb. zumindest teilweise hülsenförmiges und/oder zumindest teilweise stabförmiges und/oder zumindest teilweise schalenförmiges und/oder zumindest teilweise scheibenförmige und/oder zumindest teilweise kreiszylindrisches und/oder metallisches und/oder als Kraftübertrager dienliches und/oder zum ersten Verbindungselement (211) der ersten Wandlereinheit baugleiches, erstes Verbindungselement (221),
- sowie wenigstens ein, insb. zumindest teilweise hülsenförmiges und/oder zumindest teilweise schalenförmiges und/oder zumindest teilweise kreiszylindrisches und/oder metallisches und/oder als Kraftübertrager dienliches und/oder zum zweiten Verbindungselement (212) der ersten Wandlereinheit und/oder zum ersten Verbindungselement (221) der zweiten Wandlereinheit baugleiches, zweites Verbindungselement (222) aufweist,
- wobei nämliches erstes Verbindungselement (221) der zweiten Wandlereinheit (22) mit nämlichem Verdrängerelement der zweiten Wandlereinheit (22) mechanisch verbunden ist
- und wobei nämliches zweites Verbindungselement (222) der zweiten Wandlereinheit (22) in Richtung einer gedachten Längsachse nämlichen Verdrängerelements (220) vom ersten Verbindungselement (221) der zweiten Wandlereinheit (22) beabstandet mit dem Verdrängerelement (220) der zweiten Wandlereinheit (22) mechanisch verbunden ist.

15. Meßwandler nach dem vorherigen Anspruch,
- wobei die zweite Wandlereinheit in das Rohr eingesetzt und damit mechanische verbunden ist, derart,
-- daß deren Verdrängerelement (220) vom Verdrängerelement (210) der ersten Wandlereinheit (21) beabstandet innerhalb des Lumens nämlichen Rohrs plaziert ist
-- und daß jedes von deren ersten und zweiten Verbindungselementen (221, 222) jeweils zumindest teilweise innerhalb der Wandung nämlichen Rohrs plaziert und damit mechanisch verbunden ist, derart, daß das zweite Verbindungselement (222) der zweiten Wandlereinheit (22) in Richtung einer gedachten Längsachse des Rohrs vom ersten Verbindungselement (221) der zweiten Wandlereinheit (22) beabstandet mit der Wandung des Rohrs mechanisch verbunden und/oder in Strömungsrichtung stromabwärts des ersten Verbindungselements der zweiten Wandlereinheit (22) angeordnet ist,
- und wobei die zweite Wandlereinheit (22) eingerichtet ist, von sich im Lumen des Rohrs befindendem Fluid kontaktiert und währenddessen vibrieren gelassen zu werden, derart, daß sowohl jedes von deren ersten und zweiten Verbindungselementen (221, 222) als auch deren Verdrängerelement (220) jeweils zumindest anteilig elastisch verformt werden, insb. nämlich derart, daß jedes der ersten und zweiten Verbindungselemente der zweiten Wandlereinheit (22) zumindest anteilig um jeweils eine jeweilige gedachte Hauptträgheitsachse verdreht wird und/oder daß das Verdrängerelement der zweiten Wandlereinheit (22) zumindest anteilig in Richtung eines zu einer gedachten Hauptträgheitsachse des ersten Verbindungselements der zweiten Wandlereinheit (22) und/oder zu einer gedachten Hauptträgheitsachse des zweiten Verbindungselements der zweiten Wandlereinheit (22) senkrechten Durchmessers des Rohrs aus einer statischen Ruhelage ausgebogen wird; und/oder
- wobei die zweite Wandlereinheit (22) in das Rohr (10) eingesetzt und damit mechanische verbunden ist, derart, daß nämliche Wandlereinheit zur ersten Wandlereinheit (21) zumindest teilweise parallel verlaufend angeordnet ist; und/oder
- wobei die zweite Wandlereinheit (22) wenigstens eine, insb. niedrigste, Resonanzfrequenz aufweist, die gleich einer, insb. niedrigsten, Resonanzfrequenz der ersten Wandlereinheit ist.

16. Meßwandler nach dem vorherigen Anspruch,
- wobei im Nutzmode auch das erste Verbindungselement (112) der zweiten Wandlereinheit zumindest anteilig, insb. zu den Torsionsschwingungen des ersten Verbindungselements der ersten Wandlereinheit gegenphasige und/oder gegengleiche, Torsionsschwingungen um eine, insb. zu einer zugehörigen gedachte Hauptträgheitsachse parallele bzw. damit koinzidierende, erste gedachte Torsionsschwingungsachse der zweiten Wandlereinheit und das zweite Verbindungselement (112) der zweiten Wandlereinheit zumindest anteilig zu nämlichen Torsionsschwingungen des ersten Verbindungselements der zweiten Wandlereinheit gegenphasige und/oder gegengleiche, insb. auch zu den Torsionsschwingungen des zweiten Verbindungselements der ersten Wandlereinheit gegenphasige und/oder gegengleiche, Torsionsschwingungen um eine, insb. zu einer zugehörigen gedachte Hauptträgheitsachse bzw. damit koinzidierende und/oder zur ersten gedachten Torsionsschwingungsachse parallele, zweite gedachte Torsionsschwingungsachse der zweiten Wandlereinheit ausführen und wobei Nutzmode auch das Verdrängerelement der zweiten Wandlereinheit zumindest anteilig, insb. mit Torsionsschwingungen des ersten Verbindungselements der zweiten Wandlereinheit und/oder des zweiten Verbindungselements der zweiten Wandlereinheit gekoppelte und/oder dazu frequenzgleiche und/oder zu Biegeschwingungen des Verdrängerelements der ersten Wandlereinheit im Nutzmode gegengleiche, Biegeschwingungen um eine, insb. zu einer zugehörigen gedachte Hauptträgheitsachse parallele und/oder in Strömungsrichtung verlaufende, gedachte Biegeschwingungsachse der zweiten Wandlereinheit ausführt, insb. derart, daß sowohl die Biegeschwingungen des Verdrängerelements (112) der ersten Wandlereinheit im Nutzmode als auch die Biegeschwingungen des Verdrängerelements (112) der zweiten Wandlereinheit im Nutzmode geeignet sind, im durch das Rohr strömendem Fluid von der Massendurchflußrate, m, nämlichen Fluids abhängige, die Coriolis-Schwingungen bewirkende Corioliskräfte zu induzieren; und/oder
- wobei die Sensoranordnung (40) eingerichtet ist, ein mechanische Schwingungen der ersten und zweiten Wandlereinheiten, insb. nämlich Torsionsschwingungen des ersten Verbindungselements der ersten Wandlereinheit sowie Torsionsschwingungen des ersten Verbindungselements der zweiten Wandlereinheit, repräsentierendes, insb. elektrisches, erstes Schwingungssignal (s1) zu generieren, insb. nämlich die, insb. Nutz-Schwingungsfrequenz aufweisende, Torsionsschwingungen des ersten Verbindungselements der ersten Wandlereinheit sowie die, insb. Nutz-Schwingungsfrequenz aufweisende, Torsionsschwingungen des ersten Verbindungselements der zweiten Wandlereinheit zu erfassen und das erste Schwingungssignal (s1) mit einer, insb. zumindest nämliche Torsionsschwingungen der ersten Verbindungselemente repräsentierenden, Meßkomponente, nämlich einer eine der Nutz-Schwingungsfrequenz entsprechenden Signalfrequenz aufweisenden Signalkomponente zu generieren und/oder ein mechanische Schwingungen der ersten und zweiten Wandlereinheiten, insb. nämlich Torsionsschwingungen des zweiten Verbindungselements der ersten Wandlereinheit sowie Torsionsschwingungen des zweiten Verbindungselements der zweiten Wandlereinheit, repräsentierendes, insb. elektrisches, zweites Schwingungssignal (s2) zu generieren.

17. Meßwandler nach einem der vorherigen Ansprüche,
- wobei die Sensoranordnung (40) eingerichtet ist, zumindest die die Nutz-Schwingungsfrequenz aufweisenden Torsionsschwingungen des ersten Verbindungselements der ersten Wandlereinheit zu erfassen und das erste Schwingungssignal (s1) mit einer, insb. zumindest nämliche Torsionsschwingungen des ersten Verbindungselements repräsentierenden, Meßkomponente, nämlich einer eine der Nutz-Schwingungsfrequenz entsprechenden Signalfrequenz aufweisenden Signalkomponente zu generieren;
- und wobei die Sensoranordnung (40) eingerichtet ist, zumindest die die Nutz-Schwingungsfrequenz aufweisenden Torsionsschwingungen des zweiten Verbindungselements der ersten Wandlereinheit zu erfassen und das zweite Schwingungssignal (s1) mit einer, insb. nämliche Torsionsschwingungen des zweiten Verbindungselements repräsentierenden, Meßkomponente, nämlich einer eine der Nutz-Schwingungsfrequenz entsprechenden Signalfrequenz aufweisenden Signalkomponente zu generieren, insb. derart, daß zwischen der Meßkomponente des ersten Schwingungssignals (s1) und der Meßkomponente des zweiten Schwingungssignals (s2) eine von der Massendurchflußrate, m, des Fluids abhängige Phasendifferenz (Δϕ) existiert.

18. Vibronisches Meßsystem zum Messen und/oder Überwachen wenigstens eines, insb. zeitlich veränderlichen, Strömungsparameters, insb. einer Massendurchflußrate, einer Volumendurchflußrate und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Fluids, insb. eines Gases, einer Flüssigkeit oder einer Dispersion, welches Meßsystem umfaßt:
- einen Meßwandler (MW) gemäß einem der vorherigen Ansprüche;
- sowie eine sowohl mit dessen Erregeranordnung (30) als auch mit dessen Sensoranordnung (40), insb. mittels elektrischer Verbindungsleitungen, elektrisch gekoppelte, insb. mittels wenigstens eines Mikroprozessors und/oder mittels wenigstens eines digitalen Signalprozessors gebildete, Meß- und Betriebselektronik (ME).

19. Vibronisches Meßsystem nach dem vorherigen Anspruch ,
- wobei die Meß- und Betriebselektronik eingerichtet ist, das erste Schwingungssignal (s1) zu empfangen und/oder zu verarbeiten, insb. nämlich basierend auf dem ersten Schwingungssignal (s1) einen den wenigstens einen Stoffparameter repräsentierenden Stoffparameterwert zu ermitteln, insb. nämlich basierend auf dem ersten Schwingungssignal (s1) einen den wenigstens einen Stoffparameter repräsentierenden Stoffparameterwert zu ermitteln, insb. nämlich basierend auf einer der Nutz-Schwingungsfrequenz entsprechenden Signalfrequenz wenigstens des ersten Schwingungssignals (s1, s2) einen eine Dichte des Fluids repräsentierenden Dichte-Meßwert zu ermitteln, insb. auch nämlichen Dichte-Meßwert mit wenigstens einem vorgegebenen Dichte-Schwellenwert zu vergleichen; und/oder
- wobei die Meß- und Betriebselektronik eingerichtet ist, sowohl das erste Schwingungssignal (s1) als auch das zweite Schwingungssignal (s2) zu empfangen und/oder zu verarbeiten, insb. nämlich basierend auf dem ersten Schwingungssignal (s1) und/oder dem zweiten Schwingungssignal (s2) einen den wenigstens einen Strömungsparameter repräsentierenden Strömungsparameterwert, insb. einen eine Massendurchflußrate, m, des Fluids repräsentierenden Massendurchfluß-Meßwert, und/oder einen den wenigstens einen Stoffparameter repräsentierenden Stoffparameterwert, insb. einen eine Dichte des Fluids repräsentierenden Dichte-Meßwert und/oder einen eine Viskosität des Fluids repräsentierenden Viskosität-Meßwert, zu ermitteln; und/oder
- wobei die Meß- und Betriebselektronik eingerichtet ist, mittels wenigstens eines, insb. eine einer Resonanzfrequenz der ersten Wandlereinheit (21) entsprechende Signalfrequenz aufweisenden, elektrischen Erregersignals (e₁) zumindest die Nutz-Schwingungen erzwingende elektrische Leistung in die Erregeranordnung (30) einzuspeisen, insb. nämlich wenigstens eine Signalfrequenz des Erregersignals (e₁) zu variieren und/oder das Erregersignal (e₁) mit einer Vielzahl verschiedener Signalfrequenzen zu generieren und/oder derart, daß das Erregersignal (e₁) eine einer Resonanzfrequenz der ersten Wandlereinheit (21) entsprechende Signalfrequenz aufweist; und/oder
- wobei die Meß- und Betriebselektronik eingerichtet ist, basierend auf dem Erregersignal (e₁), insb. basierend auf dem Erregersignal (e₁) sowie dem wenigstens einen Schwingungssignal (s1), einen eine Viskosität des Fluids repräsentierenden Viskosität-Meßwert zu ermitteln, insb. auch nämlichen Viskosität-Meßwert mit wenigstens einem vorgegebenen Viskosität-Schwellenwert zu vergleichen.

20. Verwendung eines Meßwandlers nach einem der Ansprüche 1 bis 17 oder eines Meßsystems nach einem der Ansprüche 18 bis 19 zum Messen und/oder Überwachen eines in einer, insb. eine Nennweite von mehr als 100 mm aufweisenden, Rohrleitung strömenden, insb. eine Temperatur von mehr als 100°C und/oder einen statischen Druck von mehr als 100 bar aufweisenden Fluids, insb. eines mit einer Massendurchflußrate von mehr als 500 t/h strömenden Gases.

## Claims

1. Transducer for a vibronic measuring system, said transducer comprising:
- a tube (10) which has an interior channel (10') enclosed by a wall, particularly metal and/or hollow cylindrical, said tube extending from a first end (10a) on the inlet side, particularly enclosed by a connection flange, to a second end (10b) on the outlet side, particularly enclosed by a connection flange, said tube particularly being at least partially straight and/or insertable in the course of a pipe and said tube having a caliber of more than 50 mm, wherein said tube is designed to have a fluid flow through it, particularly a gas, a liquid or a dispersion, in a flow direction, specifically going from the first end on the inlet side in the direction of the second end on the outlet side;
- a first transducer unit (21), which comprises
-- at least a displacer element (210), particularly at least partially disk-shaped and/or metal,
-- a first connection element (211), particularly at least partially sleeve-shaped and/or at least partially rod-shaped and/or at least partially shell-shaped and/or at least partially disk-shaped and/or at least partially circular cylindrical and/or metal and/or serving as a torsion spring,
-- and at least a second connection element (212), particularly at least partially sleeve-shaped and/or at least partially rod-shaped and/or at least partially shell-shaped and/or at least partially disk-shaped and/or at least partially circular cylindrical and/or metal and/or serving as a torsion spring and/or identical in design to the first connection element (211),
--- wherein the first connection element of the first transducer unit (21) is mechanically connected to the displacer element of the first transducer unit (21)
--- and wherein the second connection element of the first transducer unit (21) is mechanically connected to the displacer element of the first transducer unit (21), in the direction of an imaginary longitudinal axis of said displacer element, spaced at a distance from the first connection element of the first transducer unit (21);
- an electromechanical exciter arrangement (30), particularly comprising at least an electrodynamic or piezoelectric vibration exciter (310), to excite and maintain forced mechanical vibrations, particularly resonance vibrations, of the first transducer unit;
- and a sensor arrangement (40), particularly comprising at least an electrodynamic vibration sensor (410) and/or at least two identical vibration sensors (410, 420), said arrangement being designed to measure mechanical vibrations of the first transducer unit, particularly mechanical vibrations of the first connection element and/or mechanical vibrations of the second connection element, and to generate at least a (first) vibration signal (s1) representing mechanical vibrations at least of the first transducer unit, particularly at least torsional vibrations of the first connection element of the first transducer unit or at least torsional vibrations of the second connection element of the first transducer unit;
- wherein the first transducer unit (21) is inserted into the tube and connected mechanically to said tube, in such a way
-- that its displacer element is positioned inside the interior channel of said tube and
-- that each of the first and second connection elements (211, 212) is positioned at least partially inside the wall of said tube and mechanically connected to the tube, in such a way that the second connection element of the first transducer unit (21) is mechanically connected to the tube wall, at a distance from the first connection element of the first transducer unit (21), in the direction of an imaginary longitudinal axis of the tube and/or of an imaginary generatrix of the tube wall, and/or is arranged downstream from the first connection element in the flow direction;
- wherein the first transducer unit (21) is designed to be put into contact with the fluid that is present in the interior channel of the tube and to be made to vibrate during this time, in such a way that each of its first and second connection elements as well as their displacer elements are each at least partially deformed elastically, specifically in such a way
-- that each of the first and second connection elements is at least partially turned around an imaginary main axis of inertia
-- and in that the displacer element of the first transducer unit (21) is at least partially curved from a static resting position in the direction of a diameter of the tube that is perpendicular to an imaginary main axis of inertia of the first connection element of the first transducer unit (21) and/or to an imaginary main axis of inertia of the second connection element of the first transducer unit (21);
- and wherein the sensor arrangement (40) is designed to generate
-- both a first vibration signal (s1), particularly electrical, representing mechanical vibrations at least of the first transducer unit, specifically representing at least torsional vibrations of the first connection element of the first transducer unit, particularly in such a way that the first vibration signal has a measuring component, particularly a signal component with a signal frequency corresponding to the useful vibration frequency,
-- and a second vibration signal (s2), particularly electrical, representing mechanical vibrations at least of the first transducer unit, specifically representing at least torsional vibrations of the second connection element of the first transducer unit, particularly in such a way that the second vibration signal has a measuring component, particularly a signal component with a signal frequency corresponding to the useful vibration frequency and/or such that a phase difference (Δϕ) - that depends on the mass flow rate, m, of the fluid - exists between the first vibration signal (s1) and the second vibration signal (s2).

2. Transducer as claimed in the previous claim,
- wherein the first connection element (211) of the first transducer unit is made at least partially, particularly predominantly or completely, from a metal, particularly a stainless steel or a nickel-based alloy; and/or
- wherein the second connection element (212) of the first transducer unit is made at least partially, particularly predominantly or completely, from a metal, particularly a stainless steel or a nickel-based alloy; and/or
- wherein the displacer element of the first transducer unit is made at least partially, particularly predominantly or completely, from a metal, particularly a stainless steel or a nickel-based alloy;
and/or
- wherein the first connection element (211) of the first transducer unit and the displacer element of the first transducer unit are made from the same material; and/or
- wherein the second connection element (212) of the first transducer unit and the displacer element of the first transducer unit are made from the same material; and/or
- wherein the first connection element (211) of the first transducer unit and the second connection element (211) of the first transducer unit are made from the same material; and/or
- wherein the tube wall has a minimum wall thickness which is greater than 2 mm, particularly greater than 5 mm; and/or
- wherein the tube wall is made at least partially, particularly predominantly or completely, from a steel, particularly a high-resistance stainless steel and/or a nickel-based alloy; and/or
- wherein the tube has a length, measured as the shortest distance between its first end and its second end, which is less than a caliber (DN) of said tube; and/or
- wherein the tube has a caliber that is greater than 10 mm, particularly greater than 500 mm.

3. Transducer as claimed in one of the previous claims,
- further comprising: at least a (first) support structure (510) fixed on the outside of the tube wall and extending particularly at least from the first to the second connection element of the first transducer unit and/or extending parallel to the displacer element of the first transducer unit, wherein said support structure is designed to hold components of the sensor arrangement (40) and/or components of the exciter arrangement (30); and/or
- further comprising: a protective housing fixed on the outside of the tube and at least partially surrounding said tube, wherein the sensor arrangement and/or the exciter arrangement are arranged inside the protective housing.

4. Transducer as claimed in one of the previous claims,
- wherein the sensor arrangement (40) comprises a first vibration sensor (410), particularly electrodynamic or piezoelectric or capacitive; and
- wherein the sensor arrangement (40) comprises a second vibration sensor (420), particularly electrodynamic or piezoelectric or capacitive;
- wherein the first vibration sensor is mechanically connected at least to the first connection element (211) of the first transducer unit; and
- wherein the second vibration sensor is mechanically connected at least to the second connection element (212) of the first transducer unit (21).

5. Transducer as claimed in one of the previous claims, wherein the exciter arrangement (30) has at least a first vibration exciter (310), particularly electrodynamic or piezoelectric, to generate a (first) excitation force which causes mechanical vibrations, particularly useful vibrations, of the first transducer unit, particularly variable over time and/or at least temporarily periodic, wherein said first vibration exciter (310) is mechanically connected at least to the first connection element of the first transducer unit, and is particularly mechanically connected both to the first connection element of the first transducer unit and to the second connection element of the first transducer unit.

6. Transducer as claimed in the previous claim,
- wherein the exciter arrangement (40) has at least a second vibration exciter, particularly electrodynamic or piezoelectric and/or identical in design to the first vibration exciter and/or mechanically connected at least to the second connection element of the first transducer unit, to generate a second excitation force which causes mechanical vibrations, particularly useful vibrations, of the first transducer unit, particularly variable over time and/or at least temporarily periodic; and/or
- wherein the imaginary main axis of inertia of the first connection element of the first transducer unit (21) and the imaginary main axis of inertia of the second connection element of the first transducer unit (21) are parallel to one another; and/or
- wherein the first transducer unit is axisymmetric or in mirror symmetry at least in relation to a corresponding imaginary main axis of inertia, particularly parallel to the imaginary main axis of inertia of the first connection element of the first transducer unit (21) and/or to the imaginary main axis of inertia of the second connection element of the first transducer unit (21); and/or
- wherein the sensor arrangement (40) is designed to generate a first vibration signal (s1), particularly electrical, representing mechanical vibrations at least of the first transducer unit, particularly at least torsional vibrations of the first connection element of the first transducer unit, particularly in such a way that the first vibration signal has a measuring component, particularly a signal component with a signal frequency corresponding to the useful vibration frequency, particularly to measure at least torsional vibrations, which have the useful vibration frequency, of the first connection element of the first transducer unit, and to generate the first vibration signal (s1) with a measuring component particularly representing at least said torsional vibrations of the first connection element, particularly a signal component having a signal frequency corresponding to a useful vibration frequency, and/or to generate a second vibration signal (s2), particularly electrical, representing mechanical vibrations at least of the first transducer unit, particularly at least torsional vibrations of the second connection element of the first transducer unit, particularly in such a way that the second vibration signal has a measuring component, particularly a signal component with a signal frequency corresponding to the useful vibration frequency and/or in such a way that a phase difference (Δϕ) - that depends on the mass flow rate, m, of the fluid - exists between the first vibration signal (s1) and the second vibration signal (s2).

7. Transducer as claimed in one of the previous claims, wherein the first transducer unit (20) further comprises:
- a third connection element (213), particularly at least partially sleeve-shaped and/or at least partially rod-shaped and/or at least partially shell-shaped and/or at least partially disk-shaped and/or metal and/or identical in design to the first connection element (211),
- as well as at least a fourth connection element (214), particularly at least partially sleeve-shaped and/or at least partially rod-shaped and/or at least partially shell-shaped and/or at least partially disk-shaped and/or metal and/or identical in design to the third connection element (213);
- wherein the third connection element of the first transducer unit is mechanically connected to the displacer element of the first transducer unit,
- and wherein the fourth connection element of the first transducer unit is mechanically connected to the displacer element of the first transducer unit in the direction of the imaginary longitudinal axis of said displacer element and/or along an imaginary generatrix of the tube wall, spaced at a distance from the third connection element.

8. Transducer as claimed in the previous claim,
- wherein the first and third connection elements (211, 213) are arranged and mechanically connected to the displacer element in such a way that an imaginary main axis of inertia of the first connection element and an imaginary main axis of inertia of the third connection element are flush-aligned with one another; and/or
- wherein the second and fourth connection elements (212, 214) are arranged and mechanically connected to the displacer element in such a way that an imaginary main axis of inertia of the second connection element and an imaginary main axis of inertia of the fourth connection element are flush-aligned with one another; and/or
- wherein the third connection element (213) is positioned on the tube at a distance from the first connection element (211) along a circumferential line of the wall, particularly diametrically opposed to the first connection element (211); and/or
- wherein the fourth connection element (214) is positioned on the tube at a distance from the second connection element (212) along a circumferential line of the wall, particularly diametrically opposed to the second connection element (212); and/or
- wherein the fourth connection element (214) is positioned on the tube at a distance from the third connection element (213) along an imaginary generatrix of the wall; and/or
- wherein the first transducer unit (21) is inserted in the tube (10) and connected mechanically to said tube in such a way that each of its third and fourth connection elements (213, 214) is located at least partially in the wall of said tube and mechanically connected to it in such a way that the fourth connection element is mechanically connected to the tube wall in the direction of the imaginary longitudinal axis of the tube, at a distance from the third connection element, and/or is arranged downstream from the third connection element in the flow direction.

9. Transducer as claimed in one of the previous claims, wherein the first transducer unit (21) has different flexural/torsional vibrations modes, particularly having natural modes that are different from one another and natural or resonance frequencies that are different from one another.

10. Transducer as claimed in the previous claim,
- wherein, in each of the flexural/torsional vibrations modes, the first connection element of the first transducer unit performs torsional vibrations around a first imaginary torsional axis of vibration of the first transducer unit, wherein said first imaginary torsional axis of vibration is particularly parallel to, or coincides with, an imaginary main axis of inertia of the first connection element (211), and the second connection element of the first transducer unit performs torsional vibrations around a second imaginary torsional axis of vibration of the first transducer unit, wherein said second imaginary torsional axis of vibration is particularly parallel to, or coincides with, an imaginary main axis of inertia of the second connection element (212) and/or is parallel to the first imaginary torsional axis of vibration of the first transducer unit, and
wherein, in each of the flexural/torsional vibrations modes, the displacer element of the first transducer unit performs flexural vibrations coupled with both the respective torsional vibrations of the first connection element and with the respective torsional vibrations of the second connection element around an imaginary axis of flexural vibration of the first transducer unit, wherein said axis of flexural vibration is particularly parallel to a corresponding imaginary main axis of inertia and/or extends in the flow direction; and/or
- wherein the first transducer unit (21) has a basic flexural/torsional vibration mode, particularly a flexural/torsional vibration mode that has a lowest natural frequency or a lowest resonance frequency of all the flexural/torsional vibrations modes of the first transducer unit, and wherein an overall spring constant of the first transducer unit determining the natural frequency of the basic flexural/torsional vibration mode is greater than 10 % and/or less than 50 % in relation to a spring constant of the displacer element (210) of the first transducer unit contributing to said overall spring constant.

11. Transducer as claimed in one of the previous claims, wherein the exciter arrangement (30) is designed to convert electrical energy into mechanical energy and, during the conversion of electrical energy into mechanical energy, to excite or maintain useful vibrations, particularly forced mechanical vibrations of the measuring transducer in a useful mode, with a useful vibration frequency, particularly a predefinable vibration frequency - particularly depending on a density of the fluid and/or variable during operation and/or corresponding to a current resonance frequency of the first transducer unit (21).

12. Transducer as claimed in Claim 10 and 11,
- wherein the exciter arrangement (30) is designed to excite or maintain the useful vibrations with a vibration frequency that matches a current resonance frequency of the basic flexural/torsional vibration mode of the first transducer unit (21) and/or deviates from it by less than 2 Hz; and/or
- wherein the exciter arrangement (30) is designed to excite or maintain the basic flexural/torsional vibration mode of the first transducer unit (21), particularly with its current resonance frequency; and/or
- wherein the basic flexural/torsional vibration mode of the first transducer unit (21) acts as the useful mode; and/or
- wherein the useful vibrations of the first transducer unit, particularly the flexural vibrations of the displacer element (112) of the first transducer unit in the useful mode, are suitable to induce Coriolis forces which depend on a mass flow rate, m, of said fluid, in the fluid flowing through the tube and which cause Coriolis vibrations, particularly mechanical vibrations of the transducer superimposed on the useful vibrations, and/or coupled thereto, in a Coriolis mode,
-- wherein in said Coriolis mode the displacer element of the first transducer unit produces flexural vibrations - which deviate at least partially from the flexural vibrations in the useful mode, particularly coupled with said flexural vibrations in the useful mode or having a useful vibration frequency - around the imaginary axis of flexural vibration of the first transducer unit which extends in the flow direction
-- and wherein in said Coriolis mode the first connection element (112) of the first transducer unit at least partially produces torsional vibrations - which are superimposed on the torsional vibrations in the useful mode or have a useful vibration frequency, said vibrations being particularly coupled with the flexural vibrations of the displacer element in the Coriolis mode - around the first imaginary torsional axis of vibration of the first transducer unit, and the second connection element (112) of the first transducer unit at least partially produces torsional vibrations - which are superimposed on the torsional vibrations in the useful mode or have a useful vibration frequency, wherein said vibrations are particularly coupled with the flexural vibrations of the displacer element in the Coriolis mode - around the second imaginary torsional axis of vibration of the first transducer unit, particularly in such a way that a phase difference exists between the torsional vibrations of the first connection element with a useful vibration frequency and the torsional vibrations of the second connection element with a useful vibration frequency, wherein said phase difference depends on the mass flow rate, m, of the fluid.

13. Transducer as claimed in Claim 11 or 12,
- wherein, in the useful mode, the first connection element (112) of the first transducer unit at least partially produces torsional vibrations around a first imaginary torsional axis of vibration of the first transducer unit, wherein said first axis is particularly parallel to, or coincides with, an imaginary main axis of inertia of the first connection element (211), and wherein the second connection element (212) of the first transducer unit at least partially produces torsional vibrations - mirror-inverted in relation to the torsional vibrations of the first connection element - around a second imaginary torsional axis of vibration of the first transducer unit, wherein said second axis is particularly parallel to, or coincides with, an imaginary main axis of inertia of the second connection element (212) and/or is parallel to the first imaginary torsional axis of vibration of the first transducer unit
- and wherein, in the useful mode, the displacer element of the first transducer unit at least partially produces flexural vibrations - particularly coupled with the torsional vibrations of the first connection element and/or of the second connection element and/or of equal frequency - around an imaginary axis of flexural vibration of the first transducer unit, wherein said axis is particularly parallel to a corresponding imaginary main axis of inertia and/or extends in the flow direction.

14. Transducer as claimed in one of the previous claims, further comprising: a second transducer unit (22), particularly identical in design to the first transducer unit (21), wherein said second transducer unit has
- at least a displacer element (220), particularly at least partially plate-shaped and/or at least partially rod-shaped and/or metal and/or identical in design to the displacer element (210) of the first transducer unit
- a first connection element (221), particularly at least partially sleeve-shaped and/or at least partially rod-shaped and/or at least partially shell-shaped and/or at least partially disk-shaped and/or at least partially circular cylindrical and/or metal and/or serving as a force transmitter and/or identical in design to the first connection element (211) of the first transducer unit,
- as well as at least a second connection element (222), particularly at least partially sleeve-shaped and/or at least partially shell-shaped and/or at least partially circular cylindrical and/or metal and/or serving as a force transmitter and/or identical in design to the second connection element (212) of the first transducer unit
- wherein said first connection element (221) of the second transducer unit (22) is mechanically connected to a displacer element of the second transducer unit (22)
- and wherein the second connection element (222) of the second transducer unit (22) is mechanically connected to the displacer element (220) of the second transducer unit (22), at a distance from the first connection element (221) of the second transducer unit (22) and in the direction of an imaginary longitudinal axis of said displacer element (220).

15. Transducer as claimed in the previous claim,
- wherein the second transducer unit is inserted in the tube and connected mechanically to said tube in such a way that
-- its displacer element (220) is positioned inside the interior channel of said tube at a distance from the displacer element (210) of the first transducer unit (21)
-- and that all of its first and second connection elements (221, 222) are positioned at least partially inside the wall of said tube and are mechanically connected to it, in such a way that the second connection element (222) of the second transducer unit (22) is mechanically connected to the tube wall in the direction of an imaginary longitudinal axis of the tube at a distance from the first connection element (221) of the second transducer unit (22) and/or is arranged downstream from the first connection element of the second transducer unit (22) in the flow direction,
- and wherein the second transducer unit (22) is designed to be put into contact with the fluid present in the interior channel of the tube and to vibrate during this time in such a way that all of its first and second connection elements (221, 222) and its displacer element (220) are each at least partially deformed elastically, particularly in such a way that all of the first and second connection elements of the second transducer unit (22) are at least partially turned around an imaginary main axis of inertia and/or that the displacer element of the second transducer unit (22) is at least partially curved from a static resting position in the direction of a diameter of the tube which is perpendicular to an imaginary main axis of inertia of the first connection element of the second transducer unit (22) and/or to an imaginary main axis of inertia of the second connection element of the second transducer unit (22); and/or
- wherein the second transducer unit (22) is inserted in the tube (10) and connected mechanically to it in such a way that said transducer unit is at least partially arranged parallel to the first transducer unit (21); and/or
- wherein the second transducer unit (22) has at least a resonance frequency, particularly a lowest resonance frequency, that is equal to a resonance frequency, particularly a lowest resonance frequency, of the first transducer unit.

16. Transducer as claimed in the previous claim,
- wherein, in the useful mode, the first connection element (112) of the second transducer unit also at least partially produces torsional vibrations - particularly anti-phase and/or mirror-inverted in relation to the torsional vibrations of the first connection element of the first transducer unit - around a first imaginary torsional axis of vibration of the second transducer unit, wherein said axis is particularly parallel to a corresponding imaginary main axis of inertia, or coincides with said axis, and the second connection element (112) of the second transducer unit at least partially produces torsional vibrations - anti-phase and/or mirror-inverted in relation to the torsional vibrations of the first connection element of the second transducer unit, particularly also anti-phase and/or mirror-inverted in relation to the torsional vibrations of the second connection element of the first transducer unit - around a second imaginary torsional axis of vibration of the second transducer unit, wherein said axis is particularly parallel to a corresponding imaginary main axis of inertia, or coincides with it, and/or is parallel to the first imaginary torsional axis of vibration, and wherein, in the useful mode, the displacer element of the second transducer unit at least partially produces flexural vibrations - particularly coupled to the torsional vibrations of the first connection element of the second transducer unit and/or of the second connection element of the second transducer unit and/or of an identical frequency thereto and/or in mirror-inverted to the flexural vibrations of the displacer element of the first transducer unit in the useful mode - around an imaginary axis of flexural vibration of the second transducer unit, particularly an axis that is parallel to a corresponding imaginary main axis of inertia and/or which extends in the flow direction, particularly in such a way that both the flexural vibrations of the displacer element (112) of the first transducer unit in the useful mode and the flexural vibrations of the displacer element (112) of the second transducer unit in the useful mode are suitable for inducing Coriolis forces, which depend on the mass flow rate, m, of said fluid and which cause Coriolis vibrations, in the fluid flowing through the tube; and/or
- wherein the sensor arrangement (40) is designed to generate a first vibration signal (s1), particularly electrical, representing mechanical vibrations of the first and of the second transducer unit, particularly torsional vibrations of the first connection element of the first transducer unit and torsional vibrations of the first connection element of the second transducer unit, to particularly measure the torsional vibrations of the first connection element of the first transducer unit, wherein said torsional vibrations have a useful vibration frequency, and torsional vibrations of the first connection element of the second transducer unit, wherein said torsional vibrations have a useful vibration frequency, and to generate the first vibration signal (s1) with a measuring component representing at least torsional vibrations of the first connection elements, particularly a signal component having a signal frequency corresponding to the useful vibration frequency, and/or to generate a second vibration signal (s2), particularly electrical, representing mechanical vibrations of the first and of second transducer unit, particularly torsional vibrations of the second connection element of the first transducer unit and torsional vibrations of the second connection element of the second transducer unit.

17. Transducer as claimed in one of the previous claims,
- wherein the sensor arrangement (40) is designed to measure at least the torsional vibrations of the first connection element of the first transducer unit, wherein said vibrations have the useful vibration frequency, and to generate the first vibration signal (s1) with a measuring component representing at least said torsional vibrations of the first connection element, particularly a signal component having a signal frequency corresponding to the useful vibration frequency;
- and wherein the sensor arrangement (40) is designed to measure at least the torsional vibrations of the second connection element of the first transducer unit, wherein said vibrations have the useful vibration frequency, and to generate the second vibration signal (s2) with a measuring component representing at least said torsional vibrations of the second connection element, particularly a signal component having a signal frequency corresponding to the useful vibration frequency, particularly in such a way that a phase difference (Δϕ), which depends on the mass flow rate, m, of the fluid, exists between the measuring component of the first vibration signal (s1) and the measuring component of the second vibration signal (s2).

18. Vibronic measuring system designed to measure and/or to monitor at least a flow parameter, particularly variable over time, particularly a mass flow rate, a volumetric flow rate and/or a flow velocity, and/or designed to measure and/or monitor at least a material parameter of the medium, particularly variable over time, particularly a density and/or a viscosity, of a flowing medium, particularly a gas, a liquid or a dispersion, wherein said measuring system comprises:
- a transducer (MW) as claimed in one of the previous claims;
- as well as a measurement and operating electronics unit (ME) electrically coupled to both the exciter arrangement (30) and the sensor arrangement (40), particularly by means of electrical connecting lines, and formed particularly by at least a microprocessor and/or by at least a digital signal processer.

19. Vibronic measuring system as claimed in the previous claim,
- wherein the measurement and operating electronics unit is designed to receive and/or process the first vibration signal (s1), particularly to determine a material parameter value representing the at least one material parameter on the basis of the first vibration signal (s1), particularly to determine a density measured value representing a density of the medium on the basis of a signal frequency at least of the first vibration signal (s1, s2), said frequency corresponding to the useful vibration frequency, particularly to also compare said density measured value to at least a predefined density threshold value; and/or
- wherein the measurement and operating electronics unit is designed to receive and/or process both the first vibration signal (s1) and the second vibration signal (s2), particularly to determine, on the basis of the first vibration signal (s1) and/or of the second vibration signal (s2), a flow parameter value representing the at least one flow parameter, particularly a mass flow measured value representing a mass flow rate, m, of the medium, and/or a material parameter value of the medium representing the at least one material parameter of the medium, particularly a density measured value representing a density of the medium and/or a viscosity measured value representing a viscosity of the medium; and/or
- wherein the measuring and operating electronics unit is designed to supply electrical power to the exciter arrangement (30) by means of at least an electrical excitation signal (e₁), particularly with a signal frequency corresponding to a resonance frequency of the first transducer unit (21), said electrical power at least forcing the useful vibrations, particularly to vary at least a signal frequency of the excitation signal (e₁) and/or to generate the excitation signal (e₁) with a variety of different signal frequencies and/or in such a way that the excitation signal (e₁) has a signal frequency corresponding to a resonance frequency of the first transducer unit (21); and/or
- wherein the measurement and operating electronics unit is designed to determine a viscosity measured value representing a viscosity of the fluid on the basis of the excitation signal (e₁), particularly on the basis of the excitation signal (e₁) and the at least one vibration signal (s1), particularly also to compare said viscosity measured value with at least a predefined viscosity threshold value.

20. Use of a transducer as claimed in one of the Claims 1 to 17 or of a measuring system as claimed in one of the Claims 18 to 19, designed to measure and/or monitor a medium flowing through a pipe, particularly with a nominal diameter greater than 100 mm, particularly having a temperature greater than 100 °C and/or a static pressure greater than 100 bar, particularly a gas flowing with a mass flow rate greater than 500 t/h.

## Revendications

1. Transducteur destiné à un système de mesure vibronique, lequel transducteur comprend :
- un tube (10) présentant un canal intérieur (10') entouré d'une paroi, notamment métallique et/ou cylindrique creuse, lequel tube s'étend d'une première extrémité (10a) côté entrée, notamment entourée d'une bride de raccordement, à une deuxième extrémité (10b) côté sortie, notamment entourée d'une bride de raccordement, lequel tube est notamment au moins partiellement droit et/ou peut être inséré dans le tracé d'une conduite et lequel tube présente un calibre de plus de 50 mm, lequel tube est conçu pour être traversé par un fluide, notamment un gaz, un liquide ou une dispersion, dans un sens d'écoulement, à savoir en partant de la première extrémité côté entrée en direction de la deuxième extrémité côté sortie ;
- une première unité de transducteur (21), qui comprend
-- au moins un élément de déplacement (210), notamment au moins partiellement en forme de plaque et/ou métallique,
-- un premier élément de liaison (211), notamment au moins partiellement en forme de douille et/ou au moins partiellement en forme de tige et/ou au moins partiellement en forme de coque et/ou au moins partiellement en forme de disque et/ou au moins partiellement cylindrique circulaire et/ou métallique et/ou servant de ressort de torsion,
-- ainsi qu'au moins un deuxième élément de liaison (212), notamment au moins partiellement en forme de douille et/ou au moins partiellement en forme de tige et/ou au moins partiellement en forme de coque et/ou au moins partiellement en forme de disque et/ou au moins partiellement cylindrique circulaire et/ou métallique et/ou servant de ressort de torsion et/ou de construction identique au premier élément de liaison (211),
--- le premier élément de liaison de la première unité de transducteur (21) étant relié mécaniquement à l'élément de déplacement de la première unité de transducteur (21)
--- et le deuxième élément de liaison de la première unité de transducteur (21) étant relié mécaniquement à l'élément de déplacement de la première unité de transducteur (21), dans la direction d'un axe longitudinal imaginaire du même élément de déplacement espacé du premier élément de liaison de la première unité de transducteur (21) ;
- un dispositif excitateur (30) électromécanique, comprenant notamment au moins un excitateur de vibrations (310) électrodynamique ou piézoélectrique, lequel dispositif est destiné à exciter et à maintenir les vibrations mécaniques forcées, notamment les vibrations de résonance, de la première unité de transducteur ;
- ainsi qu'un dispositif capteur (40), comprenant notamment au moins un capteur de vibrations (410) électrodynamique et/ou au moins deux capteurs de vibrations (410, 420) identiques, lequel dispositif est destiné à mesurer les vibrations mécaniques de la première unité de transducteur, notamment les vibrations mécaniques du premier élément de liaison et/ou les vibrations mécaniques du deuxième élément de liaison, et à générer au moins un (premier) signal de vibration (s1) représentant les vibrations mécaniques au moins de la première unité de transducteur, notamment au moins les vibrations de torsion du premier élément de liaison de la première unité de transducteur ou au moins les vibrations de torsion du deuxième élément de liaison de la première unité de transducteur ;
- la première unité de transducteur (21) étant insérée dans le tube et reliée mécaniquement à celui-ci, de telle sorte
-- que son élément de déplacement est placé à l'intérieur du canal intérieur dudit tube et
-- que chacun de ses premier et deuxième éléments de liaison (211, 212) est placé au moins partiellement à l'intérieur de la paroi dudit tube et relié mécaniquement à celui-ci, de telle manière que le premier élément de liaison de la première unité de transducteur (21) est relié mécaniquement avec la paroi du tube, à distance du premier élément de liaison de la première unité de transducteur (21), dans la direction d'un axe longitudinal imaginaire du tube et/ou d'une génératrice imaginaire de la paroi du tube, et/ou est disposé en aval du premier élément de liaison dans le sens de l'écoulement ;
- la première unité de transducteur (21) étant conçue pour être mise en contact avec un fluide présent dans le canal intérieur du tube et pour être mise en vibration pendant ce temps, de telle sorte que chacun de ses premier et deuxième éléments de liaison ainsi que son élément de déplacement sont chacun déformés élastiquement au moins partiellement, à savoir de telle sorte
-- que chacun des premier et deuxième éléments de liaison est au moins partiellement vrillé autour d'un axe principal d'inertie imaginaire respectif
-- et que l'élément de déplacement de la première unité de transducteur (21) est au moins partiellement courbé à partir d'une position de repos statique dans la direction d'un diamètre du tube perpendiculaire à un axe principal d'inertie imaginaire du premier élément de liaison de la première unité de transducteur (21) et/ou à un axe principal d'inertie imaginaire du deuxième élément de liaison de la première unité de transducteur (21);
- et le dispositif capteur (40) étant conçu pour générer
-- à la fois un signal de vibration mécanique (s1), notamment électrique, représentant au moins la première unité de transducteur, à savoir au moins les vibrations de torsion du premier élément de liaison de la première unité de transducteur, notamment de telle sorte que le premier signal de vibration présente une composante de mesure, à savoir une composante de signal avec une fréquence de signal correspondant à la fréquence de vibration utile,
-- et un deuxième signal de vibration (s2), notamment électrique, représentant les vibrations mécaniques d'au moins la première unité de transducteur, à savoir au moins les vibrations de torsion du deuxième élément de liaison de la première unité de transducteur, notamment de telle sorte que le deuxième signal de vibration présente une composante de mesure, à savoir une composante de signal avec une fréquence de signal correspondant à la fréquence de vibration et/ou qu'il existe une différence de phase (Δϕ) - dépendant du débit massique, m, du fluide - entre le premier signal de vibration (s1) et le deuxième signal de vibration (s2).

2. Transducteur selon la revendication précédente,
- pour lequel le premier élément de liaison (211) de la première unité de transducteur consiste au moins partiellement, notamment de manière prédominante ou complète, en un métal, notamment un acier inoxydable ou un alliage à base de nickel ; et/ou
- pour lequel le deuxième élément de liaison (212) de la première unité de transducteur consiste au moins partiellement, notamment de manière prédominante ou complète, en un métal, notamment un acier inoxydable ou un alliage à base de nickel ; et/ou
- pour lequel l'élément de déplacement de la première unité de transducteur consiste au moins partiellement, notamment de manière prédominante ou complète, en un métal, notamment un acier inoxydable ou un alliage à base de nickel ;
et/ou
- pour lequel le premier élément de liaison (211) de la première unité de transducteur et l'élément de déplacement de la première unité de transducteur sont constitués du même matériau ; et/ou
- pour lequel le deuxième élément de liaison (212) de la première unité de transducteur et l'élément de déplacement de la première unité de transducteur sont constitués du même matériau ; et/ou
- pour lequel le premier élément de liaison (211) de la première unité de transducteur et le deuxième élément de liaison (211) de la première unité de transducteur sont constitués du même matériau ; et/ou
- pour lequel la paroi du tube présente une épaisseur de paroi la plus petite qui est supérieure à 2 mm, notamment supérieure à 5 mm ; et/ou
- pour lequel la paroi du tube est constituée au moins partiellement, notamment de manière prédominante ou complète, d'un acier, notamment d'un acier inoxydable à haute résistance et/ou d'un alliage à base de nickel ; et/ou
- pour lequel le tube présente une longueur, mesurée comme la plus courte distance entre sa première extrémité et sa seconde extrémité, qui est inférieure à un calibre (DN) dudit tube ; et/ou
- pour lequel le tube présente un calibre qui est supérieur à 10 mm, notamment supérieur à 500 mm.

3. Transducteur selon l'une des revendications précédentes,
- comprenant en outre : au moins un (premier) cadre de support (510) fixé à l'extérieur de la paroi du tube et s'étendant notamment au moins du premier au deuxième élément de liaison de la première unité de transducteur et/ou s'étendant parallèlement à l'élément de déplacement de la première unité de transducteur, lequel cadre de support est destiné à maintenir les composants du dispositif capteur (40) et/ou les composants du dispositif excitateur (30) ; et/ou
- comprenant en outre : un boîtier de protection fixé à l'extérieur du tube et l'entourant au moins partiellement, le dispositif capteur et/ou le dispositif excitateur étant disposés à l'intérieur du boîtier de protection.

4. Transducteur selon l'une des revendications précédentes,
- pour lequel le dispositif capteur (40) comprend un premier capteur de vibrations (410), notamment électrodynamique ou piézoélectrique ou capacitif ; et
- pour lequel le dispositif capteur (40) comprend un deuxième capteur de vibrations (420), notamment électrodynamique ou piézoélectrique ou capacitif ;
pour lequel le premier capteur de vibrations est relié mécaniquement au moins au premier élément de liaison (211) de la première unité de transducteur ; et
- pour lequel le deuxième capteur de vibrations est relié mécaniquement au moins au deuxième élément de liaison (212) de la première unité de transducteur (21).

5. Transducteur selon l'une des revendications précédentes, pour lequel le dispositif excitateur (30) - pour générer une (première) force d'excitation qui provoque des vibrations mécaniques, notamment des vibrations utiles, de la première unité de transducteur, notamment variable dans le temps et/ou au moins temporairement périodique - présente au moins un premier excitateur de vibrations (310), notamment électrodynamique ou piézoélectrique, lequel premier excitateur de vibrations (310) est relié mécaniquement au moins au premier élément de liaison de la première unité de transducteur, notamment est relié mécaniquement à la fois au premier élément de liaison de la première unité de transducteur et au deuxième élément de liaison de la première unité de transducteur.

6. Transducteur selon la revendication précédente,
- pour lequel le dispositif excitateur (40) présente au moins un deuxième excitateur de vibrations, notamment électrodynamique ou piézoélectrique et/ou de construction identique au premier excitateur de vibrations et/ou relié mécaniquement au moins au deuxième élément de liaison de la première unité de transducteur, pour générer une deuxième force d'excitation qui provoque des vibrations mécaniques, notamment des vibrations utiles, de la première unité de transducteur et qui est notamment variable dans le temps et/ou au moins temporairement périodique ; et/ou
- pour lequel l'axe principal d'inertie imaginaire du premier élément de liaison de la première unité de transducteur (21) et l'axe principal d'inertie imaginaire du deuxième élément de liaison de la première unité de transducteur (21) sont parallèles l'un à l'autre ; et/ou
- pour lequel la première unité de transducteur est axisymétrique ou à symétrie spéculaire au moins par rapport à un axe principal d'inertie imaginaire correspondant, notamment parallèle à l'axe principal d'inertie imaginaire du premier élément de liaison de la première unité de transducteur (21) et/ou à l'axe principal d'inertie imaginaire du deuxième élément de liaison de la première unité de transducteur (21) ; et/ou
- pour lequel le dispositif capteur (40) est conçu pour générer un premier signal de vibration (s1), notamment électrique, représentant des vibrations mécaniques d'au moins la première unité de transducteur, notamment au moins des vibrations de torsion du premier élément de liaison de la première unité de transducteur, notamment de telle sorte que le premier signal de vibration présente une composante de mesure, à savoir une composante de signal avec une fréquence de signal correspondant à la fréquence de vibration utile, notamment pour détecter au moins les vibrations de torsion, présentant la fréquence de vibration utile, du premier élément de liaison de la première unité de transducteur, et pour générer le premier signal de vibration (s1) avec une composante de mesure représentant notamment au moins les dites vibrations de torsion du premier élément de liaison, notamment une composante de signal présentant une fréquence de signal correspondant à une fréquence de vibration utile, et/ou pour générer un deuxième signal de vibration (s2), notamment électrique, représentant les vibrations mécaniques au moins de la première unité de transducteur, à savoir au moins les vibrations de torsion du deuxième élément de liaison de la première unité de transducteur, notamment de telle sorte le deuxième signal de vibration présente une composante de mesure, à savoir une composante de signal avec une fréquence de signal correspondant à la fréquence de vibration utile et/ou qu'il existe une différence de phase (Δϕ) - dépendant du débit massique, m, du fluide - entre le premier signal de vibration (s1) et le deuxième signal de vibration (s2).

7. Transducteur selon l'une des revendications précédentes, pour lequel la première unité de transducteur (20) comprend en outre :
- un troisième élément de liaison (213), notamment au moins partiellement en forme de douille et/ou au moins partiellement en forme de tige et/ou au moins partiellement en forme de coque et/ou au moins partiellement en forme de disque et/ou métallique et/ou de construction identique au premier élément de liaison (211),
- ainsi qu'au moins un quatrième élément de liaison (214), notamment au moins partiellement en forme de douille et/ou au moins partiellement en forme de tige et/ou au moins partiellement en forme de coque et/ou au moins partiellement en forme de disque et/ou métallique et/ou de construction identique au troisième élément de liaison (213) ;
- pour lequel le troisième élément de liaison de la première unité de transducteur est relié mécaniquement à l'élément de déplacement de la première unité de transducteur,
- et pour lequel le quatrième élément de liaison de la première unité de transducteur est relié mécaniquement à l'élément de déplacement de la première unité de transducteur dans la direction de l'axe longitudinal imaginaire du même élément de déplacement et/ou le long d'une génératrice imaginaire de la paroi du tube espacée du troisième élément de liaison.

8. Transducteur selon la revendication précédente,
- pour lequel les premier et troisième éléments de liaison (211, 213) sont disposés et reliés mécaniquement à l'élément de déplacement de telle sorte qu'un axe principal d'inertie imaginaire du premier élément de liaison et un axe principal d'inertie imaginaire du troisième élément de liaison sont alignés l'un avec l'autre ; et/ou
- pour lequel les deuxième et quatrième éléments de liaison (212, 214) sont disposés et reliés mécaniquement à l'élément de déplacement de sorte qu'un axe principal d'inertie imaginaire du deuxième élément de liaison et un axe principal d'inertie imaginaire du quatrième élément de liaison sont alignés l'un avec l'autre ; et/ou
- pour lequel le troisième élément de liaison (213) est positionné sur le tube à distance du premier élément de liaison (211) le long d'une ligne circonférentielle de la paroi, notamment diamétralement opposé au premier élément de liaison (211) ; et/ou
- pour lequel le quatrième élément de liaison (214) est positionné à distance du deuxième élément de liaison (212) le long d'une ligne circonférentielle de la paroi, notamment diamétralement opposé au deuxième élément de liaison (212) ; et/ou
- pour lequel le quatrième élément de liaison (214) est positionné sur le tube à distance du troisième élément de liaison (213) le long d'une génératrice imaginaire de la paroi ; et/ou
- pour lequel la première unité de transducteur (21) est insérée dans le tube (10) et reliée mécaniquement à celui-ci de telle sorte que chacun de ses troisième et quatrième éléments de liaison (213, 214) est respectivement placé au moins partiellement dans la paroi du même tube et relié mécaniquement à celui-ci de telle sorte que le quatrième élément de liaison est relié mécaniquement à la paroi du tube dans la direction de l'axe longitudinal imaginaire du tube, à distance du troisième élément de liaison, et/ou est disposé en aval du troisième élément de liaison dans le sens de l'écoulement.

9. Transducteur selon l'une des revendications précédentes, pour lequel la première unité de transducteur (21) présente différents modes de vibration de flexion/torsion, notamment présentant à la fois des formes naturelles différentes les unes des autres et des fréquences naturelles ou de résonance différentes les unes des autres.

10. Transducteur selon la revendication précédente,
- pour lequel, dans chacun des modes de vibration de flexion/torsion, le premier élément de liaison de la première unité de transducteur exécute à chaque fois des vibrations de torsion autour d'un premier axe de vibration de torsion imaginaire de la première unité de transducteur, lequel premier axe de vibration de torsion imaginaire est notamment parallèle à, ou coïncide avec, un axe principal d'inertie imaginaire du premier élément de liaison (211), et le deuxième élément de liaison de la première unité de transducteur exécute à chaque fois des vibrations de torsion autour d'un deuxième axe de vibration de torsion imaginaire de la première unité de transducteur, lequel deuxième axe de vibration de torsion imaginaire est notamment parallèle à, ou coïncide avec, un axe principal d'inertie imaginaire du deuxième élément de liaison (212) et/ou est parallèle au premier axe de vibration de torsion imaginaire de la première unité de transducteur, et
pour lequel, dans chacun des modes de vibration de flexion/torsion, l'élément de déplacement de la première unité de transducteur exécute à chaque fois des vibrations de flexion couplées à la fois aux vibrations de torsion respectives du premier élément de liaison et aux vibrations de torsion respectives du deuxième élément de liaison autour d'un axe de vibration de flexion imaginaire de la première unité de transducteur, lequel axe de vibration de flexion est notamment parallèle à un axe principal d'inertie imaginaire correspondant et/ou s'étend dans le sens de l'écoulement ; et/ou
- pour lequel la première unité de transducteur (21) présente un mode fondamental de vibration de flexion/torsion, à savoir un mode de vibration de flexion/torsion présentant une fréquence naturelle la plus basse ou une fréquence de résonance la plus basse de tous les modes de vibration de flexion/torsion de la première unité de transducteur, et pour lequel une constante d'élasticité totale de la première unité de transducteur déterminant la fréquence naturelle du mode fondamental de vibration de flexion/torsion est supérieure à 10 % et/ou inférieure à 50 % par rapport à une constante d'élasticité de l'élément de déplacement (210) de la première unité de transducteur contribuant à la même constante d'élasticité totale.

11. Transducteur selon l'une des revendications précédentes, pour lequel le dispositif excitateur (30) est conçu pour convertir de l'énergie électrique en énergie mécanique et, lors de la conversion de l'énergie électrique en énergie mécanique, pour exciter ou maintenir des vibrations utiles, à savoir des vibrations mécaniques forcées du transducteur de mesure dans un mode utile, avec une fréquence de vibration utile, à savoir une fréquence de vibration prédéfinissable - notamment dépendant d'une densité du fluide et/ou variable pendant le fonctionnement et/ou correspondant à une fréquence de résonance instantanée de la première unité de transducteur (21).

12. Transducteur selon la revendication 10 et 11,
- pour lequel le dispositif excitateur (30) est conçu pour exciter ou maintenir les vibrations utiles avec une fréquence de vibration qui coïncide avec une fréquence de résonance instantanée du mode fondamental de vibration de flexion/torsion de la première unité de transducteur (21) et/ou s'en écarte de moins de 2 Hz ; et/ou
- pour lequel le dispositif excitateur (30) est conçu pour exciter ou maintenir le mode fondamental de vibration de flexion/torsion de la première unité de transducteur (21), notamment avec sa fréquence de résonance instantanée ; et/ou
- pour lequel le mode fondamental de vibration de flexion/torsion de la première unité de transducteur (21) sert de mode utile ; et/ou
- pour lequel les vibrations utiles de la première unité de transducteur, notamment les vibrations de flexion de l'élément de déplacement (112) de la première unité de transducteur dans le mode utile, sont appropriées pour induire dans le fluide circulant dans le tube des forces de Coriolis qui dépendent d'un débit massique, m, dudit fluide et qui provoquent des vibrations de Coriolis, à savoir des vibrations mécaniques du transducteur superposées aux vibrations utiles et/ou couplées à celles-ci dans un mode Coriolis,
-- mode Coriolis dans lequel l'élément de déplacement de la première unité de transducteur exécute des vibrations - qui s'écartent au moins partiellement de ses vibrations de flexion dans le mode utile, avec des vibrations de flexion couplées avec les même vibrations de flexion dans le mode utile ou une fréquence de vibration utile - autour de l'axe de vibration de flexion imaginaire de la première unité de transducteur s'étendant dans le sens de l'écoulement
-- et mode Coriolis dans lequel le premier élément de liaison (112) de la première unité de transducteur exécute au moins partiellement ses vibrations de torsion - lesquelles se superposent à ses vibrations de torsion dans le mode utile ou présentent une fréquence de vibration utile, lesquelles vibrations sont notamment couplées avec les vibrations de torsion de l'élément de déplacement dans le mode Coriolis - autour du premier axe de vibration de torsion imaginaire de la première unité de transducteur, et le deuxième élément de liaison (112) de la première unité de transducteur exécute au moins partiellement ses vibrations de torsion - lesquelles se superposent à ses vibrations de torsion dans le mode utile ou présentent une fréquence de vibration utile, lesquelles vibrations sont notamment couplées avec les vibrations de torsion de l'élément de déplacement dans le mode Coriolis - autour du deuxième axe de vibration de torsion imaginaire de la première unité de transducteur, notamment de telle sorte qu'il existe une différence de phase entre les vibrations de torsion du premier élément de liaison avec une fréquence de vibration utile et les vibrations de torsion du deuxième élément de liaison avec une fréquence de vibration utile, laquelle différence de phase dépend du débit massique, m, du fluide.

13. Transducteur selon la revendication 11 ou 12,
- pour lequel, dans le mode utile, le premier élément de liaison (112) de la première unité de transducteur exécute au moins partiellement des vibrations de torsion autour d'un premier axe de vibration de torsion imaginaire de la première unité de transducteur, lequel premier axe est notamment parallèle à, ou coïncide avec, un axe principal d'inertie imaginaire du premier élément de liaison (211), et le deuxième élément de liaison (212) de la première unité de transducteur exécute au moins partiellement des vibrations de torsion - en sens opposé aux vibrations de torsion du premier élément de liaison - autour d'un deuxième axe de vibration de torsion imaginaire de la première unité de transducteur, lequel deuxième axe est notamment parallèle à, ou coïncide avec, un axe principal d'inertie imaginaire du deuxième élément de liaison (212) et/ou parallèle au premier axe de vibration de torsion imaginaire de la première unité de transducteur
- et pour lequel, dans le mode utile, l'élément de déplacement de la première unité de transducteur exécute au moins partiellement des vibrations de flexion - notamment couplées avec les vibrations de torsion du premier élément de liaison et/ou du deuxième élément de liaison et/ou respectivement de fréquence égale à celles-ci - autour d'un axe de vibration de flexion imaginaire de la première unité de transducteur, lequel axe est notamment parallèle à un axe principal d'inertie imaginaire correspondant et/ou s'étend dans le sens de l'écoulement.

14. Transducteur selon l'une des revendications précédentes, comprenant en outre : une deuxième unité de transducteur (22), notamment de construction identique à la première unité de transducteur (21), laquelle deuxième unité de transducteur présente
- au moins un élément de déplacement (220), notamment au moins partiellement en forme de plaque et/ou au moins partiellement en forme de tige et/ou métallique et/ou de construction identique à l'élément de déplacement (210) de la première unité de transducteur
- un premier élément de liaison (221), notamment au moins partiellement en forme de douille et/ou au moins partiellement en forme de tige et/ou au moins partiellement en forme de coque et/ou au moins partiellement en forme de disque et/ou au moins partiellement cylindrique circulaire et/ou métallique et/ou servant de transmetteur de force et/ou de construction identique au premier élément de liaison (211) de la première unité de transducteur,
- ainsi qu'au moins un deuxième élément de liaison (222), notamment au moins partiellement en forme de douille et/ou au moins partiellement en forme de coque et/ou au moins partiellement cylindrique circulaire et/ou métallique et/ou servant de transmetteur de force et/ou de construction identique au deuxième élément de liaison (212) de la première unité de transducteur
- le premier élément de liaison (221) de la deuxième unité de transmetteur (22) étant relié mécaniquement à un élément de déplacement de la deuxième unité de transducteur (22)
- et le deuxième élément de liaison (222) de la deuxième unité de transducteur (22) étant relié mécaniquement à l'élément de déplacement (220) de la deuxième unité de transducteur (22), à distance du premier élément de liaison (221) de la deuxième unité de transducteur (22) et dans la direction d'un axe longitudinal imaginaire dudit élément de déplacement (220).

15. Transducteur selon la revendication précédente,
- pour lequel la deuxième unité de transducteur est insérée dans le tube et reliée mécaniquement à celui-ci, de telle sorte
-- que son élément de déplacement (220) est placé à distance de l'élément de déplacement (210) de la première unité de transducteur (21) à l'intérieur du canal intérieur dudit tube
-- et que chacun de ses premier et deuxième éléments de liaison (221, 222) est placé au moins partiellement à l'intérieur de la paroi du même tube et y est relié mécaniquement, de telle sorte que le deuxième élément de liaison (222) de la deuxième unité de transducteur (22) est relié mécaniquement à la paroi du tube dans la direction d'un axe longitudinal imaginaire du tube, à distance du premier élément de liaison (221) de la deuxième unité de transducteur (22) et/ou est disposé en aval du premier élément de liaison de la deuxième unité de transducteur (22), dans le sens de l'écoulement,
- et la deuxième unité de transducteur (22) est conçue pour être mise en contact avec le fluide présent dans le canal intérieur du tube et pour être mise en vibration pendant ce temps, de telle sorte que chacun de ses premier et deuxième éléments de liaison (221, 222) ainsi que son élément de déplacement (220) sont chacun au moins partiellement déformés élastiquement, notamment de telle sorte que chacun des premier et deuxième éléments de liaison de la deuxième unité de transducteur (22) est au moins partiellement vrillé autour d'un axe principal d'inertie imaginaire respectif et/ou que l'élément de déplacement de la deuxième unité de transducteur (22) est au moins partiellement courbé à partir d'une position de repos statique dans la direction d'un diamètre du tube qui est perpendiculaire à un axe principal d'inertie imaginaire du premier élément de liaison de la deuxième unité de transducteur (22) et/ou à un axe principal d'inertie imaginaire du deuxième élément de liaison de la deuxième unité de transducteur (22) ; et/ou
- la deuxième unité de transducteur (22) étant insérée dans le tube (10) et reliée mécaniquement à celui-ci, de telle sorte que ladite unité de transducteur est disposée au moins partiellement parallèlement à la première unité de transducteur (21) ; et/ou
- la deuxième unité de transducteur (22) présentant au moins une fréquence de résonance, notamment la plus basse, qui est égale à une fréquence de résonance, notamment la plus basse, de la première unité de transducteur.

16. Transducteur selon la revendication précédente,
- pour lequel, dans le mode utile, le premier élément de liaison (112) de la deuxième unité de transducteur exécute au moins partiellement des vibrations de torsion - notamment en opposition de phase et/ou en sens opposé par rapport aux vibrations de torsion du premier élément de liaison de la première unité de transducteur - autour d'un premier axe de vibration de torsion imaginaire de la deuxième unité de transducteur, lequel axe est notamment parallèle à un axe d'inertie principal imaginaire correspondant, ou coïncidant avec celui-ci, et le deuxième élément de liaison (112) de la deuxième unité de transducteur exécute au moins partiellement des vibrations de torsion - en opposition de phase et/ou en sens opposé par rapport aux vibrations de torsion du premier élément de liaison de la deuxième unité de transducteur, notamment également en opposition de phase et/ou en sens opposé par rapport aux vibrations de torsion du deuxième élément de liaison de la première unité de transducteur - autour d'un deuxième axe de vibration de torsion imaginaire de la deuxième unité de transducteur, lequel axe est notamment parallèle à un axe d'inertie principal imaginaire correspondant, ou coïncidant avec celui-ci, et/ou parallèle au premier axe de vibration de torsion imaginaire,
et transducteur pour lequel, dans le mode utile, l'élément de déplacement de la deuxième unité de transducteur exécute également au moins partiellement des vibrations de flexion
- notamment couplées avec les vibrations de torsion du premier élément de liaison de la deuxième unité de transducteur et/ou du deuxième élément de liaison de la deuxième unité de transducteur et/ou de fréquence identique à celles-ci et/ou en sens opposé aux vibrations de flexion de l'élément de déplacement de la première unité de transducteur dans le mode utile - autour d'un axe de vibration de flexion imaginaire de la deuxième unité de transducteur, notamment un axe qui est parallèle à un axe principal d'inertie imaginaire correspondant et/ou qui s'étend dans le sens de l'écoulement, notamment de telle sorte qu'à la fois les vibrations de flexion de l'élément de déplacement (112) de la première unité de transducteur en mode utile et les vibrations de flexion de l'élément de déplacement (112) de la deuxième unité de transducteur en mode utile sont appropriées pour induire dans le fluide s'écoulant dans le tube des forces de Coriolis qui dépendent du débit massique, m, dudit fluide et qui provoquent des vibrations de Coriolis ; et/ou
- pour lequel le dispositif capteur (40) est conçu pour générer un premier signal de vibration (s1), notamment électrique, représentant les vibrations mécaniques de la première et de la deuxième unité de transducteur, notamment les vibrations de torsion du premier élément de liaison de la première unité de transducteur et les vibrations de torsion du premier élément de liaison de la deuxième unité de transducteur, pour détecter notamment les vibrations de torsion du premier élément de liaison de la première unité de transducteur, lesquelles vibrations de torsion présentent une fréquence de vibration utile, et les vibrations de torsion du premier élément de liaison de la deuxième unité de transducteur, lesquelles vibrations de torsion présentent une fréquence de vibration utile, et pour générer le premier signal de vibration (s1) avec une composante de mesure représentant au moins les vibrations de torsion des premiers éléments de liaison, notamment une composante de signal présentant une fréquence de signal correspondant à la fréquence de vibration utile, et/ou à générer un deuxième signal de vibration (s2), notamment électrique, représentant les vibrations mécaniques de la première et de la deuxième unité de transducteur, notamment les vibrations de torsion du deuxième élément de liaison de la première unité de transducteur et les vibrations de torsion du deuxième élément de liaison de la deuxième unité de transducteur.

17. Transducteur selon l'une des revendications précédentes,
- pour lequel le dispositif capteur (40) est conçu pour mesurer au moins les vibrations de torsion du premier élément de liaison de la première unité de transducteur, lesquelles vibrations présentent la fréquence de vibration utile, et pour générer le premier signal de vibration (s1) avec une composante de mesure représentant au moins les mêmes vibrations de torsion du premier élément de liaison, à savoir une composante de signal présentant une fréquence de signal correspondant à la fréquence de vibration utile ;
- et pour lequel le dispositif capteur (40) est conçu pour mesurer au moins les vibrations de torsion du deuxième élément de liaison de la première unité de transducteur, lesquelles vibrations présentent la fréquence de vibration utile, et pour générer le deuxième signal de vibration (s2) avec une composante de mesure représentant au moins les mêmes vibrations de torsion du deuxième élément de liaison, à savoir une composante de signal présentant une fréquence de signal correspondant à la fréquence de vibration utile, de telle sorte qu'il existe une différence de phase (Δϕ) dépendant du débit massique, m, du fluide entre la composante de mesure du premier signal de vibration (s1) et la composante de mesure du deuxième signal de vibration (s2).

18. Système de mesure vibronique destiné à la mesure et/ou à la surveillance d'au moins un paramètre d'écoulement, notamment variable dans le temps, notamment un débit massique, un débit volumique et/ou une vitesse d'écoulement, et/ou destiné à la mesure et/ou à la surveillance d'au moins un paramètre propre au produit, notamment variable dans le temps, notamment une densité et/ou une viscosité, d'un produit en écoulement, notamment un gaz, un liquide ou une dispersion, lequel système de mesure comprend :
- un transducteur (MW) selon l'une des revendications précédentes ;
- ainsi qu'une électronique de mesure et d'exploitation (ME) couplée électriquement aussi bien à son dispositif excitateur (30) qu'à son dispositif capteur (40), notamment au moyen de lignes de liaison électriques, et formée notamment par au moins un microprocesseur et/ou par au moins un processeur de signaux numériques.

19. Système de mesure vibronique selon la revendication précédente,
- pour lequel l'électronique de mesure et d'exploitation est conçue pour recevoir et/ou traiter le premier signal de vibration (s1), notamment pour déterminer une valeur de paramètre propre au produit représentant l'au moins un paramètre propre au produit sur la base du premier signal de vibration (s1), notamment pour déterminer une valeur mesurée de densité représentant une densité du produit sur la base d'une fréquence de signal au moins du premier signal de vibration (s1, s2), laquelle fréquence correspondant à la fréquence de vibration utile, notamment pour comparer la même valeur mesurée de densité avec au moins une valeur seuil de densité prédéfinie ; et/ou
- pour lequel l'électronique de mesure et d'exploitation est conçue pour recevoir et/ou traiter à la fois le premier signal de vibration (s1) et le deuxième signal de vibration (s2), notamment pour déterminer, sur la base du premier signal de vibration (s1) et/ou du deuxième signal de vibration (s2), une valeur de paramètre d'écoulement représentant l'au moins un paramètre d'écoulement, notamment une valeur mesurée de débit massique représentant un débit massique, m, du produit, et/ou une valeur de paramètre propre au produit représentant l'au moins un paramètre propre au produit, notamment une valeur mesurée de densité représentant une densité du produit et/ou une valeur mesurée de viscosité représentant une viscosité du produit ; et/ou
- pour lequel l'électronique de mesure et d'exploitation est conçue pour alimenter le dispositif excitateur (30) au moyen d'au moins un signal d'excitation électrique (e₁), notamment avec une fréquence de signal correspondant à une fréquence de résonance de la première unité de transducteur (21), notamment pour varier au moins une fréquence de signal du signal d'excitation (e₁) et/ou pour générer le signal d'excitation (e₁) avec une pluralité de fréquences de signal différentes et/ou de telle sorte que le signal d'excitation (e₁) présente une fréquence de signal correspondant à une fréquence de résonance de la première unité de transducteur (21) ; et/ou
- pour lequel l'électronique de mesure et d'exploitation est conçue pour déterminer une valeur mesurée de viscosité représentant une viscosité du fluide sur la base du signal d'excitation (e₁), notamment sur la base du signal d'excitation (e₁) et de l'au moins un signal de vibration (s1), notamment également pour comparer la même valeur mesurée de viscosité avec au moins une valeur seuil de viscosité prédéfinie.

20. Utilisation d'un transducteur selon l'une des revendications 1 à 17 ou d'un système de mesure selon l'une des revendications 18 à 19, destiné à la mesure et/ou à la surveillance d'un produit s'écoulant dans une conduite, notamment d'un diamètre nominal supérieur à 100 mm, notamment d'une température supérieure à 100 °C et/ou d'une pression statique supérieure à 100 bar, notamment d'un gaz s'écoulant avec un débit massique supérieur à 500 t/h.
